# EUROPEAN PATENT APPLICATION

(11) **EP 4 571 415 A1**
(43) Date of publication of application: **18.06.2025**
(21) Application number: 23852763.4
(22) Date of filing: 12.07.2023
(51) Int. Cl.: G03B 5/04, G03B 3/00, G03B 17/12, G03B 30/00

(54) **CAMERA ACTUATOR AND CAMERA MODULE INCLUDING SAME**

(30) Priority: 12.08.2022 KR 20220101286; 12.08.2022 KR 20220101287
(71) Applicant: LG INNOTEK CO. LTD, Gangseo-gu Seoul 07796 (KR)
(72) Inventor: PARK, Young Bin, Seoul 07796 (KR); LEE, Kap Jin, Seoul 07796 (KR); LEE, Seung Hak, Seoul 07796 (KR); JANG, Hong Eun, Seoul 07796 (KR)
(74) Representative: M. Zardi & Co S.A.
(86) International application number: PCT/KR2023/009924
(87) International publication number: WO 2024/034881

(57) **Abstract**

Embodiments of the present disclosure disclose a camera actuator including a first sub-housing including a fixed lens, a second sub-housing disposed along an optical axis direction with the first sub-housing, a lens assembly disposed in the second sub-housing to move in the optical axis direction, a ball disposed between the lens assembly and the second sub-housing, a driving unit configured to move the lens assembly in the optical axis direction, and a coupling member disposed between the first sub-housing and the second sub-housing.

## Description

### [Technical Field]

The present disclosure relates to a camera actuator and a camera module including the same.

### [Background Art]

A camera is a device for taking pictures or videos of subjects and is mounted on a mobile device, a drone, a vehicle, etc. A camera module may have an image stabilization (IS) function of correcting or preventing the image shake caused by the movement of a user, an auto focusing (AF) function of aligning a focal length of a lens by automatically adjusting an interval between an image sensor and the lens, and a zooming function of capturing a remote subject by increasing or decreasing the magnification of the remote subject through a zoom lens in order to improve the quality of the image.

However, there is a problem in that optical performance is degraded due to decentering and tilting in a miniaturized camera module. Furthermore, there is also an increasing demand on protecting circuit elements from an inflow of foreign substances, that is, an improvement in reliability.

### [Disclosure]

### [Technical Problem]

The present disclosure is directed to providing a camera actuator and a camera module which have improved optical performance by coupling one housing including a lens assembly moving along an optical axis with another housing having a fixed lens.

In addition, the present disclosure is directed to providing a camera actuator and a camera module which have improved device reliability in active alignment.

In addition, the present disclosure is directed to providing a camera actuator and a camera module which have improved reliability by protecting circuit elements or the like from an inflow of foreign substances.

In addition, the present disclosure is directed to providing a camera actuator and a camera module which minimize decentering and tilting by adding a protrusion and the like to a housing to further improve flatness of a guide groove.

The present disclosure is directed to providing a camera actuator applicable to ultra-slim, ultra-small, and high-resolution cameras.

The object of embodiments is not limited thereto and may also include objects or effects that may be identified from the configurations or embodiments to be described below.

### [Technical Solution]

A camera actuator according to an embodiment of the present disclosure includes a first sub-housing including a fixed lens, a second sub-housing disposed along an optical axis direction with the first sub-housing, a lens assembly disposed in the second sub-housing to move in the optical axis direction, a ball disposed between the lens assembly and the second sub-housing, a driving unit configured to move the lens assembly in the optical axis direction, and a coupling member disposed between the first sub-housing and the second sub-housing.

The first sub-housing may be disposed to be spaced a predetermined distance from the second sub-housing.

A first separation distance between the first sub-housing and the second sub-housing in one region of the first sub-housing may differ from a second separation distance between the first sub-housing and the second sub-housing in the other region of the first sub-housing.

One surface of the first sub-housing may not be perpendicular to the optical axis.

A central axis of the first sub-housing may not be parallel to the optical axis.

The first sub-housing may include a holder portion and a wing portion extending outward from the holder portion.

The holder portion may include a first holder portion above the wing portion and a second holder portion under the wing portion.

A length of the first holder portion in the optical axis direction may be smaller than a length of the second holder portion in the optical axis direction.

The camera actuator may further include a prevention member at least partially overlapping the second holder portion and the second sub-housing.

The wing portion may include one surface and the other surface disposed at outer sides thereof, and the one surface and the other surface may be sequentially disposed in the optical axis direction.

The other surface may include a stopper support portion extending in the optical axis direction.

The stopper support portion may include a first stopper support portion and a second stopper support portion, and the first stopper support portion may have a different length from the second stopper support portion in the optical axis direction.

The coupling member may be disposed at an outer side of the stopper support portion.

Portions of the coupling member that are maximally separated in one direction may have different thicknesses.

The other surface may face the second sub-housing.

A camera actuator according to an embodiment of the present disclosure includes a housing, a lens assembly disposed in the housing and configured to move in an optical axis direction, a ball disposed between the lens assembly and the housing, and a driving unit configured to move the lens assembly in the optical axis direction, wherein the housing includes guide grooves positioned on an inner surface thereof and in which the ball is disposed, and outer grooves positioned on an outer surface thereof and corresponding to the guide grooves.

The guide groove may overlap the outer groove in a horizontal direction, and the horizontal direction may be a direction perpendicular to the optical axis direction.

The housing may include a side portion hole, and the guide groove and the outer groove may be disposed above or under the side portion hole.

The guide groove may include a first guide groove and a second guide groove facing each other in the optical axis direction, the side portion hole may include a first side portion hole and a second side portion hole facing each other in the optical axis direction, and the outer groove may include a first outer groove and a second outer groove facing each other in the optical axis direction.

The first guide groove may include a first-first guide groove disposed above the first side portion hole and a first-second guide groove disposed under the first side portion hole, and the first outer groove may include a first-first outer groove disposed above the first side portion hole and a first-second outer groove disposed under the first side portion hole.

The first-first guide groove may overlap the first-first outer groove in the horizontal direction, and the first-second guide groove may overlap the first-second outer groove in the horizontal direction.

The second guide groove may include a second-first guide groove disposed above the second side portion hole and a second-second guide groove disposed under the second side portion hole.

The first-first guide groove may correspond to a shape of the second-second guide groove, and the first-second guide groove may correspond to a shape of the second-first guide groove.

A part of the side portion hole may overlap the outer groove in the horizontal direction.

The side portion hole may not overlap the guide groove in the horizontal direction.

The outer groove may have an inclined surface toward the side portion hole.

Lengths of the outer grooves in a vertical direction may be the same or different in the optical axis direction.

The housing may include a housing protrusion protruding inward in the optical axis direction.

The guide groove may include a first guide groove and a second guide groove facing each other in the optical axis direction, and the housing protrusion may be positioned between the first guide groove and the second guide groove.

The housing may include a gate groove disposed on an outer surface of the side portion facing in the optical axis direction.

The gate groove may overlap the outer groove in the optical axis direction.

The gate groove may be disposed to be misaligned with the guide groove in the optical axis direction.

The gate groove may be disposed to be spaced apart from the guide groove in the horizontal direction.

The gate groove may be positioned at an outer side of the guide groove.

The first outer groove and the second outer groove may be symmetrically disposed with respect to an optical axis.

### [Advantageous Effects]

According to the present disclosure, it is possible to implement a camera actuator and a camera module which have improved optical performance by coupling one housing including a lens assembly moving along an optical axis with another housing having a fixed lens.

In addition, according to the present disclosure, it is possible to implement a camera actuator and a camera module which have improved device reliability in active alignment.

In addition, according to the present disclosure, it is possible to implement a camera actuator and a camera module which have improved reliability by protecting circuit elements or the like from an inflow of foreign substances.

In addition, according to the present disclosure, it is possible to implement a camera actuator and a camera module which minimize decentering and tilting by adding a protrusion or the like to a housing to further improve flatness of a guide groove.

According to the present disclosure, it is possible to implement a camera actuator applicable to ultra-slim, ultra-small, and high-resolution cameras.

The various beneficial advantages and effects of the present disclosure are not limited to the above-described contents and will be more readily understood in a process of describing specific embodiments of the present disclosure.

### [Description of Drawings]

FIG. 1 is a perspective view of a camera module according to an embodiment;
FIG. 2 is an exploded perspective view of the camera module according to the embodiment;
FIG. 3 is a view of the camera module along line A-A' in FIG. 1;
FIG. 4 is a perspective view of a first camera actuator according to an embodiment;
FIG. 5 is an exploded perspective view of the first camera actuator according to the embodiment;
FIG. 6A is a perspective view of a first housing of the first camera actuator according to the embodiment;
FIG. 6B is a perspective view of the first housing of the first camera actuator in a different direction from FIG. 6A;
FIG. 6C is a front view of the first housing of the first camera actuator according to the embodiment;
FIG. 6D is a rear view of the first housing of the first camera actuator according to the embodiment;
FIG. 6E is a top view of the first housing of the first camera actuator according to the embodiment;
FIG. 7 is a perspective view of an optical member of the first camera actuator according to the embodiment;
FIG. 8A is a perspective view of a holder of the first camera actuator according to the embodiment;
FIG. 8B is a bottom view of the holder of the first camera actuator according to the embodiment;
FIG. 8C is a front view of the holder of the first camera actuator according to the embodiment;
FIG. 8D is a rear view of a second member of the first camera actuator according to the embodiment;
FIG. 8E is a bottom view of the second member of the first camera actuator according to the embodiment;
FIG. 9A is a perspective view of a tilting guide unit of the first camera actuator according to the embodiment;
FIG. 9B is a perspective view of the tilting guide unit of the first camera actuator in a different direction from FIG. 9A;
FIG. 9C is a view of the tilting guide unit of the first camera actuator along line F-F' in FIG. 9A;
FIG. 10 is a view illustrating a first driving unit of the first camera actuator according to the embodiment;
FIG. 11A is a perspective view of the first camera actuator according to the embodiment;
FIG. 11B is a view of the first camera actuator along line P-P' in FIG. 11A;
FIG. 11C is a view of the first camera actuator along line Q-Q' in FIG. 11A;
FIG. 12A is a perspective view of the first camera actuator according to the embodiment;
FIG. 12B is a view of the first camera actuator along line S-S' in FIG. 12A;
FIG. 12C is an exemplary view showing movement of the first camera actuator illustrated in FIG. 12B;
FIG. 13A is a view of the first camera actuator along line R-R' in FIG. 12A;
FIG. 13B is an exemplary view of movement of the first camera actuator illustrated in FIG. 13A;
FIG. 14 is a perspective view of a second camera actuator according to an embodiment;
FIG. 15 is an exploded perspective view of the second camera actuator according to the embodiment;
FIG. 16 is a view of the second camera actuator along line D-D' in FIG. 14;
FIG. 17A is a perspective view of a second housing according to the embodiment;
FIG. 17B is a top view of a second-first housing according to the embodiment;
FIG. 17C is a perspective view of the second-first housing according to the embodiment;
FIG. 17D is one side view illustrating the second-first housing according to the embodiment;
FIG. 17E is another side view illustrating the second-first housing according to the embodiment;
FIG. 17F is a bottom view of the second-first housing according to the embodiment;
FIGS. 17G, 17H, and 17I are perspective views of the second housing in the second camera actuator according to the embodiment;
FIG. 17J is a view of the second housing along line I-I' in FIG. 17I;
FIG. 17K is a view of the second housing along line J-J' in FIG. 17I;
FIG. 17L is one side view illustrating the second housing in the second camera actuator according to the embodiment;
FIG. 17M is another side view illustrating the second housing in the second camera actuator according to the embodiment;
FIG. 17N is a view of the second housing along line K-K' in FIG. 17G;
FIG. 17O is a view of the second housing along line L-L' in FIG. 17G;
FIG. 17P is a cross-sectional view of the second camera actuator according to the embodiment;
FIG. 17Q is a view for describing assembling of the second housing according to the embodiment;
FIG. 17R is a top view of a second-second housing and a coupling member according to the embodiment;
FIG. 17S is a view illustrating the second-first housing, the second-second housing, and the coupling member according to the embodiment;
FIGS. 17T, 17U, 17V, 17W, and 17X are side views illustrating various examples of the second-second housing and the coupling member according to the embodiment;
FIGS. 18 and 19 are views for describing each driving operation of a lens assembly according to an embodiment;
FIG. 20 is a view for describing driving of the second camera actuator according to the embodiment;
FIG. 21 is a schematic diagram illustrating a circuit board according to an embodiment;
FIG. 22 is a perspective view of a first lens assembly, a first bonding member, a second bonding member, and a second lens assembly according to an embodiment;
FIG. 23 is a perspective view of a mobile terminal to which a camera module according to an embodiment is applied; and
FIG. 24 is a perspective view of a vehicle to which the camera module according to the embodiment is applied.

### [Modes of the Invention]

Since the present disclosure may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present disclosure.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present disclosure. The term "and/or" includes a combination of a plurality of related listed items or any of the plurality of related listed items.

When a certain component is described as being "connected" or "coupled" to another component, it is understood that it may be directly connected or coupled to another component or other components may also be disposed therebetween. On the other hand, when a certain component is described as being "directly connected" or "directly coupled" to another component, it should be understood that other components are not disposed therebetween.

The terms used in the application are only used to describe specific embodiments and are not intended to limit the present disclosure. The singular expression includes the plural expression unless the context clearly dictates otherwise. In the application, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those of ordinary skill in the art to which the present disclosure pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are given the same reference numerals regardless of the reference numerals, and overlapping descriptions thereof will be omitted.

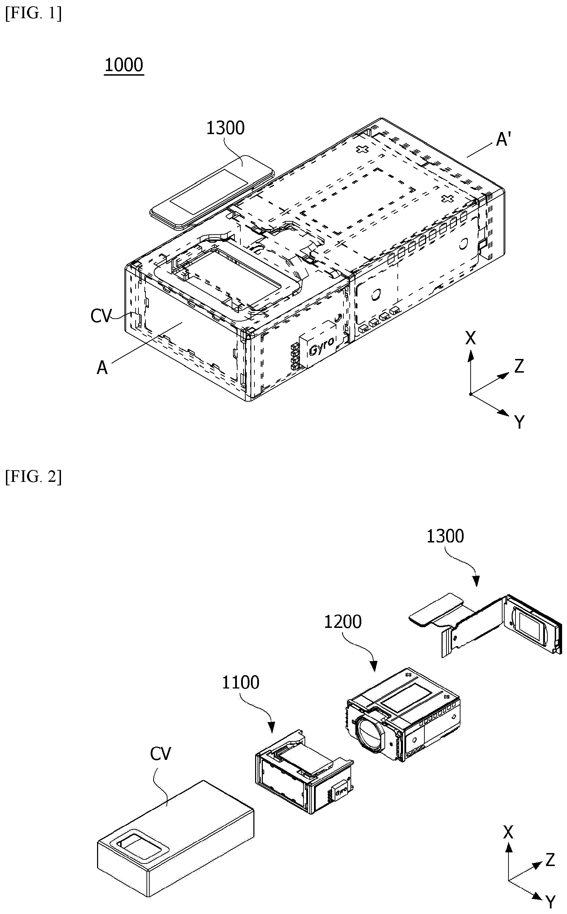

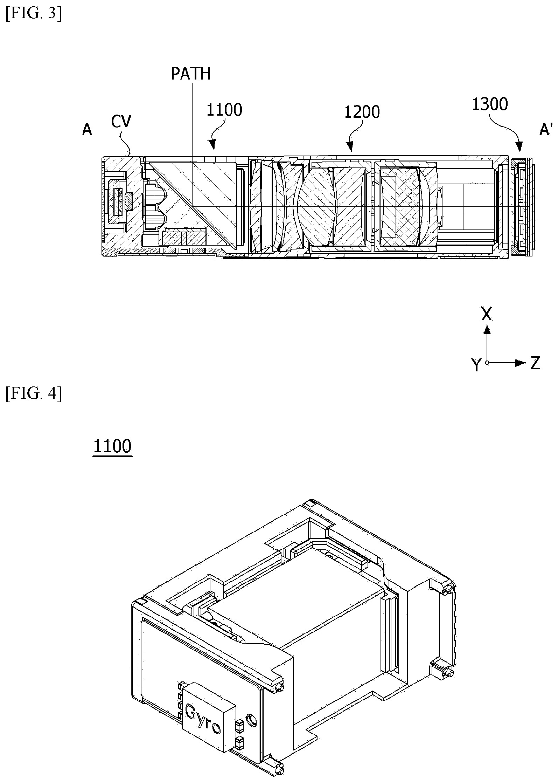

FIG. 1 is a perspective view of a camera module according to an embodiment, FIG. 2 is an exploded perspective view of the camera module according to the embodiment, and FIG. 3 is a cross-sectional view of the camera module along line A-A' in FIG. 1.

Hereinafter, views along lines correspond to views along the corresponding cut surface.

Referring to FIGS. 1 and 2, a camera module 1000 according to the embodiment may include a cover CV, a first camera actuator 1100, a second camera actuator 1200, and a circuit board 1300. Here, the first camera actuator 1100 may be used interchangeably with "first actuator," and the second camera actuator 1200 may be used interchangeably with "second actuator."

The cover CV may cover the first camera actuator 1100 and the second camera actuator 1200. It is possible to increase a coupling strength between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator. For example, the first camera actuator 1100 may move an optical member in a direction perpendicular to the optical axis (axis of incident light).

The first camera actuator 1100 may include a fixed focal length lens disposed in a predetermined barrel (not illustrated). The fixed focal length lens may also be referred to as "single focal length lens" or "single lens."

The first camera actuator 1100 may change an optical path. In an embodiment, the first camera actuator 1100 may vertically change the optical path through an internal optical member (e.g., a prism or a mirror). For example, the optical member may change light from a first direction (X-axis direction) to a third direction (Z-axis direction). Alternatively, the optical member may change the light from a first axis to a second axis. With this configuration, even when a thickness of a mobile terminal is decreased, a lens with a focal length that is greater than the thickness of the mobile terminal is disposed in the mobile terminal through a change in the optical path so that auto focusing (AF), zooming, and OIS functions may be performed.

However, the present disclosure is not limited thereto, and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. In addition, mutual coupling may be performed by various methods.

In addition, the second camera actuator 1200 may be a zoom actuator or an AF actuator. For example, the second camera actuator 1200 may support one or more lenses to perform an AF function or a zooming function by moving the lenses according to a predetermined control signal of a controller.

In addition, one lens or a plurality of lens may independently or separately move in the optical axis direction.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

A camera module according to the embodiment may include one or more camera modules. For example, the plurality of camera modules may include a first camera module and a second camera module.

In addition, the first camera module may include one or more actuators. For example, the first camera module may include the first camera actuator 1100 and the second camera actuator 1200.

In addition, the second camera module may include an actuator (not illustrated) disposed in a predetermined housing (not illustrated) and capable of driving a lens unit. The actuator may be a voice coil motor, a micro actuator, a silicon actuator, and the like and applied in various methods such as an electrostatic method, a thermal method, a bimorph method, and an electrostatic force method, but the present disclosure is not limited thereto. In addition, in the specification, a camera actuator may be referred to as an "actuator" or the like. In addition, a camera module composed of a plurality of camera modules may be mounted in various electronic devices such as mobile terminals. Furthermore, the actuator may be a device for moving or tilting the lens or the optical member. However, hereinafter, the actuator will be described as including the lens or the optical member. Furthermore, the actuator may be referred to as "lens transfer device," "lens moving device," "optical member transfer device," "optical member moving device," etc.

Referring to FIG. 3, the camera module according to the embodiment may include the first camera actuator 1100 for performing the OIS function and the second camera actuator 1200 for performing the zooming function and the AF function.

Light may enter the camera module or the first camera actuator through an opening region positioned in an upper surface of the first camera actuator 1100. That is, the light may enter the first camera actuator 1100 in an optical axis direction (e.g., an X-axis direction, based on incident light), and the optical path may be changed (e.g., changed from the X-axis direction to a Z-axis direction) through the optical member. In addition, the light may pass through the second camera actuator 1200 and may be incident on an image sensor IS positioned at one end of the second camera actuator 1200 (PATH). In this specification, the Z-axis direction or the third direction will be described as the optical axis direction as follows.

In the specification, the lower surface refers to one surface in the first direction. In addition, the first direction is the X-axis direction in the drawings and may be used interchangeably with a second axis direction or the like. A second direction is a Y-axis direction in the drawings and may be used interchangeably with a first axis direction or the like. The second direction is a direction perpendicular to the first direction. In addition, a third direction is the Z-axis direction in the drawings and may be used interchangeably with a third axis direction or the like. In addition, the third direction is perpendicular to both the first direction and the second direction. Here, the third direction (Z-axis direction) corresponds to the optical axis direction, and the first direction (X-axis direction) and the second direction (Y-axis direction) are directions perpendicular to the optical axis. In addition, hereinafter, the optical axis direction is the third direction (Z-axis direction) in the description of the second camera actuator 1200 will be described below based on this.

In addition, in this specification, an inner side may be a direction from the cover (CV) toward the first camera actuators, and an outer side may be an opposite direction of the inner side. That is, the first camera actuator and the second camera actuator may be positioned at an inner side of the cover CV, and the cover CV may be positioned at an outer side of the first camera actuator or the second camera actuator.

In addition, with this configuration, the camera module according to the embodiment may resolve the spatial limitations of the first camera actuator and the second camera actuator by changing the optical path. That is, the camera module according to the embodiment may extend the optical path while minimizing the thickness of the camera module according to the change in the optical path. Furthermore, it should be understood that the second camera actuator may provide a high magnification by controlling a focus or the like in the extended optical path.

In addition, the camera module according to the embodiment may implement an OIS by controlling the optical path through the first camera actuator, thereby minimizing the occurrence of a decentering or tilting phenomenon and providing the best optical characteristics.

Furthermore, the second camera actuator 1200 may include an optical system and a lens driving unit. For example, at least one of a first lens assembly, a second lens assembly, and a third lens assembly may be disposed in the second camera actuator 1200.

In addition, the second camera actuator 1200 may include a coil and a magnet to perform a high-magnification zooming function and the auto focusing function.

For example, the first lens assembly and the second lens assembly may be moving lenses that each moves through the coil, the magnet, and a guide pin, and the third lens assembly may be a fixed lens, but the present disclosure is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image is greatly changed, and thus the first lens assembly, which is the variator, may play an important role in a focal length or magnification change of the optical system. Meanwhile, an imaging point of an image formed by the first lens assembly, which is the variator, may be slightly different depending on a position of the first lens assembly. Therefore, the second lens assembly may perform a position compensation function for the image formed by the variator. For example, the second lens assembly may perform a function of a compensator for accurately forming the imaging point of the image formed by the first lens assembly at an actual position of the image sensor which is the variator. For example, the first lens assembly and the second lens assembly may be driven by an electromagnetic force generated by the interaction between the coil and the magnet. The above description may be applied to a lens assembly to be described below. In addition, the first lens assembly to the third lens assembly may move in the optical axis direction, that is, in the third direction. In addition, the first lens assembly to the third lens assembly may move in the third direction independently or dependently. In the present disclosure, the first lens assembly and the second lens assembly may move in the optical axis direction. In addition, the third lens assembly may be positioned at a front end of the first lens assembly or at a rear end of the second lens assembly. In addition, the third lens assembly may not move in the optical axis direction. That is, the third lens assembly may be a fixed unit. In addition, the first and second lens assemblies may be moving units.

Meanwhile, when the OIS actuator and the AF/zoom actuator are disposed according to the embodiment of the present disclosure, the magnetic field interference with an AF/zoom magnet can be prevented when an OIS is driven. Since a first driving magnet of the first camera actuator 1100 is disposed separately from the second camera actuator 1200, the magnetic field interference between the first camera actuator 1100 and the second camera actuator 1200 can be prevented. In the specification, an OIS may be used interchangeably with terms such as hand shaking correction, optical image stabilization, optical image correction, shake correction, etc.

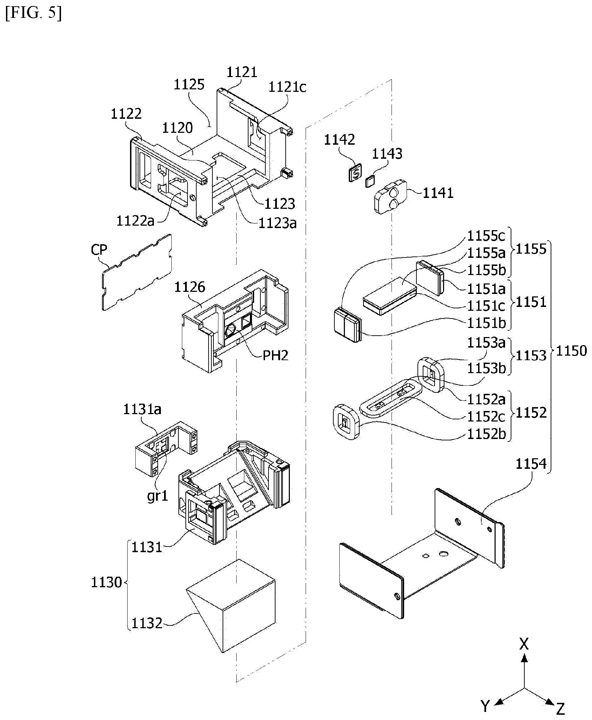

FIG. 4 is a perspective view of the first camera actuator according to the embodiment, and FIG. 5 is an exploded perspective view of the first camera actuator according to the embodiment.

Referring to FIGS. 4 and 5, the first camera actuator 1100 according to the embodiment may include a first housing 1120, a mover 1130, a rotating unit 1140, a first driving unit 1150, a first member 1126, and a second member 1131a. Furthermore, the first camera actuator 1100 may further include a plate CP.

The mover 1130 may include a holder 1131 and an optical member 1132 seated on the holder 1131. In addition, the rotating unit 1140 may include a tilting guide part 1141 and a second magnetic part 1142 and a first magnetic part 1143 having the same polarity or different polarities to press the tilting guide part 1141. For example, the first magnetic part 1143 and the second magnetic part 1142 may have facing surfaces with the same polarity. In addition, the first driving unit 1150 includes a driving magnet 1151, a driving coil 1152, a Hall sensor part 1153, a first board part 1154, and a yoke part 1155.

First, the first camera actuator 1100 may include a shield can (not illustrated). The shield can (not illustrated) may be positioned at an outermost side of the first camera actuator 1100 to surround the rotating unit 1140 and the first driving unit 1150, which will be described below.

The shield can (not illustrated) can block or reduce electromagnetic waves generated from the outside. That is, the shield can (not illustrated) can reduce the occurrence of malfunction in the rotating unit 1140 or the first driving unit 1150.

The first housing 1120 may be positioned inside the shield can (not illustrated). When there is no shield can, the first housing 1120 may be positioned at the outermost side of the first camera actuator.

In addition, the first housing 1120 may be positioned at an inner side of the first board part 1154 to be described below. The first housing 1120 may be fastened by being fitted into or engaged with the shield can (not illustrated).

The first housing 1120 may include a first housing side portion 1121, a second housing side portion 1122, a third housing side portion 1123, and a housing wall portion 1124. A detailed description thereof will be given below.

The first member 1126 may be disposed in the first housing 1120. The second member 1131a may pass through some regions of the first member 1126. The first member 1126 may be disposed in a housing. The first member 1126 may be a structure integrally formed with or separated from the first housing 1120.

Furthermore, the first camera actuator 1100 may further include the plate CP disposed at an outer side of the first member 1126. The plate CP can prevent foreign substances from flowing into the second member 1131a passing through the first member 1126 or the like. Furthermore, the plate CP may be formed of a magnetic material. Therefore, since the plate CP has magnetism, a magnetic force with respect to the first magnetic part 1143 and the second magnetic part 1142 having polarities for the pressing may not be generated. That is, it is possible to reduce generation of magnetic forces that interfere with the driving (pressing) of the first magnetic part 1143 and the second magnetic part 1142.

When the plate CP is the magnetic part, the plate CP may be referred to as a magnetic member, a magnetic part, a cover plate, a metal member, a metal plate, etc.

The mover 1130 may include the holder 1131 and the optical member 1132 seated on the holder 1131.

The holder 1131 may be seated on an accommodating part 1125 of the first housing 1120. The holder 1131 may include a first holder outer surface to a fourth holder outer surface respectively corresponding to the first housing side portion 1121, the second housing side portion 1122, the third housing side portion 1123, and the first member 1126. For example, the first holder outer surface to the fourth holder outer surface may respectively correspond to or face inner surfaces of the first housing side portion 1121, the second housing side portion 1122, the third housing side portion 1123, and the first member 1126.

In addition, the holder 1131 may include the second member 1131a disposed in a fourth seating groove. The second member 1131a may be coupled to the holder 1131 by passing through the first member 1126. The second member 1131a and the holder 1131 may be coupled by any of various bonding members or coupling members. A detailed description thereof will be given below.

The optical member 1132 may be seated on the holder 1131. To this end, the holder 1131 may have a seating surface, and the seating surface may be formed by an accommodating groove. In an embodiment, the optical member 1132 may be formed of a mirror or a prism. Hereinafter, the optical member 1132 is illustrated as the prism, but may also be formed of a plurality of lenses. Alternatively, the optical member 1132 may be composed of the plurality of lenses and the prism or the mirror. In addition, the optical member 1132 may include a reflector disposed therein. However, the present disclosure is not limited thereto.

In addition, the optical member 1132 may reflect light reflected from the outside (e.g., an object) into the camera module. That is, the optical member 1132 can resolve spatial limits of the first camera actuator and the second camera actuator by changing the path of the reflected light. Therefore, it should be understood that the camera module may provide a high range of magnification by extending the optical path while a thickness thereof is minimized.

Additionally, the second member 1131a may be coupled to the holder 1131. The second member 1131a may be disposed at an outer side of the holder 1131 and an inner side of the housing. In addition, the second member 1131a may be seated in an additional groove positioned in a region other than the fourth seating groove on the fourth holder outer surface of the holder 1131. Therefore, the second member 1131a may be coupled to the holder 1131, and at least a part of the first member 1126 may be positioned between the second member 1131a and the holder 1131. For example, the at least a part of the first member 1126 may be disposed in a space formed between the second member 1131a and the holder 1131. In addition, as described above, the second member 1131a may pass through holes (a first through-hole and a second through-hole which will be described below) formed in the first member 1126.

In addition, the second member 1131a may have a structure separated from the holder 1131. With this configuration, an assembly of the first camera actuator may be easily made as will be described below. Alternatively, the second member 1131a may be integrally formed with the holder 1131, but will be described below as the separated structure.

The rotating unit 1140 includes the tilting guide part 1141 and the second magnetic part 1142 and the first magnetic part 1143 having surfaces having the same polarity to press the tilting guide part 1141 facing each other.

The tilting guide part 1141 may be coupled to the mover 1130 and the first housing 1120. Specifically, the tilting guide part 1141 may be disposed between the holder 1131 and the first member 1126. Therefore, the tilting guide part 1141 may be coupled to the mover 1130 of the holder 1131 and the first housing 1120. However, unlike the above description, in the embodiment, the tilting guide part 1141 may be disposed between the first member 1126 and the holder 1131. Specifically, the tilting guide part 1141 may be positioned between the first member 1126 and the fourth seating groove of the holder 1131. For example, at least a part of the tilting guide part 1141 may be positioned in the fourth seating groove.

The second member 113 1a, the first member 1126, the tilting guide part 1141, and the holder 1131 may be sequentially arranged in the third direction (Z-axis direction). In addition, the second magnetic part 1142 and the first magnetic part 1143 may be respectively seated in a first groove gr1 formed in the second member 1131a and a second groove gr2 formed in the first member 1126. In the embodiment, the first groove gr1 and the second groove gr2 may have different positions from the first and second grooves described above in other embodiments. However, the first groove gr1 is positioned in the second member 1131a and moves integrally with the holder and the second member 1131a, and the second groove gr2 is positioned on the first member 1126 in correspondence to the first groove gr1 and coupled to the first housing 1120. Therefore, these terms will be used interchangeably. Furthermore, the first groove and the second groove may be grooves as described above. Alternatively, the first groove and the second groove may also be replaced with the form of a hole.

In addition, the tilting guide part 1141 may be disposed adjacent to the optical axis. Therefore, the actuator according to the embodiment can easily change the optical path according to tiltings of the first and second axes to be described below.

The tilting guide part 1141 may include first protrusions disposed to be spaced apart from each other in the first direction (X-axis direction) and second protrusions disposed to be spaced apart from each other in the second direction (Y-axis direction). In addition, the first protrusion and the second protrusion may protrude in opposite directions. A detailed description thereof will be given below.

In addition, as described above, the second magnetic part 1142 may be positioned in the second member 1131a. In addition, the first magnetic part 1143 may be positioned in the first member 1126.

The second magnetic part 1142 and the first magnetic part 1143 may have surfaces having the same polarity facing each other. For example, the second magnetic part 1142 may be a magnet having an N pole, and the first magnetic part 1143 may be a magnet having an N pole. Alternatively, the second magnetic part 1142 may be a magnet having an S pole, and the first magnetic part 1143 may be a magnet having an S pole. For example, as described above, a first pole surface of the first magnetic part 1143 and a second pole surface of the second magnetic part 1142 facing the first pole surface may have the same polarity.

The second magnetic part 1142 and the first magnetic part 1143 may generate a repulsive force therebetween due to the above-described polarity. With this configuration, the above-described repulsive force may be applied to the second member 1131a or the holder 1131 coupled to the second magnetic part 1142 and the first member 1126 or the first housing 1120 coupled to the first magnetic part 1143. In this case, the repulsive force applied to the second member 1131a may be transmitted to the holder 1131 coupled to the second member 1131a. Therefore, the tilting guide part 1141 disposed between the second member 1131a and the first member 1126 may be pressed by the repulsive force. Furthermore, the repulsive force may also be transmitted to the housing and the mover. Therefore, the housing and the mover may be pressed by the repulsive force. That is, the repulsive force may correspond to a holding force that holds a position between the housing and the mover. That is, the repulsive force may hold the position of the tilting guide part 1141 between the holder 1131 and the first housing 1120 (or the first member 1126). With this configuration, it is possible to hold the position between the mover 1130 and the first housing 1120 even during an X-axis tilting or a Y-axis tilting. In addition, the tilting guide part may be in close contact with the first member 1126 and the holder 1131 by the repulsive force between the first magnetic part 1143 and the second magnetic part 1142. That is, the repulsive force by the first magnetic part 1143 and the second magnetic part 1142 may be the holding force for the position between the holder 1131 and the first housing 1120.

The first driving unit 1150 includes the driving magnet 1151, the driving coil 1152, the Hall sensor part 1153, the first board part 1154, and the yoke part 1155. A description thereof will be given below. In addition, the yoke part 1155 may be referred to as a "first yoke part" in the first camera actuator. In addition, the yoke part in the second camera actuator may be referred to as a "second yoke part."

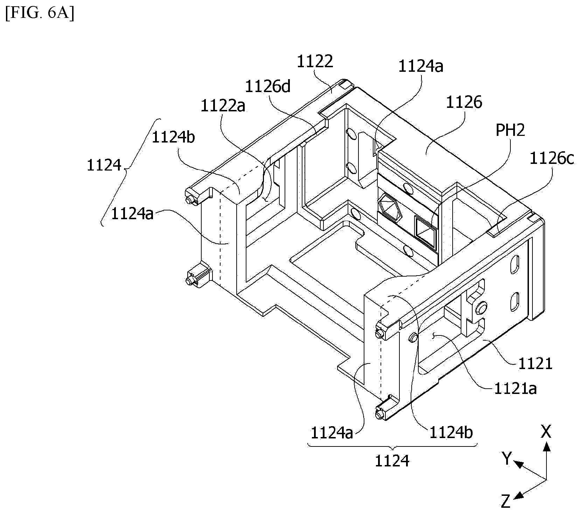

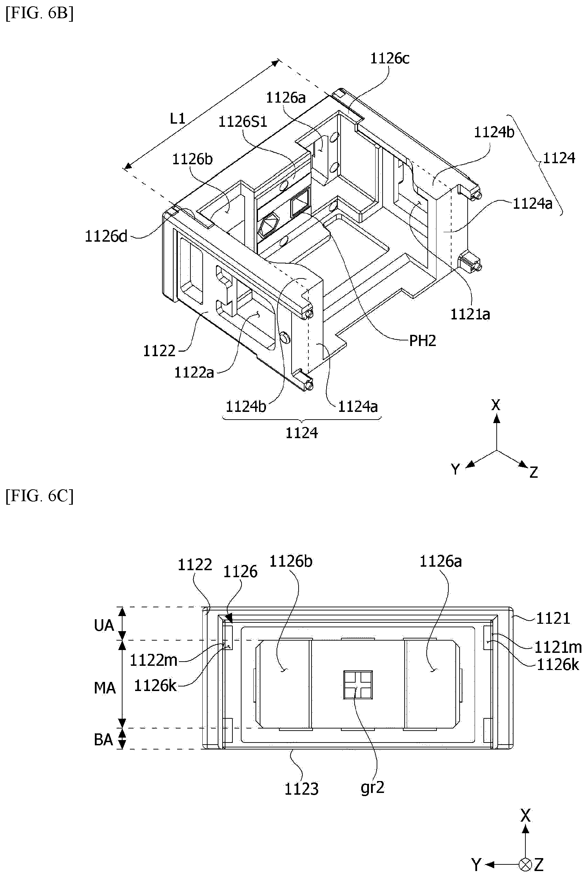

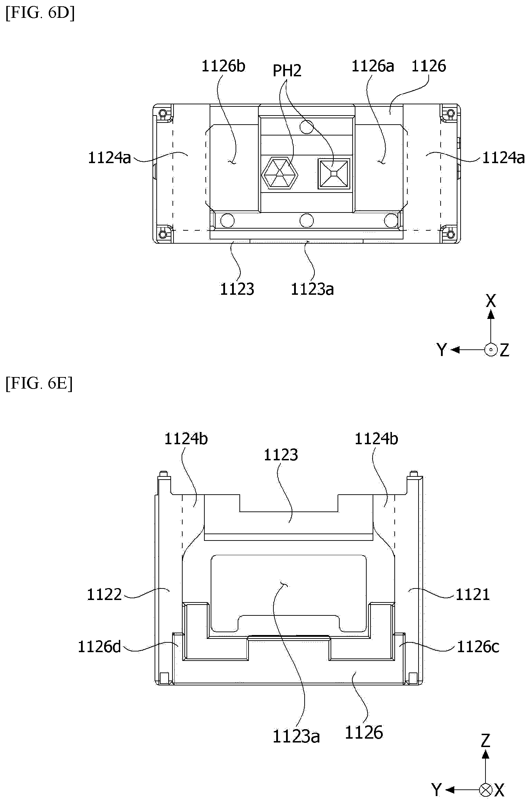

FIG. 6A is a perspective view of a first housing of the first camera actuator according to the embodiment, FIG. 6B is a perspective view of the first housing of the first camera actuator in a different direction from FIG. 6A, FIG. 6C is a front view of the first housing of the first camera actuator according to the embodiment, FIG. 6D is a rear view of the first housing of the first camera actuator according to the embodiment, and FIG. 6E is a top view of the first housing of the first camera actuator according to the embodiment.

Referring to FIGS. 6A to 6E, the first housing 1120 according to the embodiment may include the first housing side portion 1121 to the third housing side portion 1123. In addition, the first member 1126 may be integrally formed by being coupled to the first housing 1120. Therefore, the first member 1126 may be a component included in the first housing 1120. Alternatively, the first housing 1120 may include the first member 1126.

The first housing side portion 1121 and the second housing side portion 1122 may be disposed to face each other. In addition, the first member 1216a and the housing wall portion 1124 may be disposed to face each other. Furthermore, the housing wall portion 1124 may also be equally applied to a structure of a camera actuator in which the first member and the second member are not present. That is, even in a structure in which the mover is tilted within the housing, a fixed housing may include the housing wall portion.

In addition, the third housing side portion 1123 may be disposed between the first housing side portion 1121 and the second housing side portion 1122.

The third housing side portion 1123 may be in contact with the first housing side portion 1121 and the second housing side portion 1122. In addition, the third housing side portion 1123 may be a lower surface of the first housing 1120. In addition, the above-described contents may also be applied to a description of a direction in the same manner.

In addition, the first housing side portion 1121 may include a first housing hole 1121a. A first coil to be described below may be positioned in the first housing hole 1121a.

In addition, the second housing side portion 1122 may include a second housing hole 1122a. In addition, a second coil 1152b to be described below may be positioned in the second housing hole 1122a.

In addition, the first housing side portion 1121 and the second housing side portion 1122 may be side surfaces of the first housing 1120.

The first coil and the second coil may be coupled to the first board part. In an embodiment, the first coil and the second coil may be electrically connected to the first board part so that a current may flow therethrough. The current is an element of an electromagnetic force capable of tilting the second camera actuator with respect to the X-axis.

In addition, the third housing side portion 1123 may include a third housing hole 1123a.

A third coil to be described below may be positioned in the third housing hole 1123a. In addition, a third coil 1152c may be electrically connected to the first board part in contact with the first housing 1120, and the third coil 1152c and the first board part may be coupled. Therefore, the third coil may be electrically connected to the first board part to receive a current from the first board part. The current is an element of an electromagnetic force capable of tilting the second camera actuator with respect to the Y-axis.

The first member 1126 may be seated between the first housing side portion 1121 and the third housing side portion 1123. Therefore, the first member 1126 may be positioned on the third housing side portion 1123. For example, the first member 1126 may be positioned at one side of the third housing side portion 1123. The first member 1126 and the holder may be sequentially positioned in the third direction.

In addition, the first housing 1120 may include the accommodating part 1125 formed by the first housing side portion 1121 and the third housing side portion 1123. The first member 1126, the second member 1131a, and the mover 1130 as components may be positioned in the accommodating part 1125. The mover, the tilting guide, and the like may be positioned in the accommodating part 1125.

In addition, the first housing 1120 may further include the housing wall portion 1124 facing the first member 1126. In addition, the housing wall portion 1124 may be disposed between the first housing side portion 1121 and the second housing side portion 1122 and may be in contact with the first housing side portion 1121, the second housing side portion 1122, and the third housing side portion 1123.

In addition, the housing wall portion 1124 may be positioned at ends of the first housing side portion 1121 and the second housing side portion 1122. That is, a plurality of housing wall portions 1124 may be provided. In addition, the plurality of housing wall portions 1124 may be positioned on the first housing side portion 1121 and the second housing side portion 1122. The plurality of housing wall portions 1124 may be spaced apart from each other in the second direction (Y-axis direction). Therefore, the light reflected from the optical member 1132 may move to the second camera actuator positioned at a rear end of the first housing through the separated region. That is, the separated region provides a path for light to move.

In addition, the housing wall portion 1124 may include protrusions, grooves, or the like to provide easy coupling with another camera actuator (second camera actuator) adjacent thereto. With this configuration, it is possible to improve the coupling strength between the housing wall portion 1124 having an opening providing the optical path and another component while providing the optical path, thereby suppressing movement of the opening due to separation or the like to minimize a change in the optical path.

More specifically, the housing wall portion 1124 may be disposed on a side portion corresponding to an emission surface of the optical member. In addition, the housing wall portion 1124 may be positioned between the first housing side portion 1121 and the second housing side portion 1122 and positioned at the ends of the first housing side portion 1121 and the second housing side portion 1122 in the optical axis direction. Therefore, the housing wall portion 1124 may be positioned at a rear end of the accommodating part 1125 in the optical axis direction. Furthermore, the housing wall portion 1124 may be positioned at a rear end of the optical member in the optical axis direction (Z-axis direction).

In addition, the housing wall portion 1124 may overlap the holder in the optical axis direction (Z-axis direction). In addition, at least a part of the housing wall portion 1124 may overlap the holder in the optical axis direction. Here, the optical axis direction (Z-axis direction) may correspond to a moving direction of the reflected light. In addition, the optical axis direction may correspond to a direction perpendicular to the emission surface of the optical member. Therefore, for a hand-shake prevention function, even when the mover, that is, the holder tilts, a movement amount may be limited by the housing wall portion 1124. Furthermore, the housing wall portion 1124 and the holder may collide with each other so that no impact occurs in the first member or the second member. Therefore, it is possible to improve reliability of the first member and the second member.

In addition, the housing wall portion 1124 may be formed integrally with the housing 1120. In addition, a part of the housing wall portion 1124 may be made of an elastic material. In addition, an elastic member may be additionally disposed on the housing wall portion 1124. Therefore, it is possible to reduce an impact applied to the holder 1131 due to the collision between the housing wall portion 1124 and the holder 1131.

In addition, the housing wall portion 1124 according to the embodiment may include a wall portion 1124a facing (or corresponding to) the rear surface of the holder (or the emission surface of the optical member) and a housing extension 1124b extending from the wall portion 1124a to an upper portion of the holder.

The wall portion 1124a may overlap the holder in the optical axis direction (Z-axis direction). In addition, the housing extension 1124b may overlap the holder in the first direction.

The wall portion 1124a may serve as a stopper for the tilting of the holder in the first direction or the second direction. That is, when the holder tilts, the holder and the wall portion 1124a may collide with or may be in contact with each other.

In addition, when the holder moves in the first direction or performs the second axis tilting (e.g., the vertical driving), the housing extension 1124b may collide with or may be in contact with the holder. That is, the housing extension 1124b may serve as a stopper for the movement of the holder in the first direction. Furthermore, the third housing side portion 1123 may also perform a stopper function.

In addition, as described above, the first member 1126 may be a component coupled to the first housing 1120 and included in the first housing 1120. For example, the first member 1126 may be a structure integrally formed with or separated from the first housing 1120. Hereinafter, the first member 1126 will be described as a structure separated from the first housing 1120.

In addition, the first member 1126 may be disposed in the first housing 1120. Alternatively, the first member 1126 may be positioned in the first housing 1120.

In addition, the first member 1126 may be coupled to the first housing 1120. In an embodiment, the first member 1126 may be positioned between the first housing side portion 1121 and the second housing side portion 1122. In addition, the first member 1126 may be positioned on the third housing side portion 1123 and coupled to the first housing side portion to the third housing side portion.

In addition, a first stop member 1121b may be positioned on an inner surface of the first housing side portion 1121. In addition, a second stop member 1122b may be positioned on an inner surface of the second housing side portion 1122.

The first stop member 1121b and the second stop member 1122b may be symmetrically positioned with respect to the first direction (X-axis direction). The first stop member 1121b and the second stop member 1122b may extend in the first direction (X-axis direction). With this configuration, even when the first member 1126 moves into the first housing 1120, a position of the first member 1126 may be maintained by the first stop member 1121b and the second stop member 1122b. That is, the first stop member 1121b and the second stop member 1122b may hold the position of the first member 1126 at one side of the first housing 1120.

Furthermore, the first stop member 1121b and the second stop member 1122b may fix the position of the first member 1126 to fix a position of the tilting guide part between the first member 1126 and the mover, thereby removing factors that cause errors such as vibration. Therefore, the first camera actuator according to the embodiment can accurately perform the X-axis tilting and Y-axis tilting.

In addition, a separation distance L2 between the first stop member 1121b and the second stop member 1122b in the second direction (Y-axis direction) may be smaller than a maximum length L1 of the first member 1126 in the second direction (Y-axis direction). Therefore, the first member 1126 may be assembled or inserted into the side surface of the first housing 1120 and coupled to the first housing 1120. Furthermore, the holder may be assembled to the first housing 1120 in the first direction. In addition, as described above, the first member 1126 may be coupled to the first housing 1120 along a side surface of the first housing 1120, that is, in the optical axis direction. In addition, the second member may be assembled or inserted into the first housing 1120 in the optical axis direction. Therefore, the second member may pass through the first member 1126. Thereafter, the plate may be further disposed on the first member 1126.

In addition, the first member 1126 includes a second protrusion groove PH2 in which the second protrusion of the tilting guide part is seated. The second protrusion groove PH2 may be positioned in an inner surface 1126S1 of the first member 1126. As will be described below, the contents of the first protrusion groove may be applied to the second protrusion groove PH2 in the same manner. For example, a plurality of second protrusion grooves PH2 may be formed and may have a structure having contact points that are the same as or different from those of the second protrusion of the tilting guide part. For example, the number of second protrusion grooves PH2 is two, and the second protrusion groove PH2 may have a 4-point or 8-point contact structure. That is, the second protrusion groove PH2 may have a plurality of inclined surfaces. In addition, the second protrusion groove PH2 may also be a hemispherical groove.

In addition, in the first member 1126, the protrusion (e.g., the second protrusion) of the tilting guide part is disposed adjacent to the optical member (prism) in the fourth seating groove so that the protrusion, which is a reference axis of tilting, is disposed adjacent to the center of gravity of the mover 1130. Therefore, when the holder tilts, a moment for moving the mover 1130 for tilting can be minimized. Therefore, it is possible to minimize the current consumption for driving the coil, thereby reducing the power consumption of the camera actuator.

In addition, the first member 1126 may include through-holes 1126a and 1126b. A plurality of through-holes may be formed and may include the first through-hole 1126a and the second through-hole 1126b.

First and second extensions of the second member, which will be described below, may respectively pass through the first through-hole 1126a and the second through-hole 1126b. Therefore, a holding force between the second member and the first member may be generated by the repulsive force between the first and second magnetic parts. That is, even when the mover tilts, the position between the first housing and the mover can be maintained.

The second protrusion groove PH2 may be positioned between the first through-hole 1126a and the second through-hole 1126b. With this configuration, it is possible to increase the coupling strength between the tilting guide part 1141 and the first member 1126, thereby preventing a reduction in tilting accuracy caused by the movement of the tilting guide part 1141 in the first housing.

In addition, the second groove gr2 may be positioned on an outer surface 1126S2 of the first member 1126. The first magnetic part may be seated in the second groove gr2. In addition, the outer surface 1126S2 of the first member 1126 may be opposite to or face an inner surface of the second member or a member base part. Furthermore, the second magnetic part seated on the second member and the first magnetic part of the first member 1126 may face each other and generate the above-described repulsive force. Therefore, since the first member 1126 presses the tilting guide part inward or to the holder by the repulsive force, the mover may be spaced a predetermined distance from the third housing side portion in the first housing even without current injection into the coil. That is, the holding force for maintaining the position between the mover, the housing, and the tilting guide part may be generated by the first magnetic part and the second magnetic part.

In addition, when the first member 1126 is integrally formed with the first housing 1120, it is possible to increase the coupling strength between the first member 1126 and the first housing 1120, thereby improving the reliability of the camera actuator. In addition, when the first member 1126 is formed separately from the first housing 1120, it is possible to increase the ease of assembling and manufacturing of the first member 1126 and the first housing 1120.

In addition, in the embodiment, the first member 1126 may include the first through-hole 1126a and the second through-hole 1126b as described above. In addition, the first through-hole 1126a and the second through-hole 1126b may be disposed side by side in the second direction (Y-axis direction) and may overlap each other.

In addition, the first member 1126 may include upper members UA positioned above the first through-hole 1126a and the second through-hole 1126b and lower members BA positioned under the first through-hole 1126a and the second through-hole 1126b. Therefore, the first through-hole 1126a and the second through-hole 1126b may be positioned in the middle of the first member 1126. That is, the first member 1126 may include connection members MA positioned at side portions of the first through-hole 1126a and the second through-hole 1126b. That is, the upper members UA and the lower members BA may be connected through the connection members MA. In addition, a plurality of lower members BA may be formed to form the first and second through-holes and may be spaced apart from each other in the second direction (Y-axis direction).

Therefore, the first member 1126 may have the upper members UA, thereby increasing stiffness. For example, it is possible to increase the stiffness of the first member 1126 compared to a case in which the upper member UA is not present. For example, in the embodiment, a unit of stiffness may be N/µm. Therefore, it is possible to improve the reliability of the first camera actuator according to the embodiment.

In addition, first coupling grooves 1126k may be positioned in the outer surface 1126S2 of the first member 1126. The first coupling groove 1126k may be positioned at an edge of the outer surface 1126S2 of the first member 1126. In particular, the first coupling groove 1126k may be positioned at ends (e.g., left and right sides) of the outer surface 1126S2 of the first member 1126 and positioned adjacent to the first housing side portion 1121.

The first coupling grooves 1126k may be positioned to correspond to or face second coupling grooves 1121m and 1122m of the first housing side portion 1121 and the second housing side portion 1122. In an embodiment, the first coupling grooves 1126k may be positioned to correspond to (or face) the second coupling grooves 1121m and 1122m of the first housing side portion 1121 and the second housing side portion 1122. The second coupling grooves 1121m and 1122m may be adjacent to the outer surface 1126S2 of the first member 1126 and positioned on the same side surface.

In an embodiment, a plurality of first coupling grooves 1126k and a plurality of second coupling grooves 1121m and 1122m may be formed, and the plurality of first coupling grooves 1126k and the plurality of second coupling grooves 1121m and 1122m may be positioned symmetrically in the first direction or the second direction.

Bonding members may be applied to the first coupling groove 1126k and the second coupling grooves 1121m and 1122m. That is, the bonding member may be applied between the first housing side portion (or the second housing side portion) and the first member 1126, thereby increasing the coupling strength between the first housing 1120 and the first member 1126. The bonding members may include an epoxy or the like, but are not limited to the material.

In addition, the first member 1126 may further include a first protrusion 1126c and a second protrusion 1126d. The first protrusion 1126c may be in contact with the first housing side portion 1121, and the second protrusion 1126d may be in contact with the second housing side portion 1122. The first protrusion 1126c may extend from one end of an outer surface 1126s2 of the first member in the third direction (Z-axis direction). The second protrusion 1126d may extend from the other end of an outer surface 1126s2 of the first member in the third direction (Z-axis direction). That is, the first protrusion and the second protrusion may extend toward the holder.

The position of the first protrusion may be maintained by the first stop member 1121b, and the position of the second protrusion may be maintained by the second stop member 1122b. Therefore, it is possible to improve the reliability of the camera actuator according to the embodiment.

In addition, as described above, the housing wall portion 1124 according to the embodiment may include the wall portion 1124a and the housing extension 1124b.

The housing wall portion 1124 or the wall portion 1124a may overlap the first through hole 1126a and the second through hole 1126b of the first member 1126 in the optical axis direction (Z-axis direction). For example, the housing wall portion 1124 or the wall portion 1124a may partially overlap the first through hole 1126a and the second through hole 1126b of the first member 1126 in the optical axis direction (Z-axis direction).

In addition, the second protrusion groove PH2 may be positioned between the adjacent wall portions 1124a. In addition, the housing wall portion 1124 or the wall portion 1124a may not overlap the second protrusion groove PH2 in the optical axis direction (Z-axis direction).

With this configuration, it is possible to increase an effective region of the light emitted after reflected through the optical member positioned between the adjacent wall portions 1124a.

Furthermore, a distance (separation distance in the second direction) between the adjacent housing extensions 1124b may be reduced in the optical axis direction. With this configuration, it is possible to increase an amount of light incident to the optical member. Furthermore, the housing extension 1124b may sufficiently serve as a stopper for the tilting of the holder.

In addition, the third housing hole 1123a may be positioned between the adjacent housing extensions 1124b. That is, the third housing hole 1123a and the housing extension 1124b do not overlap each other in the first direction (X-axis direction) and may be misaligned.

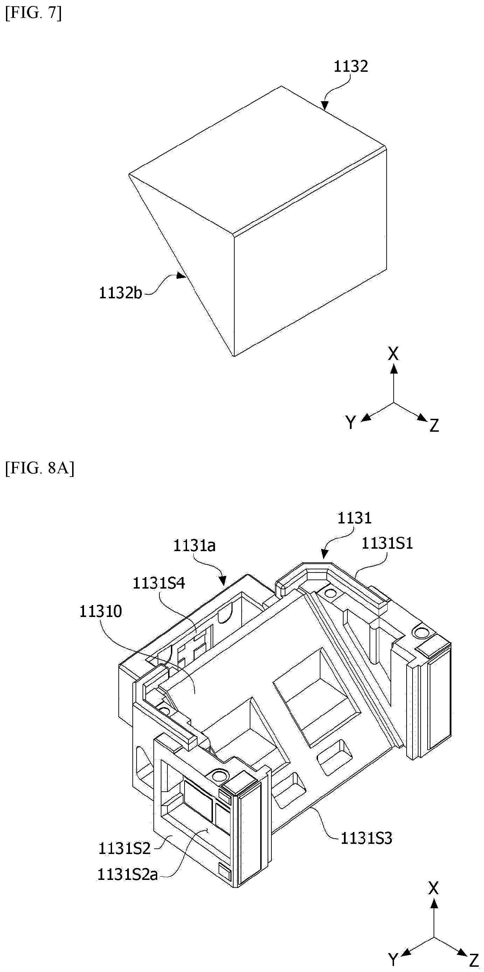

FIG. 7 is a perspective view of an optical member of the first camera actuator according to the embodiment.

The optical member 1132 may be seated on the holder. The optical member 1132 may be a right angle prism as a reflector, but is not limited thereto.

In an embodiment, the optical member 1132 may have a protrusion (not illustrated) on a part of an outer surface thereof. The optical member 1132 may be easily coupled to the holder through the protrusion (not illustrated). In addition, the holder may be coupled to the optical member 1132 with a groove or a protrusion.

In addition, a lower surface 1132b of the optical member 1132 may be seated on the seating surface of the holder. Therefore, the lower surface 1132b of the optical member 1132 may correspond to the seating surface of the holder. Furthermore, the lower surface 1132b of the optical member 1132 may be a reflective surface. In addition, an upper surface of the optical member 1132 may be an incident surface through which light is incident. In addition, a rear surface of the optical member 1132 may be an emission surface through which light is output.

In addition, in an embodiment, the lower surface 1132b may be formed of an inclined surface in the same manner as the seating surface of the holder. Therefore, it is possible to prevent the optical member 1132 from being separated from the holder as the prism moves according to the movement of the holder.

In addition, a groove is formed on the lower surface 1132b of the optical member 1132, and a bonding member is applied thereto, and thus the optical member 1132 may be coupled to the holder. Alternatively, the holder may also be coupled to the optical member 1132 by applying the bonding member to the groove or the protrusion of the holder.

In addition, the protrusion of the holder may face the housing wall portion to be described below. Furthermore, the protrusion of the holder may overlap the optical member 1132 in the optical axis direction. Therefore, in the embodiment, the protrusion of the holder may not overlap the housing wall portion in the optical axis direction.

In addition, as described above, the optical member 1132 may have a structure capable of reflecting the light reflected from the outside (e.g., an object) into the camera module. As in the embodiment, the optical member 1132 may be formed of a single mirror. In addition, the optical member 1132 can resolve the spatial limits of the first camera actuator and the second camera actuator by changing the path of the reflected light. Therefore, it should be understood that the camera module may provide a high range of magnification by extending the optical path while a thickness thereof is minimized. In addition, it should be understood that the camera module including the camera actuator according to the embodiment may provide a high range of magnification by extending the optical path while minimizing the thickness.

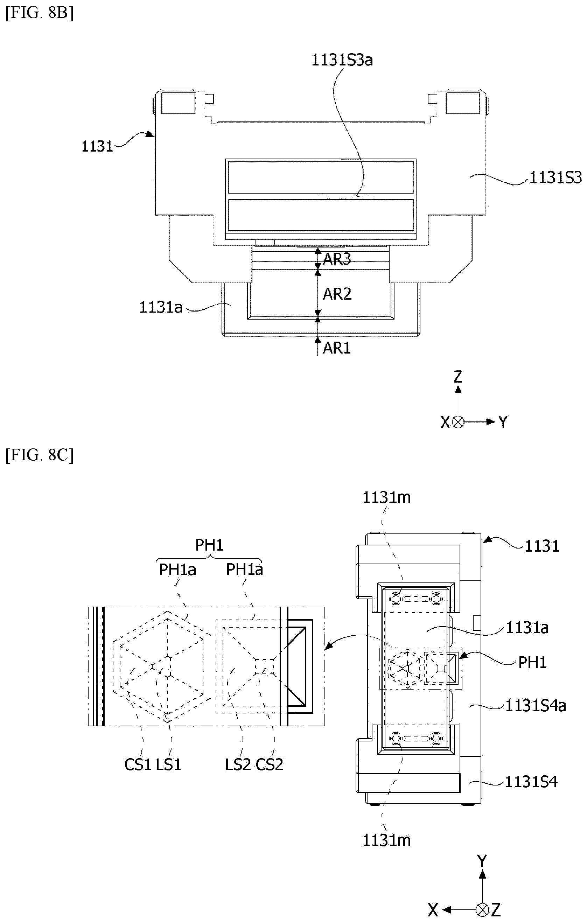

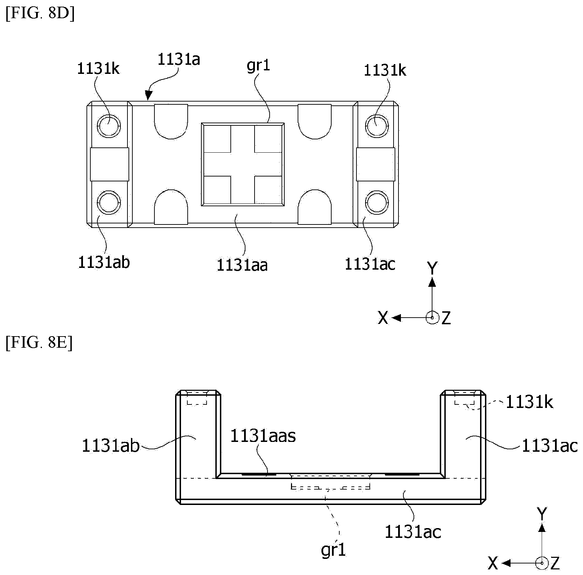

FIG. 8A is a perspective view of a holder of the first camera actuator according to the embodiment, FIG. 8B is a bottom view of a holder of the first camera actuator according to the embodiment, FIG. 8C is a front view of the holder of the first camera actuator according to the embodiment, FIG. 8D is a rear view of a second member of the first camera actuator according to the embodiment, and FIG. 8E is a bottom view of the second member of the first camera actuator according to the embodiment.

Referring to FIGS. 8A to 8E, the holder 1131 may include a seating surface 1131o on which the optical member 1132 is seated. The seating surface 1131o may be an inclined surface. In addition, the holder 1131 may include a stepped portion on the seating surface 113o. In addition, the stepped portion of the holder 1131 may be coupled to the protrusion (not illustrated) of the optical member 1132.

The holder 1131 may include a plurality of outer surfaces. For example, the holder 1131 may include a first holder outer surface 1131S1, a second holder outer surface 1131S2, a third holder outer surface 1131S3, and a fourth holder outer surface 1131S4.

The first holder outer surface 1131S1 may be positioned to face the second holder outer surface 1131S2. That is, the first holder outer surface 1131S1 may be symmetrically disposed with the second holder outer surface 1131S2 with respect to the first direction (X-axis direction).

The first holder outer surface 1131S1 may be positioned to correspond to the first housing side portion. That is, the first holder outer surface 1131S1 may face the first housing side portion. In addition, the second holder outer surface 1131S2 may be positioned to correspond to the second housing side portion. That is, the second holder outer surface 1131S2 may be positioned to face the second housing side portion.

In addition, the first holder outer surface 1131S1 may include a first seating groove 1131S1a. In addition, the second holder outer surface 1131S2 may include a second seating groove 1131S2a. The first seating groove 1131S1a and the second seating groove 1131S2a may be symmetrically disposed with respect to the first direction (X-axis direction).

In addition, the first seating groove 1131S1a and the second seating groove 1131S2a may be disposed to overlap each other in the second direction (Y-axis direction). In addition, a first magnet 1151a may be disposed in the first seating groove 1131S1a, and a second magnet 1151b may be disposed in the second seating groove 1131S2a. The first magnet 1151a and the second magnet 1151b may also be symmetrically disposed with respect to the first direction (X-axis direction). In the specification, it should be understood that the first magnet to the third magnet may be coupled to the housing through a yoke or a bonding member. Polarities of the first magnet and polarities of the second magnet may be positioned opposite to each other. For example, an N pole and an S pole of the first magnet may be sequentially arranged in the third direction, and an S pole and an N pole of the second magnet may be sequentially arranged in the third direction. As a modified example, the polarities of the first magnet and the polarities of the second magnet may be positioned to be the same by adjusting the current injection or current directions of the first and second coils.

As described above, due to positions of the first and second seating grooves and the first and second magnets, an electromagnetic force generated by each magnet is coaxially provided to the first holder outer surface S1131S1 and the second holder outer surface 1131S2. For example, a region (e.g., a portion in which the electromagnetic force is strongest) applied on the first holder outer surface S1131S1 and a region (e.g., a portion in which the electromagnetic force is strongest) applied on the second holder outer surface S1131S2 may be positioned on an axis parallel to the second direction (Y-axis direction). Therefore, the X-axis tilting can be accurately performed.

The first magnet 1151a may be disposed in the first seating groove 1131S1a, and the second magnet 1151b may be disposed in the second seating groove 1131S2a.

The third holder outer surface 1131S3 may be in contact with the first holder outer surface 1131S1 and the second holder outer surface 1131S2 and may be an outer surface extending from one sides of the first holder outer surface 1131S1 and the second holder outer surface 1131S2 in the second direction (Y-axis direction). In addition, the third holder outer surface 1131S3 may be positioned between the first holder outer surface 1131S1 and the second holder outer surface 1131S2. The third holder outer surface 1131S3 may be the lower surface of the holder 1131. That is, the third holder outer surface 1131S3 may be positioned to face the third housing side portion.

In addition, the third holder outer surface 1131S3 may include a third seating groove 1131S3a. The third magnet may be positioned in the third seating groove 1131S3a. The third holder outer surface 1131S3 may be positioned to face the third housing side portion 1123.

In addition, at least a part of the third housing hole 1123a may overlap the third seating groove 1131S3a in the first direction (X-axis direction). Therefore, the third magnet in the third seating groove 1131S3a and the third coil in the third housing hole 1123a may be positioned to face each other. In addition, the third magnet and the third coil may generate an electromagnetic force so that the second camera actuator may perform Y-axis tilting.

In addition, the X-axis tilting may be performed by a plurality of magnets (first and second magnets), while the Y-axis tilting may be performed by only the third magnet.

In an embodiment, the third seating groove 1131S3a may have a larger space than the first seating groove 1131S1a or the second seating groove 1131S2a. With this configuration, the Y-axis tilting may be performed with current control similar to that of the X-axis tilting.

The fourth holder outer surface 1131S4 may be in contact with the first holder outer surface 1131S1 and the second holder outer surface 1131S2 and may be an outer surface extending from the one sides of the first holder outer surface 1131S1 and the second holder outer surface 1131S2 in the first direction (X-axis direction). In addition, the fourth holder outer surface 1131S4 may be positioned between the first holder outer surface 1131S1 and the second holder outer surface 1131S2. That is, the fourth holder outer surface 1131S4 may be positioned to face the first member.

The fourth holder outer surface 1131S4 may include a fourth seating groove 1131S4a. A tilting guide part 1141 may be positioned in the fourth seating groove 1131S4a. In addition, the second member 1131a and the first member 1126 may be positioned in the fourth seating groove 1131S4a. In addition, the fourth seating groove 1131S4a may include a plurality of regions. The fourth seating groove 1131S4a may include a first region AR1, a second region AR2, and a third region AR3.

The second member 1131a may be positioned in the first region AR1. That is, the first region AR1 may overlap the second member 1131a in the first direction (X-axis direction). In particular, the first region AR1 may be a region in which the member base part of the second member 1131a is positioned. In this case, the first region AR1 may be positioned on the fourth holder outer surface 1131S4. That is, the first region AR1 may correspond to a region positioned above the fourth seating groove 1131S4a. In this case, the first region AR1 may not be the region in the fourth seating groove 1131S4a.

The first member 1126 may be positioned in the second region AR2. That is, the second region AR2 may overlap the first member 1126 in the first direction (X-axis direction).

In addition, the second region AR2 may be positioned on the fourth holder outer surface 1131S4 like the first region. That is, the second region AR2 may correspond to a region positioned above the fourth seating groove 1131S4a.

The tilting guide part may be positioned in the third region AR3. In particular, a base of the tilting guide part may be positioned in the third region AR3. That is, the third region AR3 may overlap the tilting guide part (e.g., the base) in the first direction (X-axis direction).

In addition, the second region AR2 may be positioned between the first region AR1 and the third region AR3.

In addition, the second member may be disposed in the first region AR1, and the second member 1131a may include the first groove gr1. In an embodiment, the second member 1131a may include the first groove gr1 formed on an inner surface 1131aas. In addition, the second magnetic part may be disposed in the first groove gr1 as described above.

In addition, as described above, the first member may be disposed in the second region AR2. The first groove gr1 may be positioned to face the second groove gr2. For example, at least a part of the first groove gr1 may overlap the second groove gr2 in the third direction (Z-axis direction).

In addition, the repulsive force generated by the second magnetic part may be transmitted to the fourth seating groove 1131S4a of the holder 1131 through the second member. Therefore, the holder may apply a force to the tilting guide part in the same direction as the repulsive force generated by the second magnetic part.

The first member may include the second groove gr2 facing the first groove gr1 formed in the outer surface thereof. In addition, the first member may include the second protrusion groove formed on the inner surface thereof as described above. In addition, the second protrusion may be seated in the second protrusion groove.

In addition, like the second magnetic part, the repulsive force generated by the first magnetic part and the second magnetic part may be applied to the first member. Therefore, the first member and the second member may press the tilting guide part disposed between the first member and the holder 1131 through the repulsive force.

The tilting guide part 1141 may be disposed in the third region AR3.

In addition, the first protrusion groove PH1 may be positioned in the fourth seating groove 1131S4a. In addition, the first protrusion of the tilting guide part 1141 may be accommodated in the first protrusion groove PH1. Therefore, the first protrusion PR1 may be in contact with the first protrusion groove. The maximum diameter of the first protrusion groove PH1 may correspond to the maximum diameter of the first protrusion PR1. This may be applied to the second protrusion groove and the second protrusion PR2 in the same manner. That is, a maximum diameter of the second protrusion groove may correspond to a maximum diameter of the second protrusion PR2. Therefore, the second protrusion may be in contact with the second protrusion groove. With this configuration, a first axis tilting may be easily performed based on the first protrusion, a second axis tilting may be easily performed based on the second protrusion, and radii of the tilting can be improved.

In addition, in an embodiment, a plurality of first protrusion grooves PH1 may be formed. For example, any one of the first protrusion groove PH1 and the second protrusion groove PH2 may include a first-first protrusion groove PH1a and a first-second protrusion groove PH1b. Hereinafter, description will be made based on the first protrusion groove PH1 including the first-first protrusion groove PH1a and the first-second protrusion groove Ph1b. In addition, the following description may also be applied to the second protrusion groove PH2 in the same manner. For example, the second protrusion groove PH2 may include a second-first protrusion groove and a second-second protrusion groove, in which the description of the first-first protrusion groove may be applied to the second-first protrusion groove, and the description of the first-second protrusion groove may be applied to the second-second protrusion groove.

The first-first protrusion groove PH1a and the first-second protrusion groove PH1b may be disposed side by side in the first direction (X-axis direction). The first-first protrusion groove PH1a and the first-second protrusion groove PH1b may have the same maximum area or different maximum areas.

The plurality of first protrusion grooves PH1 may have different numbers of inclined surfaces. For example, the first protrusion groove PH1 may include a groove lower surface and an inclined surface. In this case, the plurality of protrusion grooves may have different numbers of inclined surfaces. In addition, areas of the lower surfaces of the protrusion grooves may also be different.

For example, the first-first protrusion groove PH1a may include a first groove lower surface LS1 and a first inclined surface CS1. The first-second protrusion groove PH1b may include a second groove lower surface LS2 and a second inclined surface CS2.

In this case, the first groove lower surface LS1 and the second groove lower surface LS2 may have different areas. The area of the first groove lower surface LS1 may be smaller than the area of the second groove lower surface LS2.

In addition, the number of first inclined surfaces CS1 in contact with the first groove lower surface LS1 may differ from the number of second inclined surfaces CS2. For example, the number of first inclined surfaces CS1 may be greater than the number of second inclined surfaces CS2.

With this configuration, it is possible to easily compensate for an assembly tolerance of the first protrusion seated in the first protrusion groove PH1. For example, since the number of first inclined surfaces CS1 is greater than the number of second inclined surfaces CS2, the first protrusion may be in contact with more inclined surfaces, thereby more accurately holding the position of the first protrusion in the first-first protrusion groove PH1a.

Unlike this, in the first-second protrusion groove PH1b, the number of inclined surfaces in contact with the first protrusion may be smaller than those of the first-first protrusion groove PH1a, thereby easily adjusting the position of the first protrusion.

In an embodiment, the second inclined surfaces CS2 may be disposed to be spaced apart from each other in the second direction (Y-axis direction). In addition, the second groove lower surface LS2 may extend in the first direction (X-axis direction) so that the first protrusion may easily move in the first direction (X-axis direction) in a state of being in contact with the second inclined surface CS2. That is, the position of the first protrusion in the first-second protrusion groove PH1b may be easily adjusted. In addition, a lubricating member may be applied to the first protrusion groove PH1.

In addition, in this embodiment, the first region AR1, the second region AR2, and the third region AR3 may have different heights in the first direction (X-axis direction). In an embodiment, the first region AR1 may have a greater height than the second region AR2 and the third region AR3 have in the first direction (X-axis direction). Therefore, a stepped portion may be positioned between the first region AR1 and the second region AR2.

In addition, the second member 1131a may include the first groove gr1. That is, the first groove gr1 may be positioned in an inner surface of a member base part 1131aa. In addition, the above-described second magnetic part may be seated in the first groove gr1. In addition, a plurality of first grooves gr1 may be formed according to the number of second magnetic parts. That is, the number of first grooves gr1 may correspond to the number of second magnetic parts.

In addition, the second member 1131a may include the member base part 1131aa, a first extension 1131ab, and a second extension 1131ac.

The member base part 1131aa may be positioned at the outermost side of the first camera actuator. The member base part 1131aa may be positioned at the outer side of the first member. That is, the first member may be positioned between the member base part 1131aa and the tilting guide part.

The first extension 1131ab may extend from an edge of the member base part 1131aa in the third direction (Z-axis direction). That is, the first extension 1131ab may extend toward the holder 1131 from the member base part 1131aa. This is also applied to the second extension 1131ac in the same manner. In addition, the second extension 1131ac may extend from the edge of the member base part 1131aa in the third direction (Z-axis direction). In an embodiment, the first extension 1131ab and the second extension 1131ac may be positioned at the edge of the member base part 1131aa in the second direction (Y-axis direction). In addition, the first extension 1131ab and the second extension 1131ac may be disposed between the upper member and the lower member.

Therefore, the second member 1131a may have a groove formed by the first extension 1131ab and the second extension 1131ac. That is, the groove may be positioned between the first extension 1131ab and the second extension 1131ac. Therefore, the first extension 1131ab and the second extension 1131ac may be connected by only the member base part 1131aa. With this configuration, the second member 1131a may continuously receive the repulsive force generated by the second magnetic part seated at the center of the member base part 1131aa, particularly, in the first groove gr1.

In addition, the first extension 1131ab may be spaced apart from the second extension 1131ac in the second direction (Y-axis direction) to form a separation space. The first member and the tilting guide part may be seated in the separation space. In addition, the second magnetic part and the first magnetic part may be positioned in the separation space.

In addition, the first extension 1131ab and the second extension 1131ac may have the same length in the third direction (Z-axis direction). Therefore, the coupling strength, the weight, and the like may be formed in a balanced manner so that the tilting of the holder can be accurately performed without tilting to one side.

In addition, the first extension 1131ab and the second extension 1131ac may be coupled to the holder. In the specification, it should be understood that the coupling may be made through the bonding member other than the above-described protrusion and groove structures. In an embodiment, the first extension 1131ab and the second extension 1131ac may include a third coupling groove 1131k formed in the third direction (Z-axis direction). In addition, a coupling protrusion 1131m may be positioned in a region in which the first extension 1131ab and the second extension 1131ac overlap in the third direction (Z-axis direction) in the fourth seating groove 1131S4a. The coupling protrusion 1131m may be positioned to correspond to the third coupling groove 1131k.

For example, the bonding member such as an epoxy may be applied to the third coupling groove 1131k. In addition, the coupling protrusion 1131m may be inserted into the third coupling groove 1131k of the first extension 1131ab and the second extension 1131ac. With this configuration, the second member 1131a and the holder 1131 may be coupled. In addition, the repulsive force applied to the second member 1131a may be transmitted to the holder 1131 through this coupling.

However, as described above, it should be understood that the positions of the protrusion and groove structures may also be changed with respect to each other.

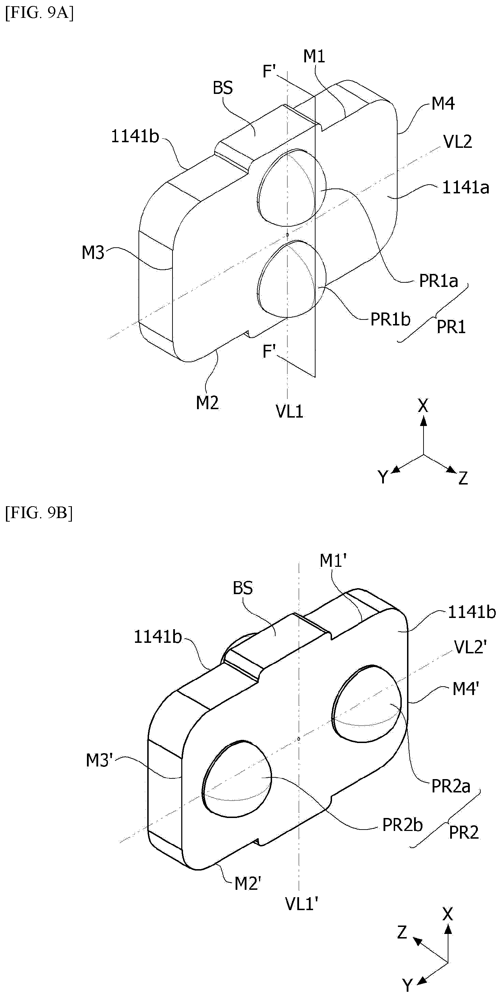

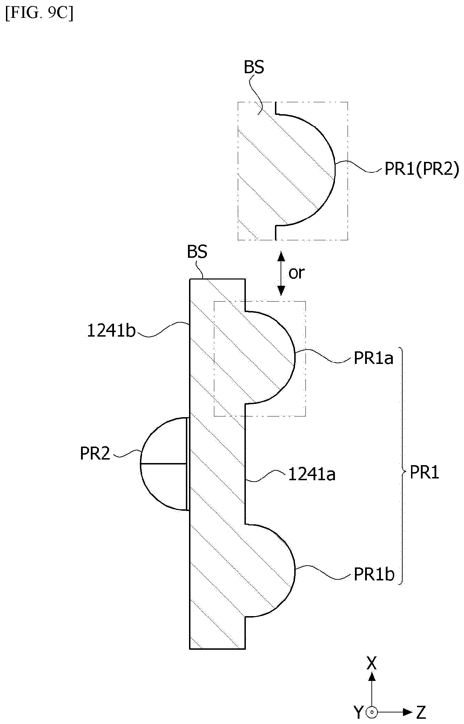

FIG. 9A is a perspective view of a tilting guide unit of the first camera actuator according to the embodiment, FIG. 9B is a perspective view of the tilting guide unit of the first camera actuator in a different direction from FIG. 9A, and FIG. 9C is a view of the tilting guide unit of the first camera actuator along line F-F' in FIG. 9A.

The tilting guide part 1141 according to the embodiment may include a base BS, the first protrusion PR1 protruding from a first surface 1141a of the base BS, and the second protrusion PR2 protruding from a second surface 1141b of the base BS. In addition, the first protrusion and the second protrusion may have opposite surfaces according to the structure, but will be described below based on the drawings. In addition, it should be understood that the first protrusion PR1 and the second protrusion PR2 may be integrally formed with the base BS, and as illustrated in the drawings, the first protrusion PR1 and the second protrusion PR2 may have a spherical shape like a ball. In addition, the first protrusion PR1 and the second protrusion PR2 may not be a projection shape, but may be a ball shape.

First, the base BS may include the first surface 1141a and the second surface 1141b opposite to the first surface 1141a. That is, the first surface 1141a may be spaced apart from the second surface 1141b in the third direction (Z-axis direction), and the first surface 1141a and the second surface 1141b may be outer surfaces opposite to each other or facing each other in the tilting guide part 1141.

The tilting guide part 1141 may include the first protrusion PR1 extending to one side on the first surface 1141a. According to the embodiment, the first protrusion PR1 may protrude toward the holder from the first surface 1141a. A plurality of first protrusions PR1 may be formed and may include a first-first protrusion PR1a and a first-second protrusion PR1b.

The first-first protrusion PR1a and the first-second protrusion PR1b may be positioned side by side in the first direction (X-axis direction). That is, the first-first protrusion PR1a and the first-second protrusion PR1b may overlap in the first direction (X-axis direction). In addition, in the embodiment, the first-first protrusion PR1a and the first-second protrusion PR1b may be bisected by a virtual line extending in the first direction (X-axis direction).

In addition, each of the first-first protrusion PR1a and the first-second protrusion PR1b may have a predetermined curvature and have, for example, a hemispherical shape. In addition, the first-first protrusion PR1a and the first-second protrusion PR1b may be in contact with the first groove of the housing at a point that is the farthest from the first surface 1141a of the base BS.

In addition, the tilting guide part 1141 may include the second protrusion PR2 extending to one side on the second surface 1141b. According to the embodiment, the second protrusion PR2 may protrude toward the housing from the second surface 1141b. In addition, a plurality of second protrusions PR2 may be formed and may include a second-first protrusion PR2a and a second-second protrusion PR2b in the embodiment.

The second-first protrusion PR2a and the second-second protrusion PR2b may be positioned side by side in the second direction (Y-axis direction). That is, the second-first protrusion PR2a and the second-second protrusion PR2b may overlap in the second direction (Y-axis direction). In addition, in the embodiment, the second-first protrusion PR2a and the second-second protrusion PR2b may be bisected by a virtual line extending in the second direction (Y-axis direction).

Each of the second-first protrusion PR2a and the second-second protrusion PR2b may have a curvature and have, for example, a hemispherical shape. In addition, the second-first protrusion PR2a and the second-second protrusion PR2b may be in contact with the second member 1131a at a point spaced apart from the second surface 1141b of the base BS.

The first-first protrusion PR1a and the first-second protrusion PR1b may be positioned in a region between the second-first protrusion PR2a and the second-second protrusion PR2b in the second direction. According to the embodiment, the first-first protrusion PR1a and the first-second protrusion PR1b may be positioned at the center of a separation space between the second-first protrusion PR2a and the second-second protrusion PR2b in the second direction. With this configuration, the actuator according to the embodiment may have an angle of the X-axis tilting in the same range with respect to the X-axis. That is, the tilting guide part 1141 may equally provide a range (e.g., a position/negative range) in which the holder can tilt in the X-axis with respect to the X-axis based on the first-first protrusion PR1a and the first-second protrusion PR1b.

In addition, the second-first protrusion PR2a and the second-second protrusion PR2b may be positioned in a region between the first-first protrusion PR1a and the first-second protrusion PR1b in the first direction. According to the embodiment, the second-first protrusion PR2a and the second-second protrusion PR2b may be positioned at the center of a separation space between the first-first protrusion PR1a and the first-second protrusion PR1b in the first direction. With this configuration, the actuator according to the embodiment may have an angle of the Y-axis tilting in the same range with respect to the Y-axis. That is, the tilting guide part 1141 and the holder may equally provide a range (e.g., a position/negative range) in which the Y-axis tilting may be performed based on the second-first protrusion PR2a and the second-second protrusion PR2b with respect to the Y-axis.

Specifically, the first surface 1141a may include a first outer line M1, a second outer line M2, a third outer line M3, and a fourth outer line M4. The first outer line M1 and the second outer line M2 may face each other, and the third outer line M3 and the fourth outer line M4 may face each other. In addition, the third outer line M3 and the fourth outer line M4 may be positioned between the first outer line M1 and the second outer line M2. In addition, the first outer line M1 and the second outer line M2 may be perpendicular to the first direction (X-axis direction), but the third outer line M3 and the fourth outer line M4 may be parallel to the first direction (X-axis direction).

In this case, the first protrusion PR1 may be positioned on a first virtual line VL1. Here, the first virtual line VL1 is a line that bisects the first outer line M1 and the second outer line M2. Alternatively, the first and third virtual lines VL1 and VL1' are lines that bisect the base BS in the second direction (Y-axis direction). Therefore, the tilting guide part 1141 may easily perform the X-axis tilting through the first protrusion PR1. In addition, since the tilting guide part 1141 performs the X-axis tilting with respect to the first virtual line VL1, a rotating force may be uniformly applied to the tilting guide part 1141. Therefore, the X-axis tilting can be precisely performed, and the reliability of the device can be improved.

In addition, the first-first protrusion PR1a and the first-second protrusion PR1b may be symmetrically disposed with respect to the first virtual line VL1 and a second virtual line VL2. Alternatively, the first-first protrusion PR1a and the first-second protrusion PR1b may be symmetrically positioned based on a first central point. With this configuration, upon performing the X-axis tilting, a support force supported by the first protrusion PR1 may be equally applied to upper and lower sides with respect to the second virtual line VL2. Therefore, it is possible to improve the reliability of the tilting guide part. Here, the second virtual line VL2 is a line that bisects the third outer line M3 and the fourth outer line M4. Alternatively, the second and fourth virtual lines VL2 and VL2' are lines that bisect the base BS in the first direction (X-axis direction).

In addition, the first central point may be an intersection of the first virtual line VL1 and the second virtual line VL2. Alternatively, the second central point may be a point corresponding to the center of gravity according to the shape of the tilting guide part 1141.

In addition, the second surface 1141b may include a fifth outer line M1', a sixth outer line M2', a seventh outer line M3', and an eighth outer line M4'. The fifth outer line M1' and the sixth outer line M2' may face each other, and the seventh outer line M3' and the eighth outer line M4' may face each other. In addition, the seventh outer line M3' and the eighth outer line M4' may be positioned between the fifth outer line M1' and the sixth outer line M2'. In addition, the fifth outer line M1' and the sixth outer line M2' may be perpendicular to the first direction (X-axis direction), but the seventh outer line M3' and the eighth outer line M4' may be parallel to the first direction (X-axis direction).

In addition, since the tilting guide part 1141 performs the Y-axis tilting with respect to the fourth virtual line VL2', a rotating force may be uniformly applied to the tilting guide part 1141. Therefore, the Y-axis tilting can be precisely performed, and the reliability of the device can be improved.

In addition, the second-first protrusion PR2a and the second-second protrusion PR2b may be symmetrically disposed on the fourth virtual line VL2' with respect to the third virtual line VL1'. Alternatively, the second-first protrusion PR2a and the second-second protrusion PR2b may be symmetrically positioned based on a second central point. With this configuration, upon performing the Y-axis tilting, a support force supported by the second protrusion PR2 may be equally applied to upper and lower sides with respect to the fourth virtual line VL2'. Therefore, it is possible to improve the reliability of the tilting guide part. Here, the third virtual line VL1' is a line that bisects the fifth outer line M1' and the sixth outer line M2'. In addition, the second central point may be an intersection of the third virtual line VL1' and the fourth virtual line VL2'. Alternatively, the second central point may be a point corresponding to the center of gravity according to the shape of the tilting guide part 1141.

In addition, a distance DR2 between the first-first protrusion PR1a and the first-second protrusion PR1b in the first direction (X-axis direction) may be greater than a length of the second protrusion PR2 in the first direction (X-axis direction). Therefore, when the X-axis tilting is performed based on the first-first protrusion PR1a and the first-second protrusion PR1b, it is possible to minimize resistance due to the second protrusion PR2.

Correspondingly, a distance ML2 between the second-first protrusion PR2a and the second-second protrusion PR2b in the second direction (Y-axis direction) may be greater than a length of the first protrusion PR1 in the second direction (Y-axis direction). Therefore, when the Y-axis tilting is performed based on the second-first protrusion PR2a and the second-second protrusion PR2b, it is possible to minimize resistance due to the first protrusion PR1.

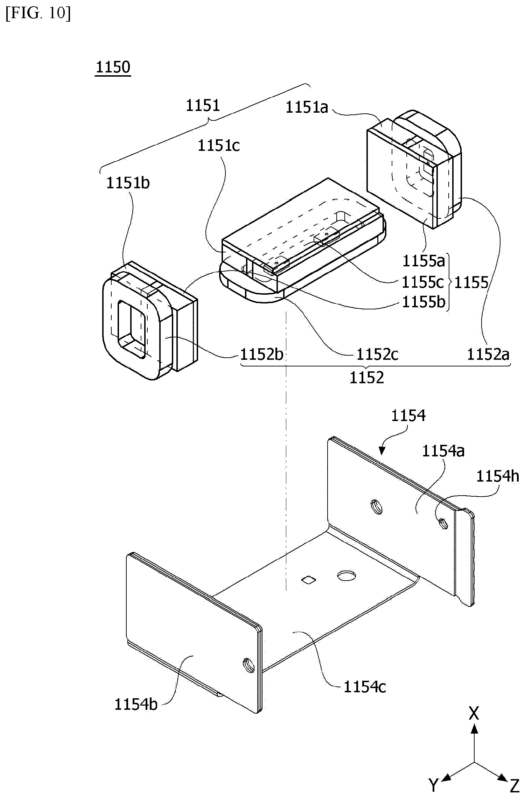

FIG. 10 is a view illustrating a first driving unit of the first camera actuator according to the embodiment.

Referring to FIG. 10, the first driving unit 1150 includes the driving magnet 1151, the driving coil 1152, the Hall sensor part 1153, the first board part 1154, and the yoke part 1155.

In addition, as described above, the driving magnet 1151 may include the first magnet 1151a, the second magnet 1151b, and the third magnet 1151c which provide a driving force generated by an electromagnetic force. The first magnet 1151a, the second magnet 1151b, and the third magnet 1151c may each be positioned on the outer surface of the holder 1131.

In addition, the driving coil 1152 may include a plurality of coils. In an embodiment, the driving coil 1152 may include a first coil 1152a, the second coil 1152b, and the third coil 1152c.

The first coil 1152a may be positioned to face the first magnet 1151a. Therefore, the first coil 1152a may be positioned in the first housing hole 1121a of the first housing side portion 1121 as described above. In addition, the second coil 1152b may be positioned to face the second magnet 1151b. Therefore, the second coil 1152b may be positioned in the second housing hole 1122a of the second housing side portion 1122 as described above.

The second camera actuator according to the embodiment may control the mover 1130 to rotate in the first axis (X-axis direction) or the second axis (Y-axis direction) by the electromagnetic force between the driving magnet 1151 and the driving coil 1152, thereby minimizing the occurrence of a decentering or tilting phenomenon and providing the best optical characteristics upon implementing an OIS.

In addition, according to the embodiment, it is possible to provide an ultra-slim and ultra-small camera actuator and the camera module including the same by implementing the OIS through the tilting guide part 1141 of the rotating unit 1140 disposed between the first housing 1120 and the mover 1130 to resolve the size limitation of the actuator.

The first board part 1154 may include a first board side portion 1154a, a second board side portion 1154b, and a third board side portion 1154c. The first board side portion 1154a corresponds to a second sub-board to be described below. The second board side portion 1154b corresponds to a third sub-board to be described below. In addition, the third board side portion 1154c corresponds to a first sub-board to be described below.

The first board side portion 1154a and the second board side portion 1154b may be disposed to face each other. In addition, the third board side portion 1154c may be positioned between the first board side portion 1154a and the second board side portion 1154b.

In addition, the first board side portion 1154a may be positioned between the first housing side portion and the shield can, and the second board side portion 1154b may be positioned between the second housing side portion and the shield can. In addition, the third board side portion 1154c may be positioned between the third housing side portion and the shield can and may be a lower surface of the first board part 1154.

The first board side portion 1154a may be coupled to and electrically connected to the first coil 1152a. In addition, the first board side portion 1154a may be coupled to and electrically connected to a first Hall sensor 1153a.

The second board side portion 1154b may be coupled to and electrically connected to the second coil 1152b. It should be understood that the second board side portion 1154b may also be coupled to and electrically connected to the first Hall sensor.

The third board side portion 1154c may be coupled to and electrically connected to the third coil 1152c. In addition, the third board side portion 1154c may be coupled to and electrically connected to a second Hall sensor 1153b.

The yoke part 1155 may include a third yoke 1155a, a fourth yoke 1155b, and a fifth yoke 1155c. The third yoke 1155a may be positioned in the first seating groove and coupled to the first magnet 1151a. In addition, the fourth yoke 1155b may be positioned in the second seating groove and coupled to the second magnet 1151b. In addition, the fifth yoke 1155c may be positioned in the third seating groove and coupled to the third magnet 1151c. The third to fifth yokes 1155a to 1155c allow the first to the third magnets 1151a to 1151c to be easily seated in the first to third seating grooves and coupled to the housing.

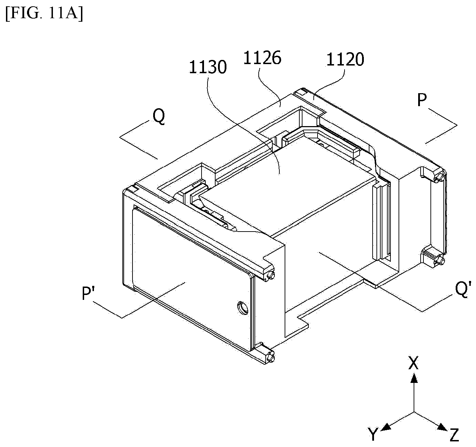

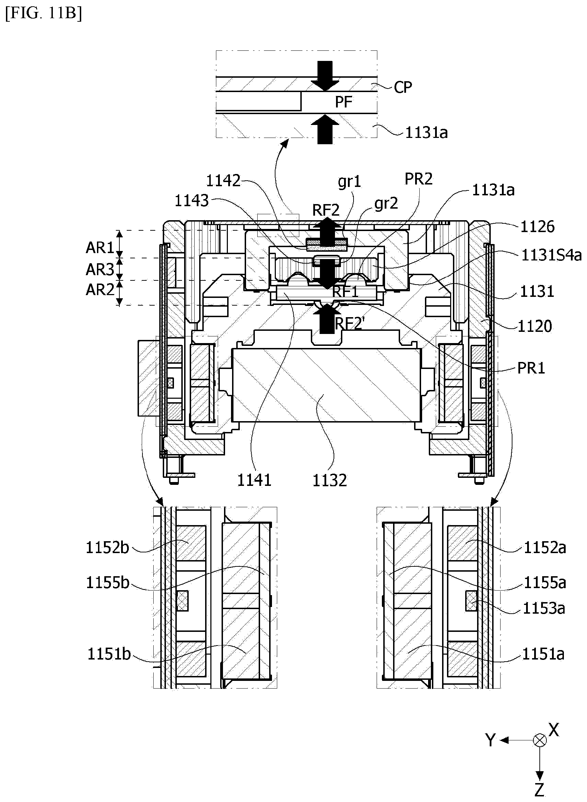

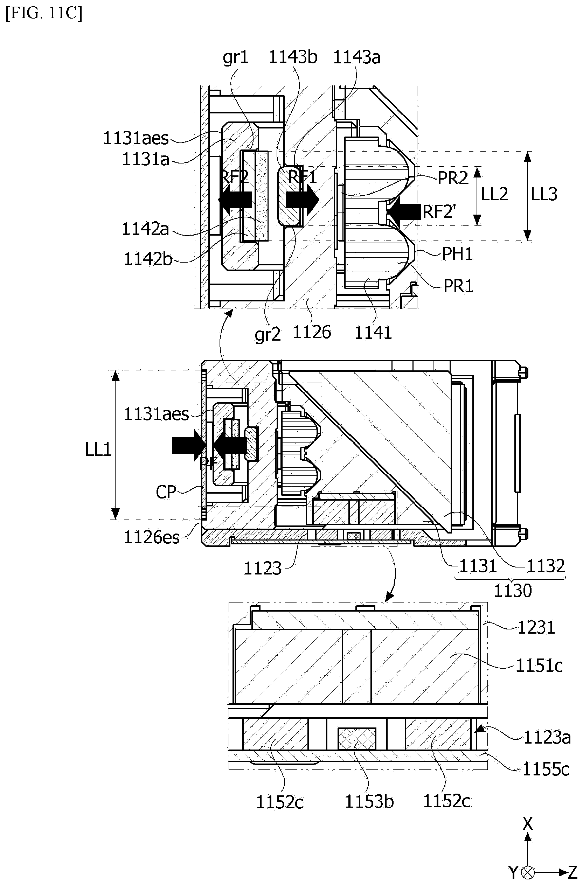

FIG. 11A is a perspective view of the first camera actuator according to the embodiment, FIG. 11B is a view of the first camera actuator along line P-P' in FIG. 11A, and FIG. 11C is a view of the first camera actuator along line Q-Q' in FIG. 11A.

Referring to FIGS. 11A to 11C, the first coil 1152a may be positioned on the first housing side portion 1121, and the first magnet 1151a may be positioned on the first holder outer surface 1131S1 of the holder 1131. Therefore, the first coil 1152a and the first magnet 1151a may be positioned to face each other. At least a part of the first magnet 1151a may overlap the first coil 1152a in the second direction (Y-axis direction).

In addition, the second coil 1152b may be positioned on the second housing side portion 1122, and the second magnet 1151b may be positioned on the second holder outer surface 1131S2 of the holder 1131. Therefore, the second coil 1152b and the second magnet 1151b may be positioned to face each other. At least a part of the second magnet 1151b may overlap the second coil 1152b in the second direction (Y-axis direction).

In addition, the first coil 1152a and the second coil 1152b may overlap in the second direction (Y-axis direction), and the first magnet 1151a and the second magnet 1151b may overlap in the second direction (Y-axis direction).

With this configuration, the electromagnetic force applied to the outer surfaces of the holder (the first holder outer surface and the second holder outer surface) may be positioned on an axis parallel to the second direction (Y-axis direction), and thus the X-axis tilting can accurately and precisely performed.

In addition, the second protrusions PR2a and PR2b of the tilting guide part 1141 may be in contact with the first member 1126 of the first housing 1120. The second protrusion PR2 may be seated in the second protrusion groove PH2 formed in one side surface of the first member 1126. In addition, when the X-axis tilting is performed, the second protrusions PR2a and PR2b may be a reference axis (or rotation axes) of the tilting. Therefore, the tilting guide part 1141 and the mover 1130 may move in the second direction.

In addition, as described above, the first Hall sensor 1153a may be positioned outside to be electrically connected and coupled to the first board part 1154. However, the present disclosure is not limited to this position.

In addition, the third coil 1152c may be positioned on the third housing side portion 1123, and the third magnet 1151c may be positioned on the third holder outer surface 1131S3 of the holder 1131. At least a part of the third coil 1152c and the third magnet 1151c may overlap in the first direction (X-axis direction). Therefore, a strength of the electromagnetic force between the third coil 1152c and the third magnet 1151c may be easily controlled.

As described above, the tilting guide part 1141 may be positioned on the fourth holder outer surface 1131S4 of the holder 1131. In addition, the tilting guide part 1141 may be seated in the fourth seating groove 1131S4a of the fourth holder outer surface. As described above, the fourth seating groove 1131S4a may include the first region AR1, the second region AR2, and the third region AR3.

The second member 1131a may be disposed in the first region AR1, and the second member 1131a may include the first groove gr1 formed on the inner surface of the second member 1131a. In addition, the second magnetic part 1142 may be disposed in the first groove gr1 as described above, and a repulsive force RF2 generated by the second magnetic part 1142 may be transmitted to the fourth seating groove 1131S4a of the holder 1131 through the second member 1131a (RF2'). Therefore, the holder 1131 may apply a force to the tilting guide part 1141 in the same direction as the repulsive force RF2 generated by the second magnetic part 1142.

The first member 1126 may be disposed in the second region AR2. The first member 1126 may include the second groove gr2 facing the first groove gr1. In addition, the first member 1126 may include the second protrusion groove PH2 disposed on a surface corresponding to the second groove gr2. In addition, a repulsive force RF1 generated by the first magnetic part 1143 may be applied to the first member 1126. Therefore, the first member 1126 and the second member 1131a may press the tilting guide part 1141 disposed between the first member 1126 and the holder 1131 through the generated repulsive forces RF1 and RF2'. Therefore, even after the holder tilts with respect to the X-axis or the Y-axis by a current applied to the first and second coils or the third coil 1152c, the coupling (or the positions) between the holder 1131, the first housing 1120, and the tilting guide part 1141 may be maintained.

The tilting guide part 1141 may be disposed in the third region AR3. As described above, the tilting guide part 1141 may include the first protrusion PR1 and the second protrusion PR2. In this case, the first protrusion PR1 and the second protrusion PR2 may also be respectively disposed on the first surface 1141a and the second surface 1141b of the base BS. As described above, even in another embodiment to be described below, the first protrusion PR1 and the second protrusion PR2 may be variously positioned on a surface facing the base.

The first protrusion groove PH1 may be positioned in the fourth seating groove 1131S4a. In addition, the first protrusion PR1 of the tilting guide part 1141 may be accommodated in the first protrusion groove PH1. Therefore, the first protrusion PR1 may be in contact with the first protrusion groove PH1. The maximum diameter of the first protrusion groove PH1 may correspond to the maximum diameter of the first protrusion PR1. This may be applied to the second protrusion groove PH2 and the second protrusion PR2 in the same manner. With this configuration, the first axis tilting may be easily performed based on the first protrusion PR1, the second axis tilting may be easily performed based on the second protrusion PR2, and radii of the tilting can be improved.

In addition, the tilting guide part 1141 may be disposed side by side with the second member 1131a and the first member 1126 in the third direction (Z-axis direction), and thus the tilting guide part 1141 may overlap the optical member 1132 in the first direction (X-axis direction). More specifically, in the embodiment, the first protrusion PR1 may overlap the optical member 1132 in the first direction (X-axis direction). Furthermore, at least a part of the first protrusion PR1 may overlap the third coil 1152c or the third magnet 1151c in the first direction (X-axis direction). That is, in the camera actuator according to the embodiment, each protrusion, which is a central axis of the tilting, may be positioned adjacent to the center of gravity of the mover 1130. Therefore, the tilting guide part may be positioned adjacent to the center of gravity of the holder. Therefore, the camera actuator according to the embodiment can minimize a moment value for tilting the holder and also minimize the consumption of the current applied to the coil or the like to tilt the holder, thereby improving power consumption and device reliability.

In addition, the second magnetic part 1142 and the first magnetic part 1143 may not overlap the third coil 1152c or the optical member 1132 in the first direction (X-axis direction). That is, in the embodiment, the second magnetic part 1142 and the first magnetic part 1143 may be disposed to be spaced apart from the third coil 1152c or the optical member 1132 in the third direction (Z-axis direction). Therefore, it is possible to minimize the magnetic force transmitted from the second magnetic part 1142 and the first magnetic part 1143 to the third coil 1152c. Therefore, the camera actuator according to the embodiment may easily perform vertical driving (Y-axis tilting) and can minimize power consumption.

Furthermore, as described above, the second Hall sensor 1153b positioned at an inner side of the third coil 1152c may detect a change in magnetic flux, and thus position sensing between the third magnet 1151c and the second Hall sensor 1153b may be performed. In this case, an offset voltage of the second Hall sensor 1153b may be changed depending on the influence of the magnetic field generated from the second magnetic part 1142 and the first magnetic part 1143.

The first camera actuator according to the embodiment includes the second member 1131a, the second magnetic part 1142, the first magnetic part 1143, the first member 1126, and the tilting guide part 1141, and the holder 1131, which may be sequentially arranged based on the outermost side surface thereof. However, since the second magnetic part is positioned in the second member and the first magnetic part is positioned in the first member, the second member, the first member, the tilting guide part, and the holder may be sequentially arranged.

In addition, in an embodiment, distances of the second magnetic part 1142 and the first magnetic part 1143 spaced apart from the holder 1131 (or the optical member 1132) in the third direction may be greater than distances with the tilting guide part 1141. Therefore, the second Hall sensor 1153b under the holder 1131 may also be disposed to be spaced a predetermined distance from the second magnetic part 1142 and the first magnetic part 1143. Therefore, it is possible to minimize the influence of the magnetic field generated by the second magnetic part 1142 and the first magnetic part 1143 on the second Hall sensor 1153b, thereby preventing the Hall voltage from being concentrated to a positive or negative value and saturated. That is, this configuration may allow a Hall electrode to have a range in which Hall calibration may be performed. Furthermore, a temperature is also affected by the electrode of the Hall sensor, and a resolution of a camera lens varies depending on the temperature, but in the embodiment, it is possible to prevent the case in which the Hall voltage is concentrated to the positive or negative value to compensate for the resolution of the lens correspondingly, thereby easily preventing a reduction in the resolution.

In addition, a circuit for compensating for the offset with respect to the output (i.e., the Hall voltage) of the second Hall sensor 1153b can be easily designed.

In addition, according to the embodiment, some regions of the tilting guide part 1141 may be positioned at the outer side of the fourth holder outer surface with respect to the fourth holder outer surface of the holder 1131.

The tilting guide part 1141 may be seated in the fourth seating groove 1131S4a based on the base, excluding the first protrusion PR1 and the second protrusion PR2. That is, a length of the base in the third direction (Z-axis direction) may be smaller than a length of the fourth seating groove 1131S4a in the third direction (Z-axis direction). With this configuration, it is possible to realize miniaturization.

In addition, a maximum length of the tilting guide part 1141 in the third direction (Z-axis direction) may be greater than the length of the fourth seating groove 1131S4a in the third direction (Z-axis direction). Therefore, as described above, an end of the second protrusion PR2 may be positioned between the fourth holder outer surface and the first member 1126. That is, at least a part of the second protrusion PR2 may be positioned in a direction opposite to the third direction (Z-axis direction) than the holder 1131. That is, the holder 1131 may be spaced a predetermined distance from the end (portion in contact with the second protrusion groove) of the second protrusion PR2 in the third direction (Z-axis direction).

In addition, a front surface 1131aes of the second member 1131a according to the embodiment may be spaced apart from a front surface 1126es of the first member 1126. In particular, the front surface 1131aes of the second member 1131a according to the embodiment may be positioned in the third direction (Z-axis direction) from the front surface 1126es of the first member 1126. Alternatively, the front surface 1131aes of the second member 1131a according to the embodiment may be position at an inner side of the front surface 1126es of the first member 1126. To this end, the first member 1126 may have an inward extending and bent structure. In addition, some regions of the second member 1131a may be positioned in a groove formed by the above-described extending and bent structure of the first member 1126.

With this configuration, since the second member 1131a is positioned at the inner side of the first member 1126, it is possible to increase space efficiency and realize miniaturization. Furthermore, even when the driving (tilting or rotation of the mover 1130) by the electromagnetic force is performed, the second member 1131a does not protrude to the outside of the first member 1126, and thus it is possible to block the contact with nearby devices. Therefore, it is possible to improve the reliability.

In addition, a predetermined separation space may be present between the second magnetic part 1142 and the first magnetic part 1143. That is, the second magnetic part 1142 and the first magnetic part 1143 may face each other with the same polarity.

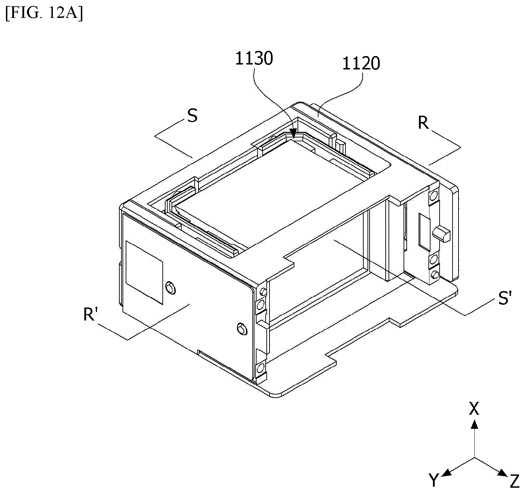

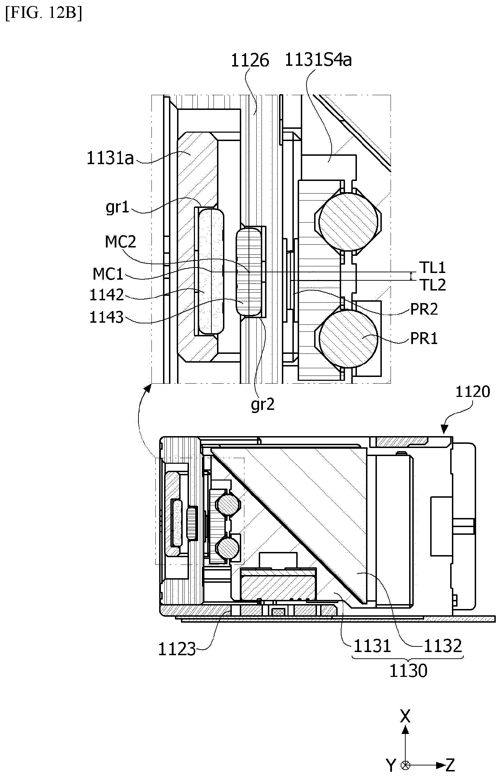

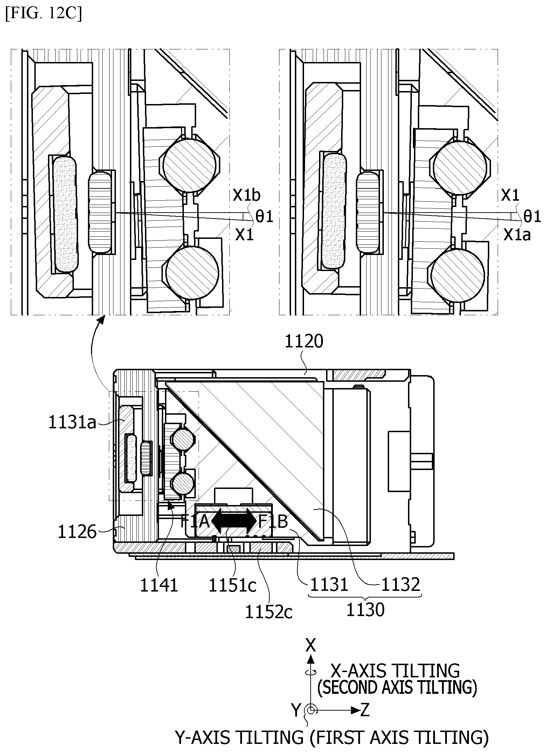

FIG. 12A is a perspective view of the first camera actuator according to the embodiment, FIG. 12B is a view of the first camera actuator along line S-S' in FIG. 12A, and FIG. 12C is an exemplary view showing movement of the first camera actuator illustrated in FIG. 12B.

Referring to FIGS. 12A to 12C, the Y-axis tilting may be performed by the first camera actuator according to the embodiment. That is, an OIS can be implemented by rotating the first camera actuator in the first direction (X-axis direction).

In an embodiment, the third magnet 1151c disposed under the holder 1131 may generate the electromagnetic force with the third coil 1152c to tilt or rotate the mover 1130 with respect to the second direction (Y-axis direction).

Specifically, the repulsive force between the second magnetic part 1142 and the first magnetic part 1143 may be transmitted to the second member 1131a and the first member 1126 and finally transmitted to the tilting guide part 1141 disposed between the first member 1126 and the holder 1131. Therefore, the tilting guide part 1141 may be pressed by the mover 1130 and the first housing 1120 with the above-described repulsive force.

In addition, the second protrusion PR2 may be supported by the first member 1126. In this case, in an embodiment, the tilting guide part 1141 may rotate or tilt based on the second protrusion PR2 protruding toward the first member 1126, which is the reference axis (or the rotation axis), that is, the second direction (Y-axis direction). That is, the tilting guide part 1141 may rotate or tilt based on the second protrusion PR2 protruding toward the first member 1126 in the first direction (X-axis direction), which is the reference axis (or the rotation axis).

For example, an OIS can be implemented by rotating (X1→X1a) the mover 1130 at a first angle θ1 in the X-axis direction by first electromagnetic forces F1A and F1B between the third magnet 1151c disposed in the third seating groove and the third coil 1152c disposed on the third board side portion.

Conversely, an OIS can be implemented by rotating (X1→X1b) the mover 130 at a first angle θ1 in a direction opposite to the X-axis direction by the first electromagnetic forces F1A and F1B between the third magnet 1151c disposed in the third seating groove and the third coil 1152c disposed on the third board side portion.

The first angle θ1 may be in the range of ±1° to 3°. However, the present disclosure is not limited thereto.

Hereinafter, in the first camera actuators according to various embodiments, the electromagnetic force may move the mover by generating a force in the described direction or move the mover in the described direction even when a force is generated in another direction. That is, the described direction of the electromagnetic force refers to a direction of the force generated by the magnet and the coil to move the mover. For example, the first electromagnetic forces F1A and F1B may act in a third direction or in a direction opposite to the third direction.

In addition, a center MC1 of the second magnetic part 1142 and a center MC2 of the first magnetic part 1143 may be disposed side by side in the third direction (Z-axis direction). That is, a center line TL1 connecting the center MC1 of the second magnetic part 1142 and the center MC2 of the first magnetic part 1143 may be parallel to the third direction (Z-axis direction).

In addition, a bisector TL2 that bisects the second protrusion PR2 and corresponds to the third direction (Z-axis direction) may be parallel to the center line TL1 (or the bisector). That is, the bisector TL2 may be a line that bisects the second protrusion PR2 in the first direction (X-axis direction), and a plurality of bisectors TL2 may be formed.

In an embodiment, the bisector TL2 may be disposed to be spaced apart from the center line TL1 in the first direction (X-axis direction). The bisector TL2 may be positioned above the center line TL1. With this configuration, since the separation distance between the third coil 1152c and the third magnet 1151c may be increased, the holder may more accurately perform two axes tilting. Furthermore, when a current is not applied to the coil, the position of the holder can be equally held.

More specifically, since the center MC1 of the second magnetic part 1142 and the center MC2 of the first magnetic part 1143 are spaced apart from the bisector TL2 in the first direction (X-axis direction), the force (e.g., the repulsive force) between the second magnetic part 1142 and the first magnetic part 1143 may act at a distance spaced apart from the bisector TL2 corresponding to the optical axis in the first direction (X-axis direction). In addition, a momentum is generated in the mover 1130 by this force. However, when the center MC1 of the second magnetic part 1142 and the center MC2 of the first magnetic part 1143 are positioned on the bisector TL2, there is a problem that during the execution of the calibration, the positions of the tilting guide part and the second magnetic part 1142 are not held after tilting. That is, in the camera actuator according to the embodiment, since the center MC1 of the second magnetic part 1142 and the center MC2 of the first magnetic part 1143 are not disposed on the bisector TL2, the positions of the tilting guide part and the second magnetic part 1142 may be maintained after tilting or rotating.

In another embodiment, the center MC1 of the second magnetic part 1142 and the center MC2 of the first magnetic part 1143 may be disposed to be spaced apart from each other in the first direction (X-axis direction).

**In** addition, the center MC1 of the second magnetic part 1142 and the center MC2 of the first magnetic part 1143 may not be positioned on the bisector TL2. For example, the center MC1 of the second magnetic part 1142 and the center MC2 of the first magnetic part 1143 may be positioned above the bisector TL2.

Therefore, since the separation distance between the third coil 1152c and the third magnet 1151c increases, the holder may more accurately perform two axes tilting. Furthermore, when a current is not applied to the coil, the position of the holder can be equally held.

**In** addition, the second magnetic part 1142 and the first magnetic part 1143 may have different lengths in the first direction (X-axis direction).

**In** an embodiment, an area of the second magnetic part 1142 coupled to the second member 1131a and tilted together with the mover 1130 may be greater than an area of the first magnetic part 1143. For example, a length of the second magnetic part 1142 in the first direction (X-axis direction) may be greater than a length of the first magnetic part 1143 in the first direction (X-axis direction). **In** addition, a length of the second magnetic part 1142 in the second direction (Y-axis direction) may be greater than a length of the first magnetic part 1143 in the second direction (Y-axis direction). **In** addition, the first magnetic part 1143 may be positioned in a virtual straight line extending both ends of the second magnetic part 1142 in the third direction.

With this configuration, even when the magnetic part at one side (e.g., the second magnetic part) tilts upon tilting or rotating, it is possible to easily prevent the generation of forces other than the vertical force due to the tilting. That is, even when the second magnetic part vertically tilts together with the mover 1130, the second magnetic part may not receive a force (e.g., a repulsive force or an attractive force) against the tilting from the first magnetic part 1143. Therefore, it is possible to increase driving efficiency.

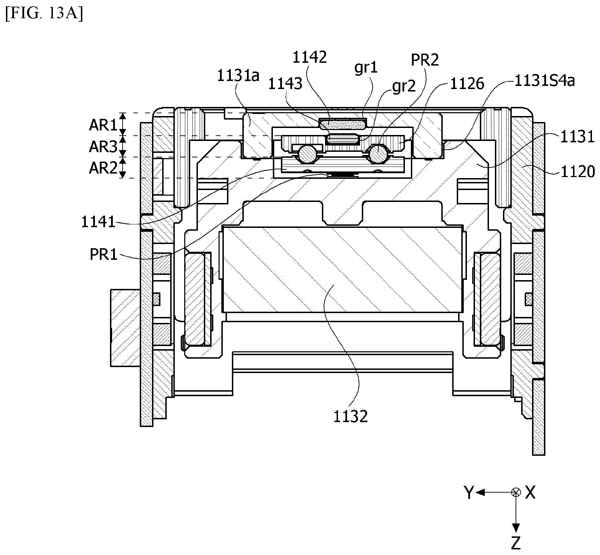

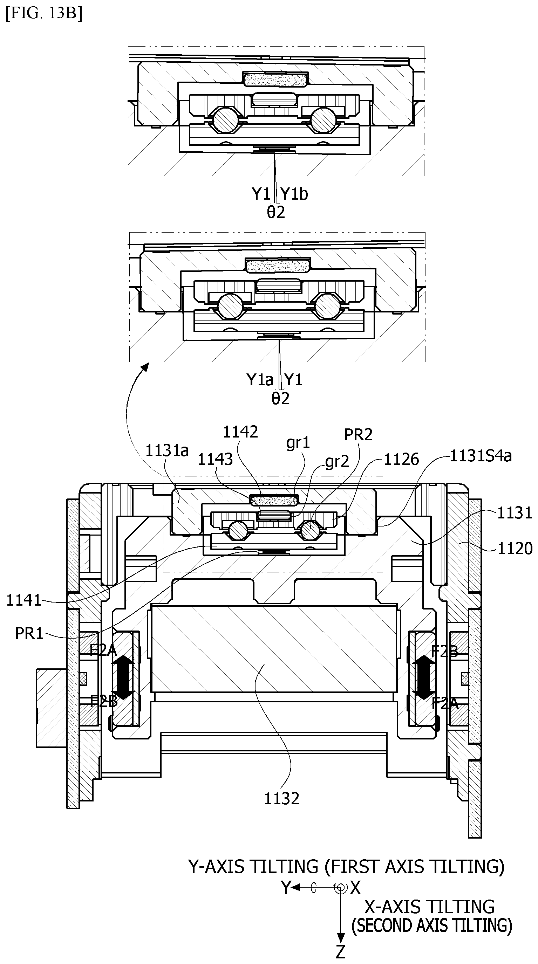

FIG. 13A is a view of the first camera actuator along line R-R' in FIG. 12A, and FIG. 13B is an exemplary view of movement of the first camera actuator illustrated in FIG. 13A.

Referring to FIGS. 13A and 13B, an X-axis tilting may be performed. That is, an OIS can be implemented by tilting or rotating the mover 1130 in the Y-axis direction.

In an embodiment, the first magnet 1151a and the second magnet 1151b disposed on the holder 1131 may form the electromagnetic force with the first coil 1152a and the second coil 1152b, respectively, and tilt or rotate the tilting guide part 1141 and the mover 1130 with respect to the first direction (X-axis direction).

Specifically, the repulsive force between the second magnetic part 1142 and the first magnetic part 1143 may be transmitted to the first member 1126 and the holder 1131 and finally transmitted to the tilting guide part 1141 disposed between the holder 1131 and the first member 1126. Therefore, the tilting guide part 1141 may be pressed by the mover 1130 and the first housing 1120 with the above-described repulsive force.

In addition, the first-first protrusion PR1a and the first-second protrusion PR1b may be spaced apart from each other in the first direction (X-axis direction) and supported by the first protrusion groove PH1 formed in the fourth seating groove 1131S4a of the holder 1131. In addition, in an embodiment, the tilting guide part 1141 may rotate or tilt based on the first protrusion PR1 protruding toward the holder 1131 (e.g., in the third direction), which is the reference axis (or the rotation axis), that is, the first direction (X-axis direction).

For example, an OIS can be implemented by rotating (Y1→Y1a) the mover 1130 at a second angle θ2 in the Y-axis direction by second electromagnetic forces F2A and F2B between the first and second magnets 1151a and 1151b disposed in the first seating groove and the first and second coils 1152a and 1152b disposed on the first and second board side portions. In addition, an OIS can be implemented by rotating (Y1→Y1b) the mover 1130 at the second angle θ2 in the Y-axis direction by the second electromagnetic forces F2A and F2B between the first and second magnets 1151a and 1151b disposed in the first seating groove and the first and second coils 1152a and 1152b disposed on the first and second board side portions. The second angle θ2 may be in the range of ±1° to ±3°. However, the present disclosure is not limited thereto.

In addition, as described above, the electromagnetic force generated by the first and second magnets 1151a and 1151b and the first and second coils 1152a and 1152b may act in the third direction or in a direction opposite to the third direction. For example, the electromagnetic force may be generated at a left side of the mover 1130 in the third direction (Z-axis direction) and act at a right side of the mover 1130 in the direction opposite to the third direction (Z-axis direction). Therefore, the mover 1130 may rotate with respect to the first direction. Alternatively, the mover 130 may move in the second direction.

As described above, the second camera actuator according to the embodiment may control the mover 1130 to rotate along the first axis (X-axis direction) or the second axis (Y-axis direction) by the electromagnetic force between the driving magnet in the holder and the driving coil disposed in the first housing, thereby minimizing the occurrence of a decentering or tilting phenomenon and providing the best optical characteristics upon implementing the OIS. In addition, as described above, "Y-axis tilting" means rotating or tilting in the first direction (X-axis direction), and "X-axis tilting" means rotating or tilting in the second direction (Y-axis direction).

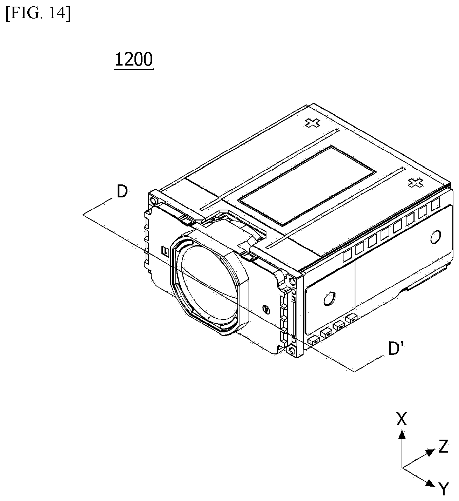

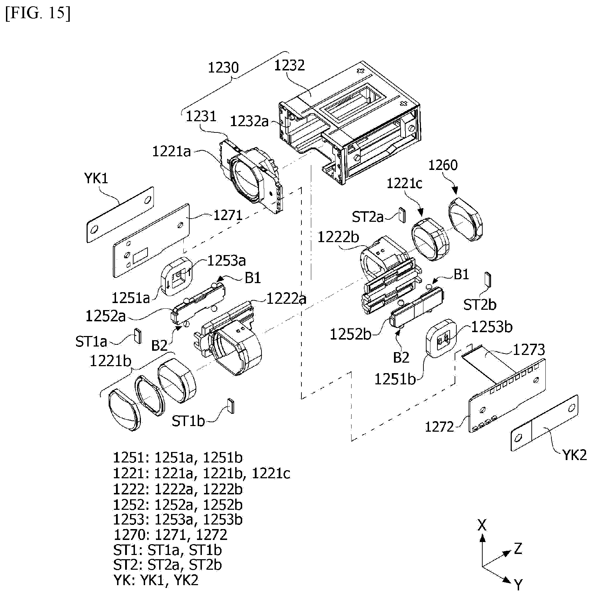

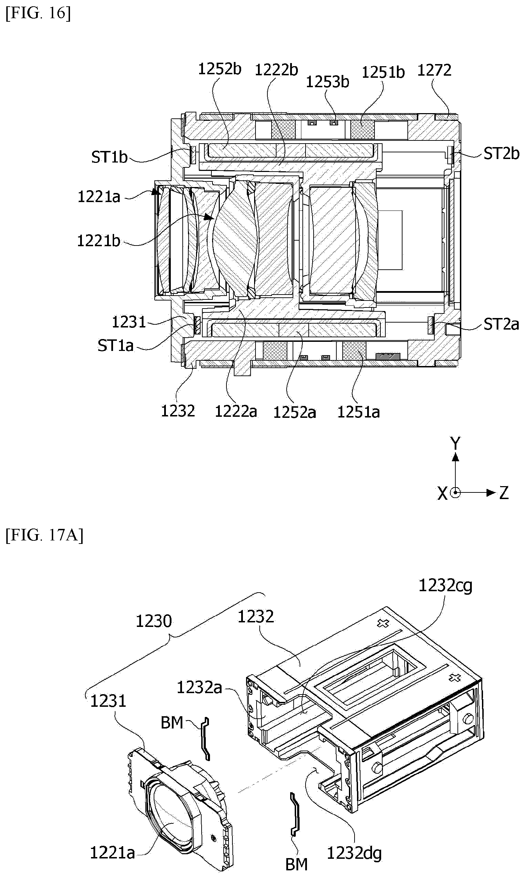

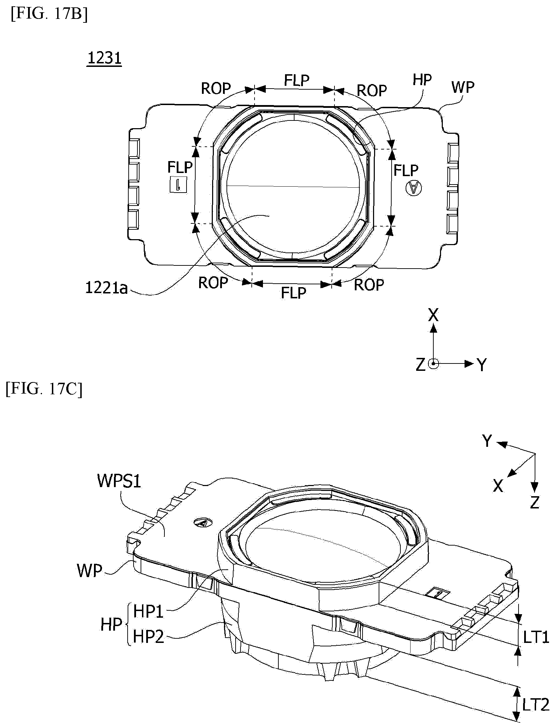

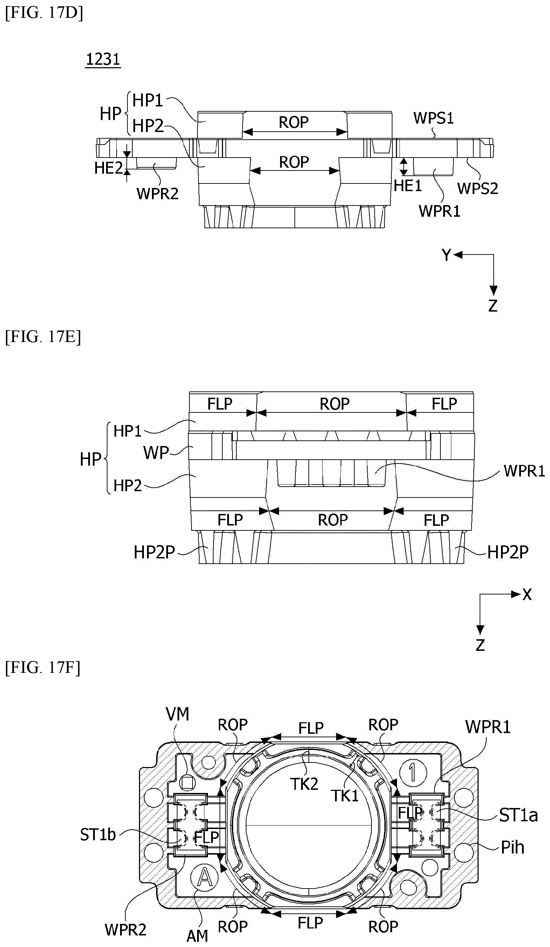

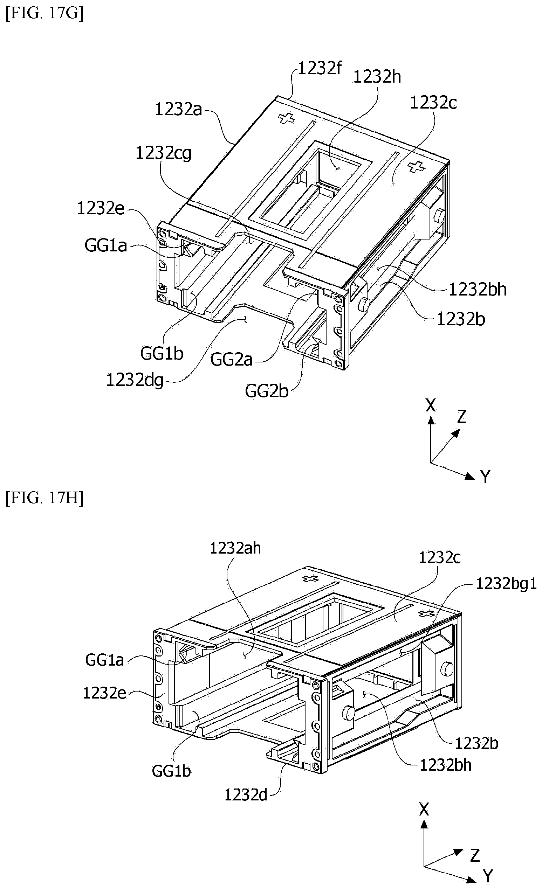

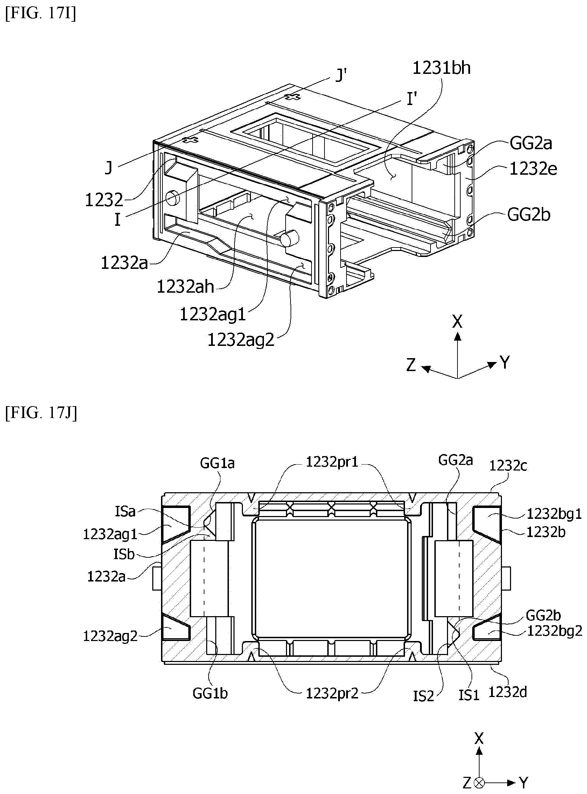

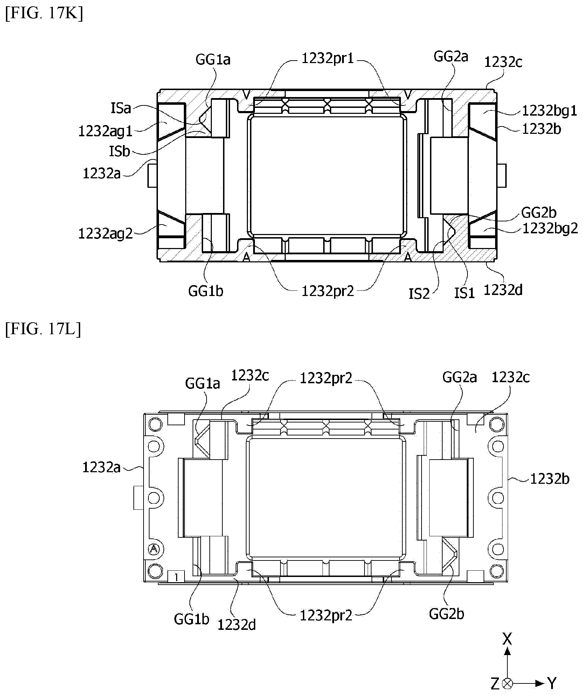

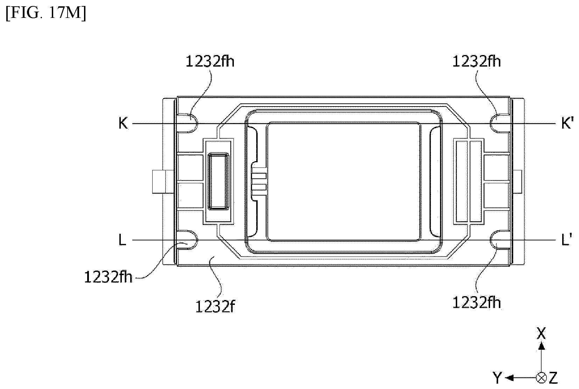

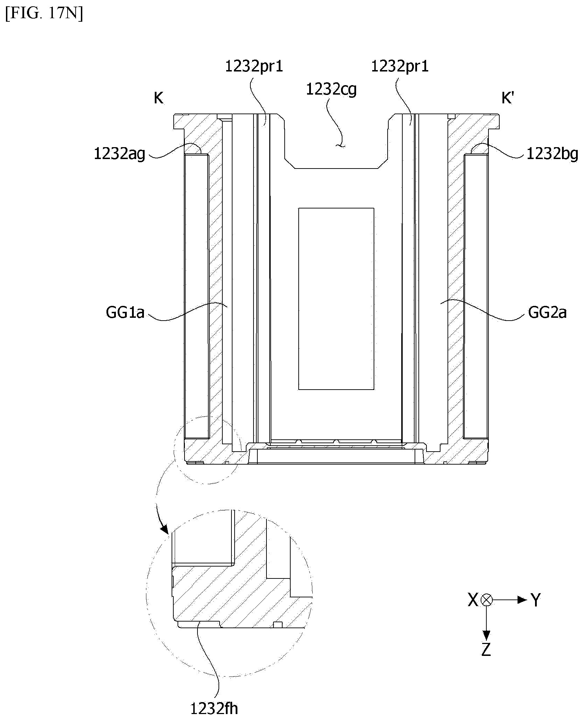

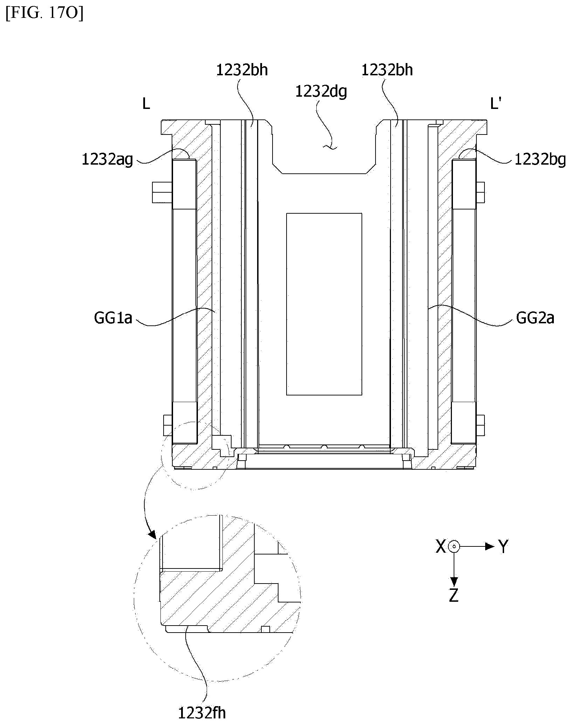

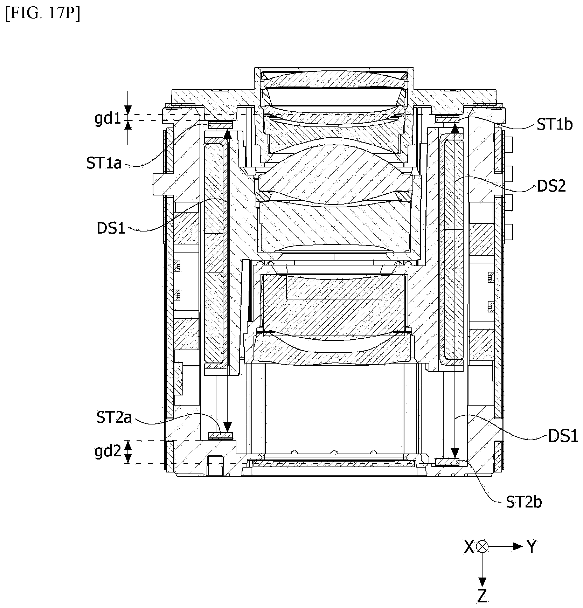

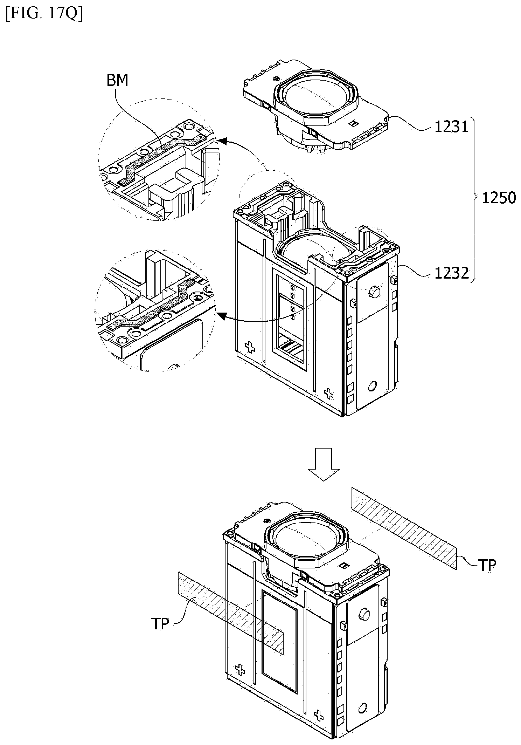

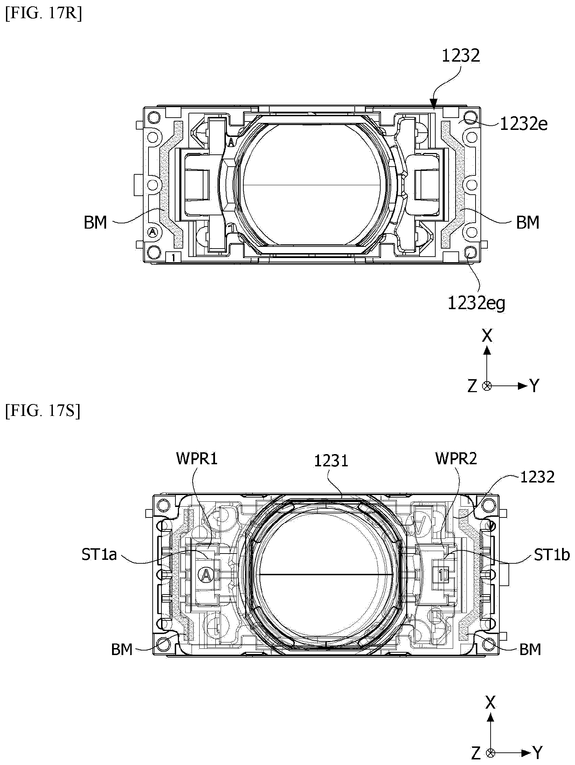

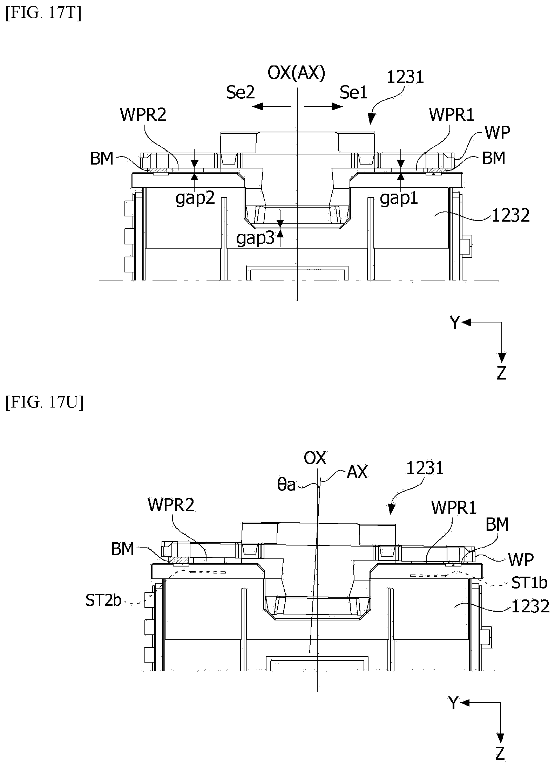

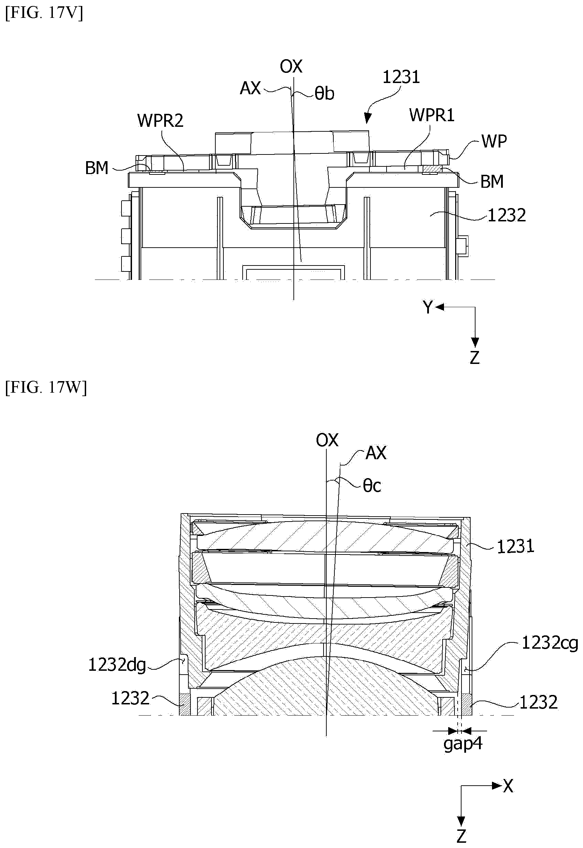

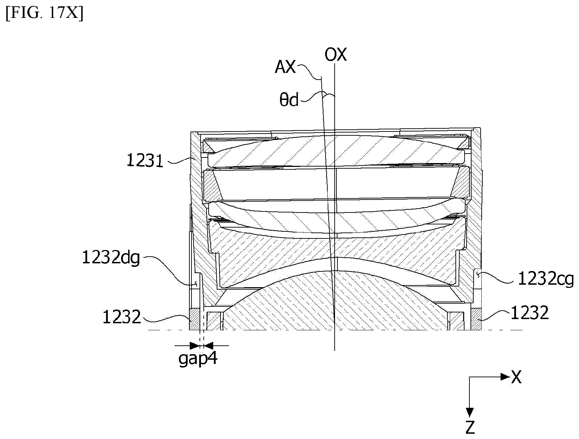

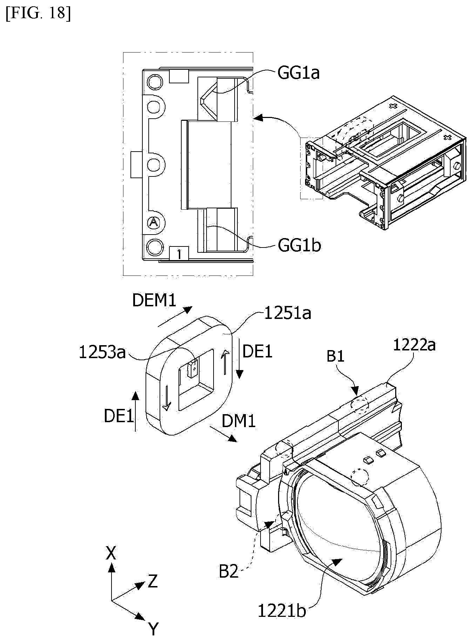

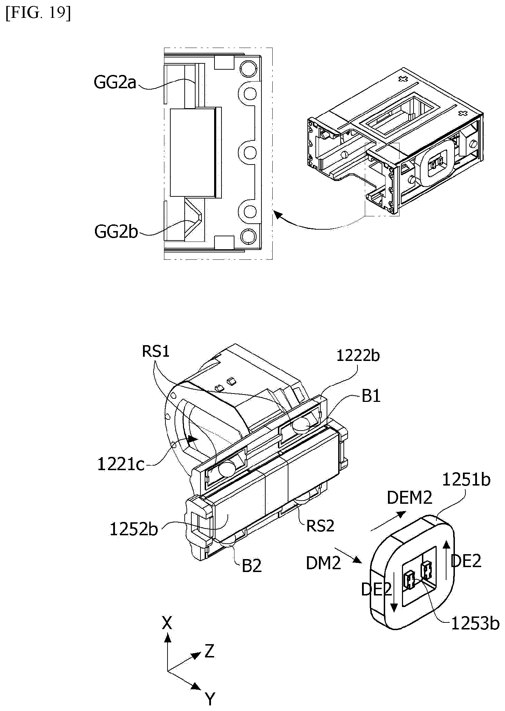

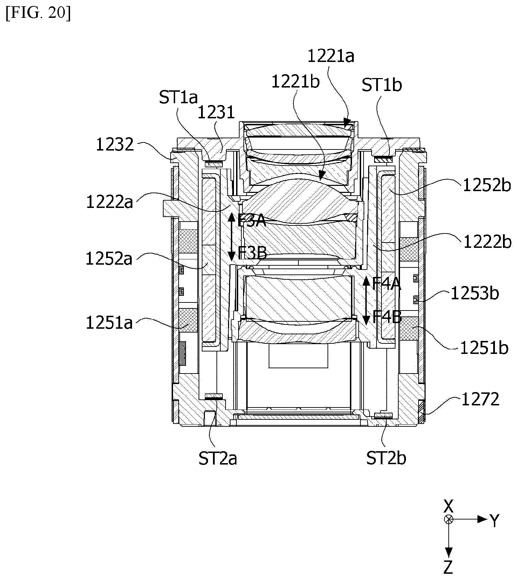

FIG. 14 is a perspective view of a second camera actuator according to an embodiment, FIG. 15 is an exploded perspective view of the second camera actuator according to the embodiment, FIG. 16 is a view of the second camera actuator along line D-D' in FIG. 14, FIG. 17A is a perspective view of a second housing according to the embodiment, FIG. 17B is a top view of a second-first housing according to the embodiment, FIG. 17C is a perspective view of the second-first housing according to the embodiment, FIG. 17D is one side view illustrating the second-first housing according to the embodiment, FIG. 17E is another side view illustrating the second-first housing according to the embodiment, FIG. 17F is a bottom view of the second-first housing according to the embodiment, FIGS. 17G, 17H, and 17I are perspective views of the second housing in the second camera actuator according to the embodiment, FIG. 17J is a view of the second housing along line I-I' in FIG. 17I, FIG. 17K is a view of the second housing along line J-J' in FIG. 17I, FIG. 17L is one side view illustrating the second housing in the second camera actuator according to the embodiment, FIG. 17M is another side view illustrating the second housing in the second camera actuator according to the embodiment, FIG. 17N is a view of the second housing along line K-K' in FIG. 17G, FIG. 17O is a view of the second housing along line L-L' in FIG. 17G, FIG. 17P is a cross-sectional view of the second camera actuator according to the embodiment, FIG. 17Q is a view for describing assembling of the second housing according to the embodiment, FIG. 17R is a top view of the second-second housing and a coupling member according to the embodiment, FIG. 17S is a view illustrating the second-first housing, the second-second housing, and the coupling member according to the embodiment, FIGS. 17T, 17U, 17V, 17W, and 17X are side views illustrating various examples of the second-second housing and the coupling member according to the embodiment, FIGS. 18 and 19 are views for describing each driving operation of a lens assembly according to an embodiment, and FIG. 20 is a view for describing driving of the second camera actuator according to the embodiment.

Referring to FIGS. 14 and 16, the second camera actuator 1200 according to the embodiment may include a lens unit 1220, a second housing 1230, a second driving unit 1250, a rear end optical unit 1260, a second board unit 1270, a bonding member 1280, a stopper unit ST, and a yoke unit YK. Furthermore, the second camera actuator 1200 may further include a second shield can (not illustrated), an elastic unit (not illustrated), and a bonding member (not illustrated).

The second shield can (not illustrated) may be positioned in one region (e.g., an outermost side) of the second camera actuator 1200 and positioned to surround the components (the lens unit 1220, the second housing 1230, the second driving unit 1250, the rear end optical unit 1260, the second board unit 1270, and an image sensor) to be describe below.

Furthermore, the second camera actuator 1200 may be a separate member from an image sensor and a base member which will be described below, or a concept including the image sensor and the base member. Hereinafter, the main board or the circuit board 1300 that is separated from the second camera actuator 1200 will be described as including the image sensor and the base member.

The second shield can (not illustrated) can block or reduce electromagnetic waves generated from the outside. Therefore, it is possible to reduce the occurrence of malfunction in the second driving unit 1250.

The lens unit 1220 may be positioned in the second shield can (not illustrated). The lens unit 1220 may move in the third direction (Z-axis direction or optical axis direction). Therefore, the above-described AF function and zooming function can be performed.

**In** addition, the lens unit 1220 may be positioned in the second housing 1230. Therefore, at least a part of the lens unit 1220 may move in the second housing 1230 in the optical axis direction or the third direction (Z-axis direction). Furthermore, the second housing 1230 (or the second-second housing) may further include a foreign substance prevention member disposed on the outer surface of the corresponding side portion in the first direction (X-axis direction). **In** order for the foreign substance prevention member to be seated in the second housing 1230, the second housing 1230 may further include an additional groove. Therefore, it is possible to improve durability and reliability of the second camera actuator. Furthermore, the foreign substance prevention member can suppress the separation of the second-first housing.

Specifically, the lens unit 1220 may include a lens group 1221 and a moving assembly 1222.

First, the lens group 1221 may include at least one lens. **In** addition, although a plurality of lens groups 1221 may be formed, hereinafter, description will be made based on one lens group.

The lens group 1221 may be coupled to the moving assembly 1222 to move in the third direction (Z-axis direction) by an electromagnetic force generated by the fourth magnet 1252a and the fifth magnet 1252b coupled to the moving assembly 1222.

**In** an embodiment, the lens group 1221 may include a first lens group 1221a, a second lens group 1221b, and a third lens group 1221c. The first lens group 1221a, the second lens group 1221b, and the third lens group 1221c may be sequentially arranged in the optical axis direction. Furthermore, the lens group 1221 may further include a fourth lens group 1221d. The fourth lens group 1221d may be disposed at a rear end of the third lens group 1221c.

The first lens group 1221a may be fixedly coupled to a second-first housing. That is, the first lens group 1221a may not move in the optical axis direction.

The second lens group 1221b may be coupled to the first lens assembly 1222a to move in the third direction or the optical axis direction. Magnification adjustment may be performed by moving the first lens assembly 1222a and the second lens group 1221b.

The third lens group 1221c may be coupled to the second lens assembly 1222b to move in the third direction or the optical axis direction. Focus adjustment or auto focusing may be performed by moving the third lens group 1221c.

However, the present disclosure is not limited to the number of lens groups, and the fourth lens group 1221d may not be present, or additional lens groups or the like other than the fourth lens group 1121d may be further disposed.

The moving assembly 1222 may include an open region surrounding the lens group 1221. The moving assembly 1222 is used interchangeably with the lens assembly. **In** addition, the moving assembly 1222 may be coupled to the lens group 1221 by various methods. **In** addition, the moving assembly 1222 may include a groove in a side surface thereof and may be coupled to the fourth magnet 1252a and the fifth magnet 1252b through the groove. A coupling member or the like may be applied to the groove.

**In** addition, the moving assembly 1222 may be coupled to the elastic units (not illustrated) at an upper end and a rear end thereof. Therefore, the moving assembly 1222 may be supported by the elastic units (not illustrated) while moving in the third direction (Z-axis direction). That is, the position of the moving assembly 1222 may be maintained in the third direction (Z-axis direction). The elastic unit (not illustrated) may be formed of various elastic elements such as a leaf spring.

The moving assembly 1222 may be positioned in the second housing 1230 and may include the first lens assembly 1222a and the second lens assembly 1222b.

A region in which the third lens group is seated in the second lens assembly 1222b may be positioned at a rear end of the first lens assembly 1222a. That is, the region in which the third lens group 1221c is seated in the second lens assembly 1222b may be positioned between a region in which the second lens group 1221b is seated in the first lens assembly 1222a and the image sensor.

Each of the first lens assembly 1222a and the second lens assembly 1222b may be seated at an inner side of a second-second housing. For example, a recess in which a ball is disposed in the first lens assembly 1222a may be positioned to face a first side portion. **In** addition, a recess in which a ball is disposed in the second lens assembly 1222b may be positioned to face a second side portion. A detailed description thereof will be given below.

**In** addition, a second driving magnet may be seated on outer surfaces of the first lens assembly 1222a and the second lens assembly 1222b. For example, the fifth magnet 1252b may be seated on the outer surface of the second lens assembly 1222b. The fourth magnet 1252a may be seated on the outer surface of the first lens assembly 1222a.

The second housing 1230 may be disposed between the lens unit 1220 and the second shield can (not illustrated). In addition, the second housing 1230 may be disposed to surround the lens unit 1220.

The second housing 1230 may include the second-first housing 1231 and the second-second housing 1232. The second-first housing 1231 may be coupled to the first lens group 1221a and may also be coupled to the above-described first camera actuator. The second-first housing 1231 may be positioned in front of the second-second housing 1232.

The second-first housing 1231 may be used interchangeably with "first sub-housing" in the second housing. In addition, the second-second housing 1232 may be used interchangeably with "second sub-housing" in the second housing. Furthermore, the second camera actuator or the second housing 1230 may include a coupling member BM (see FIG. 17A) disposed between the first sub-housing and the second sub-housing. A detailed description thereof will be given below.

In addition, the second-second housing 1232 may be positioned at a rear end of the second-first housing 1231. The lens unit 1220 may be seated inside the second-second housing 1232.

A hole may be formed in a side portion of the second housing 1230 (or the second-second housing 1232). A fourth coil 1251a and a fifth coil 1251b may be disposed in the hole. The hole may be positioned to correspond to the above-described groove of the moving assembly 1222.

In an embodiment, the second housing 1230 (in particular, the second-second housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. A second driving coil 1251 may be positioned on the first side portion 1232a and the second side portion 1232b. In addition, the second board unit 1270 may be seated on outer surfaces of the first side portion 1232a and the second side portion 1232b. That is, the first board 1271 may be positioned on the outer surface of the first side portion 1232a, and the second board 1272 may be positioned on the outer surface of the second side portion 1232b.

In addition, as another example, first and second guide grooves facing the recesses (seating grooves in which first and second balls are seated) of the first lens assembly 1222a may be positioned in the first side portion. In addition, first and second guide grooves facing the recess of the second lens assembly 1222b may be positioned in the second side portion. In this case, there may be a structure in which a separate member (e.g., a guide unit) including the first and second guide grooves is coupled to the second-second housing 1232. However, in the embodiment, an integrated structure in which the first and second guide grooves are formed in the second-second housing 1232 will be described. Furthermore, as in another example, the first guide unit and the second guide unit may be positioned to correspond to each other. For example, the first guide unit and the second guide unit may be positioned to face each other with respect to the third direction (Z-axis direction). In addition, the first guide unit and the second guide unit may at least partially overlap each other in the second direction (Y-axis direction).

The first guide unit and the second guide unit may include at least one groove (e.g., a guide groove) or recess. In addition, a first ball B1 or a second ball B2 may be seated in the groove or the recess. Therefore, the first ball B1 or the second ball B2 may move in the guide groove of the first guide unit or the guide groove of the second guide unit in the third direction (Z-axis direction).

Alternatively, the first ball B1 or the second ball B2 may move in the third direction along a rail formed at an inner side of the first side portion 1232a of the second housing 1230 or a rail formed at an inner side of the second side portion 1232b of the second housing 1230.

Therefore, the first lens assembly 1222a and the second lens assembly 1222b may move in the third direction.

According to the embodiment, the first ball B1 may be disposed on an upper portion of the first lens assembly 1222a or the second lens assembly 1222b. In addition, the second ball B2 may be disposed on a lower portion of the first lens assembly 1222a or the second lens assembly 1222b. For example, the first ball B1 may be positioned above the second ball B2. Therefore, at least a part of the first ball B1 may overlap the second ball B2 in the first direction (X-axis direction) depending on a position.

In addition, the second-second housing 1232 may include guide grooves GG1a and GG2a facing a first recess RS1. In addition, the second-second housing 1232 may include guide grooves GG1b and GG2b facing a second recess RS2. The guide grooves GGla and GG2a and the guide grooves GG1b and GG2b may be grooves extending in the third direction (Z-axis direction). In addition, the guide grooves GGla and GG2a and the guide grooves GG1b and GG2b may be grooves having different shapes. For example, the guide grooves GGla and GG2a may be grooves having inclined side surfaces, and the guide grooves GG1b and GG2b may be grooves having side surfaces perpendicular to lower surfaces thereof.

The fourth magnet and the fourth coil may be positioned on the first side portion. **In** addition, the fifth magnet and the fifth coil may be positioned on the second side portion. **In** addition, the fifth magnet 1252b may be positioned to face the fifth coil 1251b. **In** addition, the fourth magnet 1252a may be positioned to face the fourth coil 1251a.

The elastic unit (not illustrated) may include a first elastic member (not illustrated) and a second elastic member (not illustrated). The first elastic member (not illustrated) may be coupled to an upper surface of the moving assembly 1222. The second elastic member (not illustrated) may be coupled to a lower surface of the moving assembly 1222. **In** addition, the first elastic member (not illustrated) and the second elastic member (not illustrated) may be formed of leaf springs as described above. **In** addition, the first elastic member (not illustrated) and the second elastic member (not illustrated) may provide elasticity for moving the moving assembly 1222. However, the present disclosure is not limited to the above-described position, and the elastic unit may be disposed at various positions.

**In** addition, the second driving unit 1250 may provide a driving force for moving the lens unit 1220 in the third direction (Z-axis direction). The second driving unit 1250 may include the second driving coil 1251 and the second driving magnet 1252. Furthermore, the second driving unit 1250 may further include a second Hall sensor part. The second Hall sensor part 1253 may include at least one fourth Hall sensor 1253a and may be positioned at an inner side or an outer side of the second driving coil 1251.

The moving assembly may move in the third direction (Z-axis direction) by the electromagnetic force generated between the second driving coil 1251 and the second driving magnet 1252.

The second driving coil 1251 may include the fourth coil 1251a and the fifth coil 1251b. The fourth coil 1251a and the fifth coil 1251b may be disposed in the holes formed in the side portions of the second housing 1230. **In** addition, the fourth coil 1251a and the fifth coil 1251b may be electrically connected to the second board unit 1270. Therefore, the fourth coil 1251a and the fifth coil 1251b may receive a current or the like through the second board unit 1270.

The second driving magnet 1252 may include the fourth magnet 1252a and the fifth magnet 1252b. The fourth magnet 1252a and the fifth magnet 1252b may be disposed in the above-described groove of the moving assembly 1222 and positioned to correspond to the fourth coil 1251a and the fifth coil 1251b.

The rear end optical unit 1260 may include a lens such as a glass.

The base unit or the base member of the circuit board may be positioned between the lens unit 1220 and the image sensor IS. A component such as a filter may be fixed to the base member. **In** addition, the base member may be disposed to surround the above-described image sensor. With this configuration, since the image sensor is free from foreign substances and the like, it is possible to improve the reliability of the device. However, some drawings below will be described with the above description removed. However, the present disclosure may not be limited to this structure.

In addition, the second camera actuator 1200 may be a zoom actuator and an AF actuator. For example, the second camera actuator 1200 may support one lens or a plurality of lenses and perform at least one of the AF function and the zooming function by moving the lenses according to a predetermined control signal of a controller.

In addition, the second camera actuator may be a fixed zoom or a continuous zoom. For example, the second camera actuator may provide movement of the lens group 1221.

In addition, the second camera actuator may be formed of a plurality of lens assemblies. For example, at least one of a third lens assembly (not illustrated) in addition to the first lens assembly 1222a and the second lens assembly 1222b, and a guide pin (not illustrated) may be disposed in the second camera actuator. In this regard, the above-described contents may be applied. Therefore, the second camera actuator may perform a high-magnification zooming function through the second driving unit. For example, the first lens assembly 1222a and the second lens assembly 1222b may be moving lenses that move through the second driving unit and the guide pin (not illustrated), and the third lens assembly (not illustrated) may be a fixed lens, but the present disclosure is not limited thereto. For example, the third lens assembly (not illustrated) may perform a function of a focator by which light forms an image at a specific position, and the first lens assembly may perform a function of a variator for reforming an image formed by the third lens assembly (not illustrated), which is the focator, at another position. Meanwhile, the first lens assembly may be in a state in which a magnification change is large because a distance to a subject or an image is greatly changed, and thus the first lens assembly, which is the variator, may play an important role in a focal length or magnification change of the optical system. Meanwhile, an imaging point of an image formed by the first lens assembly, which is the variator, may be slightly different depending on a position of the first lens assembly. Therefore, the second lens assembly may perform a position compensation function for the image formed by the variator. For example, the second lens assembly may perform a function of a compensator for accurately forming the imaging point of the image formed by the first lens assembly at an actual position of the image sensor. However, the configuration of the embodiment will be described with reference to the following drawings.

The image sensor may be positioned at the inner side or the outer side of the second camera actuator. **In** an embodiment, as illustrated, the image sensor may be positioned at the outer side of the second camera actuator. For example, the image sensor may be positioned on a circuit board. The image sensor may receive light and convert the received light into an electrical signal. **In** addition, the image sensor may include a plurality of pixels in the form of an array. **In** addition, the image sensor may be positioned on the optical axis.

The second board unit 1270 may be in contact with the second housing side portion. For example, the second board unit 1270 may be positioned on an outer surface (first side surface) of the first side portion and an outer surface (second side surface) of the second side portion of the second housing, in particular, the second-second housing and may be in contact with the first side surface and the second side surface.

The stopper unit ST includes a first stopper ST1 disposed at one end of the second-second housing 1232 and a second stopper ST2 disposed at the other end thereof. The first stopper ST1 and the second stopper ST2 may be sequentially arranged in the optical axis direction.

Furthermore, a plurality of first stoppers ST1 may be provided and may be respectively disposed on a moving path of the first lens assembly and a moving path of the second lens assembly. For convenience, the first stoppers ST1 will be described as the first-first stopper ST1a and the first-second stopper ST1b. Likewise, a plurality of second stoppers ST2 may be provided and may be respectively disposed on the moving path of the first lens assembly and the moving path of the second lens assembly. In addition, the second stoppers ST2 will be described as the second-first stopper ST2a and the second-second stopper ST2b.

The first-first stopper ST1a and the second-first stopper ST2a may be positioned on the moving path of the first lens assembly. The first-second stopper ST1b and the second-second stopper ST2b may be positioned on the moving path of the second lens assembly.

The first-first stopper ST1a and the first-second stopper ST1b may overlap in the second direction. Alternatively, the first-first stopper ST1a and the first-second stopper ST1b may be misaligned in the second direction.

In addition, the second-first stopper ST2a and the second-second stopper ST2b may be positioned to be misaligned in the second direction. A distance between the first-first stopper ST1a and the second-first stopper ST2a in the third direction may be smaller than a distance between the first-second stopper ST1b and the second-second stopper ST2b. This is a configuration that reflects a movable distance (stroke) of the first lens assembly smaller than a movable distance (stroke) of the second lens assembly.

In an embodiment, the second yoke unit or the yoke unit YK may be disposed at an outer side of the second driving unit, and for example, the yoke unit YK may be disposed at outer sides of the fourth and fifth coils. The second yoke unit may include a first yoke YK1 and a second yoke YK2.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the fourth coil 1251a. The second yoke YK2 may be positioned adjacent to the fifth coil 1251b. The fourth coil 1251a and the fifth coil 1251b may be positioned at the inner sides of the first yoke YK1 and the second yoke YK2. In addition, the first yoke YK1, the fourth coil 1251a, the fifth coil 1251b, and the second yoke YK2 may be sequentially arranged in one direction (e.g., the second direction). The first yoke YK1 may generate an attractive force with the fourth magnet. In addition, the second yoke YK2 may generate an attractive force with the fifth magnet. Therefore, attitude maintenance of the first and second lens assemblies may be performed.

Furthermore, thicknesses of the first yoke YK1 and the second yoke YK2 may vary in some regions. With this configuration, it is possible to suppress the influence of the magnetic force generated from the fourth and fifth magnets or the fourth and fifth coils on another magnet or coil. For example, the first yoke YK1 can suppress a magnetic force generated by the fourth magnet from being applied to the fifth magnet and the fifth coil.

Referring to FIGS. 17A to 17F, in the second camera actuator according to the embodiment, the first sub-housing 1231 may include a fixed lens. In addition, as described above, the second sub-housing 1232 may be disposed parallel to the first sub-housing 1231 in the optical axis direction or the third direction (Z-axis direction). In this case, the lens assembly that moves in the optical axis direction may be disposed in the second sub-housing 1232, but the fixed lens that does not move in the optical axis direction may be disposed in the first sub-housing 1231. Furthermore, the first sub-housing 1231 and the second sub-housing 1232 may be coupled by the coupling member BM disposed between the first sub-housing 1231 and the second sub-housing 1232.

Specifically, the first sub-housing 1231 may include a holder portion HP and a wing portion WP extending outward from the holder portion HP. The wing portion WP may be disposed to surround a part of an outer surface of the holder portion HP. Furthermore, the holder portion HP and the wing portion WP may have an integrated or separated structure. Hereinafter, the integrated structure will be described.

In addition, a length of the holder portion HP in the first direction or the second direction may be smaller than a length of the wing portion WP in the first direction or the second direction.

In addition, the holder portion HP may include a first holder portion HP1 disposed above the wing portion WP and a second holder portion HP2 disposed under the wing portion WP. For example, the first holder portion HP1, the wing portion WP, and the second holder portion HP2 may be sequentially disposed in the optical axis direction.

A length LT1 of the first holder portion HP1 in the optical axis direction may differ from a length LT2 of the second holder portion HP2 in the optical axis direction. The length LT1 of the first holder portion HP1 in the optical axis direction may be smaller than the length LT2 of the second holder portion HP2 in the optical axis direction. With this configuration, it is possible to increase a coupling strength between the first sub-housing 1231 and the second sub-housing and easily perform active alignment for tilting of the first sub-housing 1231. Therefore, it is possible to improve the resolution of the camera module.

Furthermore, the second housing or the second camera actuator may further include a prevention member at least partially overlapping the second holder portion HP2 and the second sub-housing. A prevention member TP (see FIG. 17Q) may be disposed on an outer surface of the second sub-housing 1232 (see FIG. 17Q) and overlap the second holder portion HP2 in the first direction. Furthermore, the prevention member TP (see FIG. 17Q) may at least partially overlap the second sub-housing in the first direction (X-axis direction). With this configuration, it is possible to easily prevent foreign substances from flowing into the first sub-housing or the second sub-housing even when the second holder portion HP2 and the second sub-housing are separated by a predetermined distance in the optical axis direction. Furthermore, the prevention member TP (see FIG. 17Q) may block light.

The wing portion WP may include one surface WPS1 and the other surface WPS2. The one surface WPS1 and the other surface WPS2 of the wing portion WP may be sequentially disposed in the optical axis direction and positioned to face each other. In addition, the other surface WPS2 may include stopper support portions WPR1 and WPR2 extending in the optical axis direction or the third direction (Z-axis direction). At least one stopper support may be formed.

In an embodiment, the stopper support portion may include the first stopper support portion WPR1 and the second stopper support portion WPR2. The first stopper support portion WPR1 and the second stopper support portion WPR2 may be spaced apart from each other in the second direction. The second holder portion HP2 may be positioned between the first stopper support portion WPR1 and the second stopper support portion WPR2. For example, the first stopper support portion WPR1 and the second stopper support portion WPR2 may be symmetrically disposed with respect to the first sub-housing 1231 or the optical axis.

The first stopper support portion WPR1 and the second stopper support portion WPR2 may have different lengths in the optical axis direction. For example, a length HE1 of the first stopper support portion WPR1 in the optical axis direction may be greater than a length HE2 of the second stopper support portion WPR2 in the optical axis direction. For example, the length of the stopper support portion may be changed differently according to a contact point with the first lens assembly or the second lens assembly. In the embodiment, a moving distance of the second lens assembly in the optical axis direction may be relatively longer than that of the first lens assembly. Therefore, a length of the second stopper support portion WPR2 adjacent to the second lens assembly in the optical axis direction may be smaller than that of the first stopper support portion WPR1. Therefore, it is possible to easily secure a stroke or a maximum moving distance of the second lens assembly that is greater than a stroke or a maximum moving distance of the first lens assembly.

Furthermore, the other surface WPS2 of the wing portion WP may face the second sub-housing. In addition, the other surface WPS2 of the wing portion WP may be spaced apart from the second sub-housing. In an embodiment, at least a part of the other surface WPS2 of the wing portion WP may be spaced apart from the second sub-housing.

In addition, the first holder portion HP1 and the second holder portion HP2 may include a flat portion FLP and a rounded portion ROP. This may be a structure corresponding to a shape of the first lens group 1221a. For example, at least some lenses of the first lens group 1221a may be cut along a plane perpendicular to the first direction. Therefore, the first lens group 1221a may have flat surfaces facing or opposite to each other in the first direction. Correspondingly, the first holder portion HP1 and the second holder portion HP2 may also have the flat portion FLP. With this configuration, it is possible to extend the optical path while minimizing the thickness of the camera module.

Furthermore, lengths of the rounded portion ROP of the first holder portion HP1 and the rounded portion ROP of the second holder portion HP2 may be different or the same. Likewise, lengths of the flat portion FLP of the first holder portion HP1 and the flat portion FLP of the second holder portion HP2 may be different or the same.

Furthermore, the first holder portion HP1 or the second holder portion HP2 may have a holder protrusion. Hereinafter, the second holder portion HP2 will be described.

The second holder portion HP2 may include a holder protrusion HP2P disposed at an end thereof in the optical axis direction. The holder protrusion HP2P may be positioned on the rounded portion ROP. For example, the holder protrusion HP2P may be positioned on the rounded portion ROP of the second holder portion HP2. In addition, the holder portion HP or the second holder portion HP2 may have a maximum thickness TK1 at the rounded portion ROP greater than a maximum thickness TK2 at the flat portion FLP. With this configuration, the holder portion HP and the first sub-housing 1231 may have improved stiffness. That is, the second camera actuator may have improved durability.

Furthermore, the stopper support portions WPR1 and WPR2 may have concave grooves in the second direction (Y-axis direction) or the first direction. With this configuration, the first sub-housing may have a symmetrical structure. For example, the insertion of the first lens group can also be easily performed.

Furthermore, in the first sub-housing according to the embodiment, an align mark AM and a vision mark VM may be positioned on the wing portion. For example, the align mark AM and the vision mark VM may be positioned on the lower surface WPS2 of the wing portion in the first sub-housing.

In addition, in the first sub-housing 1231 according to the embodiment, an edge region of the lower surface WPS2 of the wing portion WP may have a flat structure. In addition, an inner side of the edge region may be a recess or a groove. Therefore, the coupling member may be easily applied to the edge region. In addition, it is possible to maximally suppress the movement of the coupling member to the first stoppers ST1a and ST1b positioned at the inner side of the edge region.

Furthermore, the wing portion WP may have a groove Pih corresponding to a pinhole positioned in the edge region. Therefore, a shape of the first sub-housing 1231 can be maximally suppressed from being distorted with respect to the optical axis.

In addition, the upper surface WPS1 of the wing portion WP in the first sub-housing 1231 may also have a even or flat region. Therefore, it is possible to easily move the first sub-housing 1231 to the second sub-housing through suction.

In addition, the second sub-housing 1232 may include side portion grooves 1232cg and 1232dg in regions adjacent to the first sub-housing 1231. Therefore, it is possible to suppress the contact with the second sub-housing even when the first sub-housing 1231 tilts with respect to the optical axis for active alignment. Therefore, it is possible to easily secure a movement radius for the optical axis alignment or the like and improve the reliability of the second camera actuator.

Referring to FIGS. 17G, 17H, and 17I, as described above, the second housing 1230 (in particular, the second-second housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. The second driving coil may be positioned on the first side portion 1232a and the second side portion 1232b. In addition, the second board unit may be seated on the outer surfaces of the first side portion 1232a and the second side portion 1232b. The second board unit may be positioned at an outer side of the driving coil and electrically connected to the driving coil.

For example, the first board may be positioned on the outer surface of the first side portion 1232a, and the second board may be positioned on the outer surface of the second side portion 1232b.

Furthermore, the first guide grooves GG1a and GG1b in which the first ball and the second ball are seated may be positioned in the inner surface of the first side portion 1232a. The first guide grooves GGla and GG1b may face the above-described first recess and second recess. Likewise, the second guide grooves GG2a and GG2b in which the first and second balls are seated may be positioned in the inner surface of the second side portion 1232b. The first guide grooves GGla and GG1b may face the above-described first recess and second recess.

Furthermore, the first side portion 1232a may include a first side portion hole 1232ah. The fourth magnetic may be positioned in the first side portion hole 1232ah. Furthermore, a length of the first side portion hole 1232ah in the first direction may be smaller than that of the first coil.

In addition, the second side portion 1232b may include a second side portion hole 1232bh. The fifth magnet may be positioned in the second side portion hole 1232bh. Furthermore, a length of the second side portion hole 1232bh in the first direction may be smaller than that of the fifth coil.

Furthermore, the second-second housing 1232 may include a housing hole 1232h disposed in one of an upper portion and a lower portion thereof. Coupling may be easily performed through the housing hole 1232h or inspection (e.g., vision inspection) may be performed on the first lens assembly and the second lens assembly.

In addition, the first guide grooves GG1a and GG1b positioned on the first side portion 1232a may extend in the third direction. Furthermore, the first guide grooves GG1a and GG1b may have different shapes. For example, any one GG1a of the first guide grooves may be an inclined groove, and the other one GG1b may be a flat structure. This may also be applied to the second guide grooves GG2a and GG2b in the same manner. The first and second balls may be seated in the inclined groove and the flat structure so that the first lens assembly or the second lens assembly may move in the optical axis direction.

Further referring to FIGS. 17I to 17O, the second housing 1230 may include the first side portion 1232a, the second side portion 1232b, a third side portion 1232c, a fourth side portion 1232d, a fifth side portion 1232e, and a sixth side portion 1232f.

As described above, the first side portion 1232a and the second side portion 1232b may be symmetrically disposed with respect to the third direction or the optical axis direction. Furthermore, the first side portion 1232a and the second side portion 1232b may be positioned to correspond to or face each other in the horizontal direction or the second direction (Y-axis direction).

The third side portion 1232c and the fourth side portion 1232d may be positioned to correspond to or face each other in the vertical direction or the first direction (X-axis direction). The third side portion 1232c may be a side portion of the second housing 1232 having a flat surface, and the fourth side portion 1232d may be a side portion of the second housing 1232 having a bottom surface.

Furthermore, the fifth side portion 1232e and the sixth side portion 1232f may be positioned to correspond to or face each other in the optical axis direction or the third direction (Z-axis direction). Therefore, the fifth side portion 1232e may be a side portion of the second housing 1232 positioned adjacent to the first camera actuator. **In** addition, the sixth side portion 1232f may be a side portion of the second housing 1232 positioned adjacent to the base or the image sensor.

Furthermore, a hole disposed at an outer side of the fifth side portion 1232e may be a structure for protrusion and groove coupling with the first actuator.

The guide grooves GG1a, GG1b, GG2a, and GG2b may be positioned on the inner surface of the second housing 1230.

The guide groove may include the first guide grooves GGla and GG1b and the second guide grooves GG2a and GG2b. As described above, the first ball and the second ball may be positioned in the guide grooves. That is, the first ball and the second ball may be positioned between the guide groove and the lens assembly (first and second lens assemblies).

Furthermore, outer grooves 1232ag1, 1232ag2, 1232bg1, and 1232bg2 corresponding to the guide grooves GGla, GG1b, GG2a, and GG2b may be disposed on the outer surface of the second housing 1230. That is, the second housing 1230 may include the outer grooves 1232ag1, 1232ag2, 1232bg1, and 1232bg2 positioned on the outer surface thereof.

The guide grooves GGla, GG1b, GG2a, and GG2b may be positioned on inner surfaces of the side portions (the first side portion and the second side portion) of the second housing 1230.

The outer grooves 1232ag1, 1232ag2, 1232bg1, and 1232bg2 may be positioned on outer surfaces of the side portions (the first side portion and the second side portion) of the second housing 1230.

In addition, in an embodiment, the guide grooves GGla, GG1b, GG2a, and GG2b may overlap the outer grooves 1232ag1, 1232ag2, 1232bg1, and 1232bg2 in the horizontal direction or the second direction (Y-axis direction). For example, the guide grooves GG1a, GG1b, GG2a, and GG2b may at least partially overlap the outer grooves 1232ag1, 1232ag2, 1232bg1, and 1232bg2 in the horizontal direction or the second direction (Y-axis direction).

Therefore, flatness of the guide groove according to injection of the second housing can be maintained. Therefore, the first lens assembly and the second lens assembly may move in the optical axis direction along the guide grooves through the balls (the first ball and the second ball). That is, since the evenness or flatness of the guide groove is maintained, it is possible to minimize the occurrence of a decentering or tilting phenomenon of the lenses of the first lens assembly and the second lens assembly. Therefore, the second camera actuator according to the embodiment may provide the best optical characteristics.

In addition, the second housing 1230 may include the side portion holes 1232ah and 1232bh as described above. As described above, the first side portion 1232a may include the first side portion hole 1232ah. **In** addition, the second side portion 1232b may include the second side portion hole 1232bh. **In** addition, the fourth magnet may be positioned in the first side portion hole 1232ah. The fifth magnet may be positioned in the second side portion hole 1232bh.

**In** addition, the guide grooves GG1a, GG1b, GG2a, and GG2b according to the embodiment may be disposed above or under the side portion holes 1232ah and 1232bh.

**In** addition, the outer grooves 1232ag1, 1232ag2, 1232bg1, and 1232bg2 may be disposed above or under the side portion holes 1232ah and 1232bh.

**In** an embodiment, as described above, the guide groove may include the first guide grooves GGla and GG1b and the second guide grooves GG2a and GG2b facing each other in the optical axis direction. **In** addition, the side portion holes may include the first side portion hole 1232ah and the second side portion hole 1232bh facing each other in the optical axis direction. **In** addition, the outer groove may include the first outer grooves 1232ag1 and 1232ag2 and the second outer grooves 1232bg1 and 1232bg2 facing each other in the optical axis direction. The first outer grooves 1232ag1 and 1232ag2 and the second outer grooves 1232bg1 and 1232bg2 may be symmetrical to each other with respect to the optical axis. Therefore, it is possible to further improve the flatness to be described below.

**In** addition, the first guide groove may include the first-first guide groove GG1a disposed above the first side portion hole 1232ah and the first-second guide groove GG1b disposed under the first side portion hole 1232ah.

The second guide groove may include the second-second guide groove GG2a disposed above the second side portion hole 1232bh and the second-second guide groove GG2b disposed under the second side portion hole 1232bh.

The first-first guide groove GG1a may overlap the first-second guide groove GG1b in the first direction or the vertical direction. In addition, the second-first guide groove GG2a may overlap the second-first guide groove GG2b in the first direction or the vertical direction.

In addition, the first outer groove may include the first-first outer groove 1232ag1 disposed above the first side portion hole 1232ah and the first-second outer groove 1232ag2 disposed under the first side portion hole 1232ah.

The second outer groove may include the second-first outer groove 1232bg1 disposed above the second side portion hole 1232bh and the second-second outer groove 1232bg2 disposed under the second side portion hole 1232bh.

The first-first outer groove 1232ag1 may overlap the first-second outer groove 1232ag2 in the first direction or the vertical direction. In addition, the second-first outer groove 1232bg1 may overlap the second-second outer groove 1232bg2 in the first direction or the vertical direction.

In an embodiment, the first-first guide groove GGla may overlap the first-first outer groove 1232ag1 in the horizontal direction. In addition, the first-second guide groove GG1b may overlap the first-second outer groove 1232ag2 in the horizontal direction. Therefore, it is possible to improve the flatness of both of the first-first guide groove GG1a and the first-second guide groove GG1b in which the first ball and the second ball are positioned.

In addition, the second-first guide groove GG2a may overlap the second-first outer groove 1232bg1 in the horizontal direction. In addition, the second-second guide groove GG2b may overlap the second-second outer groove 1232bg2 in the horizontal direction. Therefore, it is possible to improve the flatness of both of the second-first guide groove GG2a and the second-second guide groove GG2b in which the first ball and the second ball are positioned.

Furthermore, the first-first guide groove GG1a, the first-first outer groove 1232ag1, the second-first guide groove GG2a, and the second-first outer groove 1232bg1 may overlap each other in the horizontal direction or the second direction (Y axial direction). **In** addition, the first-second guide groove GG1b, the first-second outer groove 1232ag2, the second-second guide groove GG2b, and the second-second outer groove 1232bg2 may overlap each other in the horizontal direction or the second direction (Y axial direction). With this configuration, it is possible to improve the flatness of both of the first guide groove and the second guide groove. That is, it is possible to suppress the phenomenon in which the first guide groove is misaligned or the second guide groove is misaligned to one side.

**In** addition, as described above, the first-first guide groove GGla and the first-second guide groove GG1b may have different shapes. For example, the first-first guide groove GG1a may be formed in a structure having an inclined groove, and the first-second guide groove GG1b may be formed in a structure having a flat surface. **In** addition, the second-first guide groove GG2a may be formed in a structure having a flat surface, and the second-second guide groove GG2b may be formed in a structure having an inclined groove. Therefore, the first-first guide groove GG1a may have a shape corresponding to that of the second-second guide groove GG2b. **In** addition, the first-second guide groove GG1b may have a shape corresponding to that of the second-first guide groove GG2a. As described above, the first guide groove and the second guide groove may have corresponding shapes alternately with respect to the optical axis. Therefore, it is possible to improve assemblability of the first lens assembly and the second lens assembly seated in the first guide groove and the second guide groove through the balls.

**In** addition, the side portion holes 1232ah and 1232bh may partially overlap the outer grooves 1232ag1, 1232ag2, 1232bg1, and 1232bg2 in the horizontal direction or the second direction (Y-axis direction). With this configuration, it is possible to optimize an area or volume for improving the flatness of the guide groove in the second housing.

**In** addition, the side portion holes 1232ah and 1232bh may not overlap the guide grooves GG1a, GG1b, GG2a, and GG2b in the horizontal direction or the second direction (Y-axis direction). Accordingly, it is possible to prevent the separation of the balls (the first ball and the second ball) disposed in the guide grooves GGla, GG1b, GG2a, and GG2b. Furthermore, it is possible to minimize the influence on rolling motions of the balls.

Furthermore, as described above, the guide grooves GGla, GG1b, GG2a, and GG2b and the outer grooves 1232ag1, 1232ag2, 1232bg1, and 1232bg2 may be positioned above or under the side portion holes 1232ah and 1232bh to secure the separation distance from the fourth and fifth magnets positioned in the side portion holes 1232ah and 1232bh. That is, it is possible to minimize the influence of the fourth and fifth magnets.

**In** addition, the outer grooves 1232ag1, 1232ag2, 1232bg1, and 1232bg2 may have inclined surfaces toward the side portion holes 1232ah and 1232bh. For example, the outer grooves 1232ag1, 1232ag2, 1232bg1, and 1232bg2 may have the inclined surfaces toward inner sides of the side portion holes 1232ah and 1232bh. Alternatively, the outer grooves 1232ag1, 1232ag2, 1232bg1, and 1232bg2 may have the inclined surfaces toward a center of the first side portion (or the second side portion). With this configuration, highly improved flatness of the guide groove can be maintained.

The outer grooves 1232ag1, 1232ag2, 1232bg1, and 1232bg2 may have the same length or different lengths in the vertical direction (X-axis direction) in the optical axis direction or the third direction (Z-axis direction).

For example, the lengths of the first-second outer groove 1232ag2 and the second-second outer groove 1232bg2 may decrease in the optical axis direction. For example, the lengths of the first-second outer groove 1232ag2 and the second-second outer groove 1232bg2 in the vertical direction in a region adjacent to the first actuator may be greater than those in a region adjacent to the image sensor.

**In** addition, the second housing may include housing protrusions 1232pr1 and 1232pr2 protruding inward in the optical axis direction or the third direction (Z-axis direction).

The housing protrusion may include the first housing protrusion 1232pr1 and the second housing protrusion 1232pr2. The first housing protrusion 1232pr1 may be positioned on an inner surface of the third side portion 1232c. For example, the first housing protrusion 1232pr1 may protrude (or extend) from the inner surface of the third side portion 1232c toward the fourth side portion 1232d or toward the first and second lens assemblies.

**In** addition, the second housing protrusion 1232pr2 may be positioned on an inner surface of the fourth side portion 1232d. For example, the second housing protrusion 1232 may protrude (or extend) from the inner surface of the fourth side portion 1232d toward the third side portion 1232c or toward the first and second lens assemblies.

The housing protrusion may be positioned at inner sides of the first guide groove and the second guide groove. That is, the housing protrusion may be positioned closer to the guide groove than to the outer groove.

With this structure, it is possible to reduce a change in shapes of the guide grooves GG1a, GG1b, GG2a, and GG2b of the second housing. That is, the flatness of the adjacent guide grooves can be maintained by improving stiffness or the like through the housing protrusion. Therefore, the second camera actuator may provide more improved straightness for the moving lens assembly. Furthermore, as described above, the second camera actuator can minimize the occurrence of the decentering or tilting phenomenon and provide the best optical characteristics.

The housing protrusions 1232pr1 and 1232pr2 may be positioned between the first guide groove and the second guide groove. Specifically, the first housing protrusion 1232pr1 may be positioned between the first-first guide groove and the second-first guide groove. The second housing protrusion 1232pr2 may be positioned between the first-second guide groove and the second-second guide groove.

Furthermore, the first housing protrusion 1232pr1 may overlap the first-first guide groove and the second-first guide groove in the horizontal direction. In addition, the second housing protrusion 1232pr2 may overlap the first-second guide groove and the second-second guide groove in the horizontal direction.

In addition, the third side portion 1232c and the fourth side portion 1232d may include a side portion groove in a region adjacent to the first actuator. The side portion groove may be disposed on each of the third side portion and the fourth side portion. Furthermore, the side portion grooves may overlap each other in the vertical direction. The third side portion and the fourth side portion may be easily coupled to the second-first housing, which is a fixed lens assembly, by the side portion grooves. Furthermore, it is possible to secure a size of the first lens group in the second-first housing. That is, D-cut or the like may not be applied to at least some lenses of the first lens group. Therefore, bright light (fno is low) may be provided to the image sensor.

In addition, the second housing 1230 may include gate grooves 1232fh disposed on outer surfaces of facing side portions (fifth and sixth side portions) in the optical axis direction or the third direction (Z-axis direction).

In an embodiment, the sixth side portion 1232f may include the gate grooves 1232fh disposed on the outer surface thereof. At least one gate groove 1232fh may be formed. In an embodiment, a plurality of gate grooves 1232fh may be formed. In addition, the gate grooves 1232fh may be positioned at edges of the outer surface of the sixth side portion 1232f.

For example, the gate groove 1232fh may be positioned to overlap a lens such as a glass in the horizontal direction or the second direction (Y-axis direction).

In addition, the gate grooves 1232fh may overlap the outer grooves 1232ag1, 1232ag2, 1232bg1, and 1232bg2 in the optical axis direction or the third direction (Z-axis direction). The gate groove 1232fh may be disposed to be misaligned with the guide grooves GG1a, GG1b, GG2a, and GG2b in the optical axis direction or the third direction (Z-axis direction). Alternatively, the gate grooves 1232fh may not overlap the guide grooves GG1a, GG1b, GG2a, and GG2b in the optical axis direction or the third direction (Z-axis direction).

With this configuration, when an injection solution (e.g., a resin) is injected into the gate grooves 1232fh, it is possible to minimize a change in the shapes of the guide grooves GG1a, GG1b, GG2a, and GG2b according to flow of the solution.

Furthermore, the gate grooves 1232fh may be disposed to be spaced apart from the guide grooves GG1a, GG1b, GG2a, and GG2b in the horizontal direction or in the second direction (Y-axis direction). In addition, the gate grooves 1232fh may be positioned at outer sides of the guide grooves GG1a, GG1b, GG2a, and GG2b. With this configuration, the injection molding solution may not affect the guide groove as much as possible.

Referring to FIG. 17P, the first-first stopper ST1a and the second-first stopper ST2a in the second camera actuator may overlap in the optical axis direction or the third direction (Z-axis direction). Furthermore, a part of the first lens assembly 1222a may move between the first-first stopper ST1a and the second-first stopper ST2a in the optical axis direction. That is, a maximum moving distance of the first lens assembly may be a first distance DS1 between the first-first stopper ST1a and the second-first stopper ST2a.

Likewise, the first-second stopper ST1b and the second-second stopper ST2b may overlap each other in the optical axis direction or the third direction (Z-axis direction). Furthermore, a part of the second lens assembly 1222b may move between the first-second stopper ST1b and the second-second stopper ST2b in the optical axis direction. That is, a maximum moving distance of the second lens assembly may be a second distance DS2 between the first-second stopper ST1b and the second-second stopper ST2b.

In this case, the first distance DS1 and the second distance DS2 may be different or the same. In an embodiment, the first distance DS1 may be different from the second distance DS2. In an embodiment, the first distance DS1 may be smaller than the second distance DS2.

A ratio of the first distance DS1 and the second distance DS2 may be in a range of 1:1.5 to 1:4. That is, the moving distance of the first lens assembly 1222a may be smaller than the moving distance of the second lens assembly 1222b. Furthermore, a ratio of the moving distance of the first lens assembly to the moving distance of the second lens assembly may be in a range of 1:1.5 to 1:4.

In addition, since the first lens assembly moves as described above, the camera actuator may perform zooming. In addition, since the second lens assembly moves, the camera actuator may perform AF. Reflecting this, a moving distance for zooming may be smaller than a moving distance (or a stroke) for AF.

Furthermore, for a difference in the moving distance or the stroke, the first-first stopper ST1a and the first-second stopper ST1b may be disposed to be at least partially misaligned in the second direction or the horizontal direction. Therefore, the first-first stopper ST1a and the first-second stopper ST1b may have a separation distance gd1 in the third direction.

In addition, the second-first stopper ST2a and the second-second stopper ST2b may be disposed to be at least partially misaligned in the second direction or the horizontal direction. Therefore, the second-first stopper ST2a and the second-second stopper ST2b may have a separation distance gd2 in the third direction.

Referring to FIG. 17Q, in the second camera actuator according to the embodiment, the first sub-housing 1231 may be seated at a front end of the second sub-housing 1232. In this case, as described above, the coupling member BM may be positioned on one surface of the second sub-housing 1232. In addition, all of the first and second lens assemblies and the driving unit may be mounted in the second sub-housing 1232. Furthermore, as illustrated, the second board unit may be mounted on a side surface of the second sub-housing 1232. In this state, the first sub-housing 1231 may be seated on an upper surface of the second sub-housing 1232. In addition, active alignment (e.g., optical axis alignment) may be performed by tilting or moving the first sub-housing 1231 with respect to the optical axis. Thereafter, curing may be performed on the coupling member. For example, the coupling member may be made of a resin such as an epoxy or the like. Furthermore, the above-described curing may be performed when a predetermined amount of heat is applied. Thereafter, a circuit board may be mounted on the rear end of the second sub-housing 1232. Thereafter, the first camera actuator may be mounted at a front end of the second camera actuator and coupled to the second camera actuator. In addition, electrical connection with the first and second camera actuators may be performed by bending a board of the circuit board. Furthermore, in any of the above-described assembling operations, the prevention member TP may be disposed on a side surface of the second sub-housing 1232.

More specifically, referring to FIGS. 17R to 17T, in the second camera actuator according to the embodiment, the first sub-housing 1231 may be positioned on an outer surface of the fifth side portion 1232e of the second sub-housing 1232.

Furthermore, the coupling member BM may be positioned on the outer surface of the fifth side portion 1232e of the second sub-housing 1232. That is, the coupling member BM may be applied to the outer surface of the fifth side portion 1232e. The coupling member BM may be positioned at an edge of the outer surface of the fifth side portion 1232e. Furthermore, a coupling groove 1232eg may be positioned at an outermost side of the fifth side portion 1232e. As described above, the coupling groove 1232eg may be positioned to correspond to the protrusion of the first camera actuator. Therefore, the protrusion of the first camera actuator may be accommodated in the coupling groove 1232eg. In addition, the first camera actuator and the second camera actuator may be coupled.

Furthermore, the coupling member BM may be positioned at an inner side of the coupling groove 1232eg. Therefore, active alignment through the first sub-housing 1231 may be performed prior to assembling or coupling between the first camera actuator and the second camera actuator. That is, it is possible to improve assemblability and improve optical performance.

Furthermore, the coupling member BM may be positioned at outer sides of the first stoppers ST1a and ST1b. In addition, the coupling member BM may be positioned at outer sides of the stopper support portions WPR1 and WPR2.

In addition, the first sub-housing 1231 and the second sub-housing 1232 may be disposed to be spaced a predetermined distance from each other by the coupling member for active alignment. That is, a separation space may be, for example, present between the first sub-housing 1231 and the second sub-housing 1232 by the coupling member BM disposed between the first sub-housing 1231 and the second sub-housing 1232.

The second camera actuator may be divided into one region Se1 and another region Se2 with respect to an optical axis OX. In this case, distances between the first sub-housing 1231 and the second sub-housing 1232 in the one region Se1 and the other region Se2 may be the same or different.

In the example, the optical axis OX of the second camera actuator may be parallel to the third direction and parallel to the second sub-housing. In this case, a central axis AX of the first sub-housing 1231 may correspond to the optical axis OX.

In this example, a first separation distance gap1 between the wing portion WP and the second sub-housing 1232 in the one region Se1 in the optical axis direction and a second separation distance gap2 between the wing portion WP and the second sub-housing 1232 in the other region Se2 in the optical axis direction may be the same. Furthermore, a third separation distance gap3 between the holder portion or the second holder portion and the second sub-housing 1232 in the optical axis direction may also be the same in the one region and the other region.

Referring to FIGS. 17U and 17X, in the second camera actuator according to various examples, the central axis AX of the first sub-housing 1231 may tilt at a predetermined angle θ-b, θ-c, θ-d, or θ-e with respect to the optical axis OX. In an embodiment, the central axis AX may be a vertical axis that bisects a surface perpendicular to a center of gravity of the first sub-housing or the optical axis.

In addition, as described above, in the second camera actuator, the separation space may be divided into the one region Se1 and the other region Se2 with respect to the optical axis OX. In this case, the distances between the first sub-housing 1231 and the second sub-housing 1232 in the one region Se1 and the other region Se2 may be the same or different.

In the example, the optical axis OX of the second camera actuator may be parallel to the third direction and parallel to the second sub-housing. In this case, the central axis AX of the first sub-housing 1231 may correspond to the optical axis OX.

In the example, the first separation distance gap1 between the wing portion WP and the second sub-housing 1232 in the one region Se1 in the optical axis direction and the second separation distance gap2 between the wing portion WP and the second sub-housing 1232 in the other region Se2 in the optical axis direction may be different. That is, the first separation distance gap1 and the second separation distance gap2 may be different. Furthermore, the third separation distance gap3 may also vary in a region other than the optical axis OX.

In addition, in the example, the predetermined angles θ-b, θ-c, θ-d, and θ-e may not be right angles. That is, one surface of the first sub-housing 1231 may be not perpendicular to the optical axis OX. Furthermore, the central axis AX of the first sub-housing 1231 may be not parallel to the optical axis OX. That is, the central axis AX of the first sub-housing 1231 may not be parallel to the optical axis OX. Alternatively, the central axis AX of the first sub-housing 1231 may be misaligned with the central axis of the second sub-housing 1232 or may not be parallel thereto. In addition, in the specification, the central axis of the second sub-housing 1232 corresponding to the optical axis will be described.

Furthermore, portions of the coupling member BM that are maximally separated in one direction may have different thicknesses. For example, some regions and the remaining regions of the coupling member BM may have a different thickness in on an XY plane. In addition, in the coupling member BM, a thickness in some regions of an edge and a thickness in the remaining regions of the edge in one direction on the XY plane may be different.

For example, the coupling member BM may vary in thickness in the second direction on the XY plane. Alternatively, the coupling member BM may vary in thickness in the first direction on the XY plane. Depending on the active alignment, the second camera actuator may have the above-described configuration.

In addition, the second sub-housing 1232 may include side portion grooves 1232cg and 1232dg in the regions adjacent to the first sub-housing 1231. In this case, even when the first sub-housing 1231 tilts for optical axis alignment, the first sub-housing 1231 may not be in contact with the second sub-housing. That is, the side portion groove 1232cg and the first sub-housing 1231 may be spaced a predetermined distance from each other. Therefore, it is possible to easily secure the movement radius for optical axis alignment or the like and improve the reliability of the second camera actuator.

In addition, the first stoppers ST1a and ST1b connected to the first sub-housing 1231 may tilt at a predetermined angle with respect to the XY plane. A structure or position of the first stopper may be determined by the movement or tilting of the first sub-housing 1231.

Furthermore, distances between the first stoppers ST1a and ST1b and the second stoppers in the optical axis direction may be different in correspondence to the regions of the first stoppers ST1a and ST1b. This may be derived from the tilted structure of the first sub-housing 1231 by the first stoppers ST1a and ST1b.

In a modified example, as the first sub-housing 1231 tilts for optical axis alignment, the first sub-housing 1231 may be in contact with the second sub-housing in some regions. Therefore, upon optical axis alignment, the tilting or movement radius of the first sub-housing 1231 may be limited. With this configuration, it is possible to improve the assemblability and reliability of the second camera actuator.

That is, a fourth separation distance gap4, which is a separation distance between the first sub-housing and the second sub-housing in the first direction (X-axis direction), may also vary in a region other than the optical axis OX. For example, the fourth separation distance gap4 in one region may be different from the fourth separation distance gap4 in the other region.

Referring to FIGS. 18 and 19, in the camera module according to the embodiment, by a generated electromagnetic force DEM1 between the fourth magnet 1252a and the fourth coil 1251a, the first lens assembly 1222a may move along a rail positioned on the inner surface of the housing through the first ball B1 and the second ball B2 in a direction parallel to the optical axis, that is, in the third direction (Z-axis direction) or a direction opposite to the third direction.

Specifically, in the camera module according to the embodiment, the fourth magnet 1252a may be provided in the first lens assembly 1222a, for example, by a vertical unipolar magnetization method. For example, in the embodiment, both of the N pole and the S pole of the fourth magnet 1252a may be positioned to face the fourth coil 1251a. Therefore, each of the N pole and the S pole of the fourth magnet 1252a may be disposed to correspond to a region in which a current flows from the fourth coil 1251a in the X-axis direction or a direction opposite to the X-axis direction.

In an embodiment, when a magnetic force is applied from the N pole of the fourth magnet 1252a in a direction opposite to the second direction (Y-axis direction) and a current DE1 flows in the fourth coil 1251a corresponding to the N pole in a direction opposite to the first direction (X-axis direction), the electromagnetic force DEM1 may act in the third direction (Z-axis direction) according to the interaction between the electromagnetic force and the magnetic force (e.g., Fleming's left hand rule).

In addition, in the embodiment, when a magnetic force is applied from the S pole of the fourth magnet 1252a in the second direction (Y-axis direction) and the current DE1 flows in the fourth coil 1251a corresponding to the S pole in the first direction (X-axis direction), the electromagnetic force DEM1 may act in the Z-axis direction according to the interaction between the electromagnetic force and the magnetic force.

At this time, since the fourth coil 1251a is in a state of being fixed to the second housing side portion, the first lens assembly 1222a on which the fourth magnet 1252a is disposed may move in the direction opposite to the Z-axis direction by the electromagnetic force DEM1 according to the current direction. That is, the second driving magnet may move in an opposite direction of the electromagnetic force applied to the second driving coil. In addition, the direction of the electromagnetic force may be changed depending on the current of the coil and the magnetic force of the magnet.

Therefore, the first lens assembly 1222a may move along the rail positioned on the inner surface of the housing through the first ball B1 and the second ball B2 in the third direction or the direction (both directions) parallel to the optical axis direction. At this time, the electromagnetic force DEM1 may be controlled in proportion to the current DE1 applied to the fourth coil 1251a.

The first lens assembly 1222a or the second lens assembly 1222b may include a first recess RS1 in which the first ball B1 is seated. In addition, the first lens assembly 1222a or the second lens assembly 1222b may include a second recess RS2 in which the second ball B2 is seated. A length of the first recess RS1 may be preset in the optical axis direction (Z-axis direction). In addition, a length of the second recess RS2 may be preset in the optical axis direction (Z-axis direction). Therefore, moving distances of the first ball B1 and the second ball B2 in the optical axis direction in each recess may be adjusted. That is, the first recess RS1 or the second recess RS2 may be a stopper for the first and second balls B1 and B2.

In addition, in the camera module according to the embodiment, the fifth magnet 1252b may be provided on the second lens assembly 1222b by, for example, the vertical unipolar magnetization method. For example, in the embodiment, both of the N pole and the S pole of the fifth magnet 1252b may be positioned to face the fifth coil 1251b. Therefore, each of the N pole and the S pole of the fifth magnet 1252b may be disposed to correspond to a region in which a current flows from the fifth coil 1251b in the X-axis direction or the direction opposite to the X-axis direction.

In an embodiment, when a magnetic force DM2 is applied from the N pole of the fifth magnet 1252b in the second direction (Y-axis direction) and the current DE2 flows in the fifth coil 1251b corresponding to the N pole in the first direction (X-axis direction), an electromagnetic force DEM2 may act in the third direction (Z-axis direction) according to the interaction between the electromagnetic force and the magnetic force (e.g., Fleming's left hand rule).

In addition, in the embodiment, when a magnetic force is applied from the S pole of the fifth magnet 1252b in a direction opposite to the second direction (Y-axis direction) and the current DE2 flows in the fifth coil 1251b corresponding to the S pole in a direction opposite to the first direction (X-axis direction), the electromagnetic force DEM2 may act in the Z-axis direction according to the interaction between the electromagnetic force and the magnetic force.

At this time, since the fifth coil 1251b is in a state of being fixed to the second housing side portion, the second lens assembly 1222b on which the fifth magnet 1252b is disposed may move in a direction opposite to the Z-axis direction by the electromagnetic force DEM2 according to the current direction. For example, as described above, the direction of the electromagnetic force may be changed depending on the current of the coil and the magnetic force of the magnet. Therefore, the second lens assembly 1222b may move along the rail located on the inner surface of the second housing through the second ball B2 in a direction parallel to the third direction (Z-axis direction). At this time, the electromagnetic force DEM2 may be controlled in proportion to the current DE2 applied to the fifth coil 1251b.

Referring to FIG. 20, in the camera module according to the embodiment, the second driving unit may provide driving forces F3A, F3B, F4A, and F4B that move the first lens assembly 1222a and the second lens assembly 1222b of the lens unit 1220 in the third direction (Z-axis direction). As described above, the second driving unit may include the second driving coil 1251 and the second driving magnet 1252. In addition, the lens unit 1220 may move in the third direction (Z-axis direction) by the electromagnetic force generated between the second driving coil 1251 and the second driving magnet 1252.

At this time, the fourth coil 1251a and the fifth coil 1251b may be disposed in the holes formed in the side portions (e.g., the first side portion and the second side portion) of the second housing 1230. In addition, the fifth coil 1251b may be electrically connected to the first board 1271. The fourth coil 1251a may be electrically connected to the second board 1272. Therefore, the fourth coil 1251a and the fifth coil 1251b may receive a driving signal (e.g., a current) from a driving driver on the circuit board 1300 through the second board unit 1270.

At this time, the first lens assembly 1222a on which the fourth magnet 1252a is seated may move in the third direction (Z-axis direction) by the electromagnetic forces F3A and F3B between the fourth coil 1251a and the fourth magnet 1252a. **In** addition, the second lens group 1221b seated on the first lens assembly 1222a may also move in the third direction.

**In** addition, the second lens assembly 1222b on which the fifth magnet 1252b is seated may move in the third direction (Z-axis direction) by the electromagnetic forces F4A and F4B between the fifth coil 1251b and the fifth magnet 1252b. **In** addition, the \third lens group 1221c seated on the second lens assembly 1222b may also move in the third direction.

Therefore, as described above, a focal length or magnification of the optical system may be changed by moving the second lens group 1221b and the third lens group 1221c. In an embodiment, the magnification may be changed by moving the second lens group 1221b. That is, zooming may be performed. In addition, a focus may be adjusted by moving the third lens group 1221c. That is, auto focusing may be performed. With this configuration, the second camera actuator may be a fixed zoom or a continuous zoom.

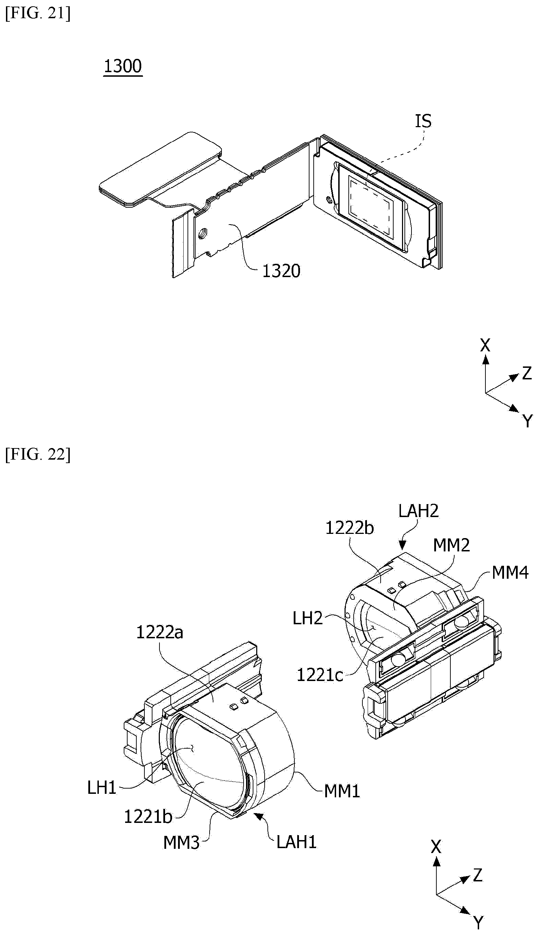

FIG. 21 is a schematic diagram illustrating a circuit board according to an embodiment.

Referring to FIG. 21, as described above, the circuit board 1300 according to the embodiment may include a first circuit board unit 1310 and a second circuit board unit 1320. The first circuit board unit 1310 may be positioned under the base and coupled to the base. In addition, the image sensor IS may be disposed on the first circuit board unit 1310. In addition, the first circuit board unit 1310 and the image sensor IS may be electrically connected. That is, the base may be positioned at the rear end of the second camera actuator, and the image sensor and the circuit board (first circuit board unit) may be positioned at the rear end of the base. The base may include a filter (e.g., infrared filter).

In addition, the second circuit board unit 1320 may be positioned on the side portion of the base. In particular, the second circuit board unit 1320 may be positioned on the first side portion of the base. Therefore, the second circuit board unit 1320 may be positioned adjacent to the fourth coil positioned adjacent to the first side portion for easy electrical connection. In addition, the second circuit board unit 1320 may be positioned on the second side portion of the base. As described above, a plurality of second circuit board units 1320 may be formed. However, the present disclosure is not limited thereto, and the second circuit board unit 1320 may be disposed on only any one of the first side portion and the second side portion.

Furthermore, the circuit board 1300 may further include a fixed board (not illustrated) positioned on a side surface thereof. Therefore, even when the circuit board 1300 is made of a flexible material, the circuit board 1300 may be coupled to the base while maintaining stiffness by the fixed board.

The second circuit board unit 1320 of the circuit board 1300 may be positioned on the side portion of the second driving unit 1250. The circuit board 1300 may be electrically connected to the first driving unit and the second driving unit. For example, the electrical connection may be made by a surface mounting technology (SMT). However, the present disclosure is not limited to this method.

The circuit board 1300 may include a circuit board having wiring patterns that may be electrically connected, such as a rigid printed circuit board (rigid PCB), a flexible PCB, and a rigid flexible PCB. However, the present disclosure is not limited to these types.

In addition, the circuit board 1300 may be electrically connected to another camera module in the terminal or a processor of the terminal. Therefore, the camera actuator and the camera module including the same described above may transmit and receive various signals within the terminal.

FIG. 22 is a perspective view of a first lens assembly, a first bonding member, a second bonding member, and a second lens assembly according to an embodiment.

Referring to FIG. 22, the first lens assembly 1222a and the second lens assembly 1222b may be disposed to be spaced apart from each other in the optical axis direction (Z-axis direction). In addition, the first lens assembly 1222a and the second lens assembly 1222b may move in the optical axis direction (Z-axis direction) by the second driving unit. For example, an auto focus or zoom function may be performed by moving the first lens assembly 1222a and the second lens assembly 1222b.

In addition, the first lens assembly 1222a may include a first lens holder LAH1 for holding and coupling the second lens group 1221b. The first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1. The first lens holder LAH1 is the same as an accommodating unit (e.g., a first accommodating unit or a second accommodating unit) to be described below and used interchangeably therewith.

In addition, the second lens assembly 1222b may include a second lens holder LAH2 for holding and coupling the third lens group 1221c. In addition, the second lens holder LAH2 may include a second lens hole LH2 for accommodating the third lens group 1221c. That is, at least one lens may be disposed in the second lens hole LH2.

In an embodiment, each of the first lens assembly 1222a and the second lens assembly 1222b may include outer surfaces adjacent to each other. The first lens assembly 1222a may include a first outer surface MM1, and the second lens assembly 1222b may include a second outer surface MM2. The first outer surface MM1 may be a lower surface of the first lens holder LAH1 in the optical axis direction (Z-axis direction). In addition, a third outer surface MM3 to be described below may be an upper surface of the first lens holder LAH1. In addition, the second outer surface MM2 may be an upper surface of the second lens holder LAH2, and the fourth outer surface MM4 may be the lower surface of the second lens holder LAH2.

In addition, the first outer surface MM1 and the second outer surface MM2 may at least partially overlap in the optical axis direction (Z-axis direction). In an embodiment, the first outer surface MM1 to the fourth outer surface MM4 may at least partially overlap in the optical axis direction (Z-axis direction).

For example, a bonding member (not illustrated) may be in contact with at least one of the first outer surface MM1 and the second outer surface MM2.

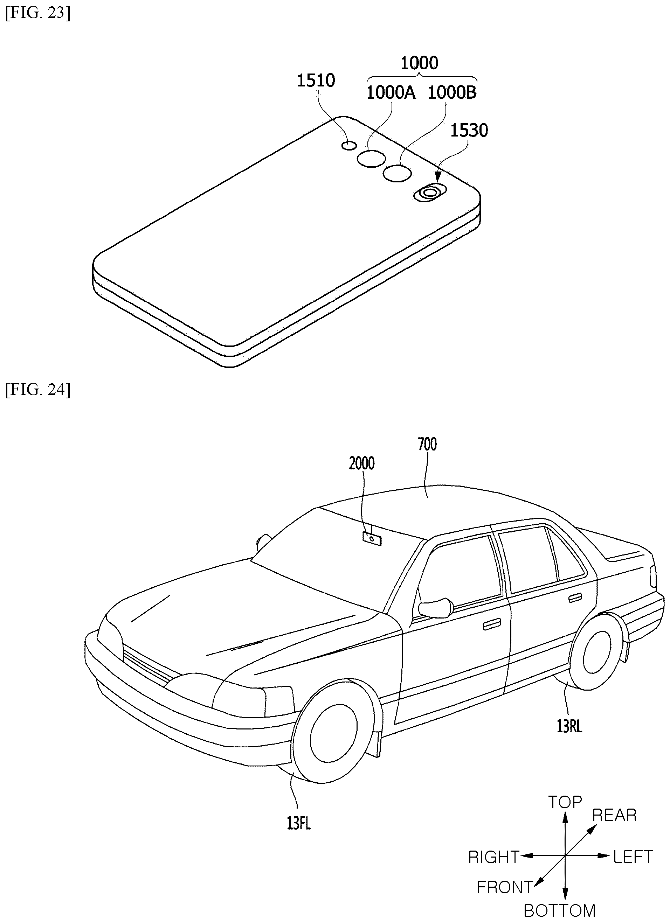

FIG. 23 is a perspective view of a mobile terminal to which the camera module according to the embodiment is applied.

As illustrated in FIG. 23, a mobile terminal 1500 according to the embodiment may include a camera module 1000, a flash module 1530, and an AF device 1510, which are provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display and stored in a memory. A camera (not illustrated) may also be disposed on a front surface of a body of the mobile terminal.

For example, the camera module 1000 may include a first camera module 1000A and a second camera module 1000B, and the first camera module 1000A may implement an OIS function together with an AF/zooming function.

The flash module 1530 may include a light emitting device for emitting light therein. The flash module 1530 may be operated by a camera operation of the mobile terminal or the user's control.

The AF device 1510 may include one of a package of a surface light emitting laser device as a light emitting unit.

The AF device 1510 may include the AF function using a laser. The AF device 1510 may be mainly used in a condition that the AF function using the image of the camera module 1000 is degraded, for example, a proximity of 10 m or less or dark environment.

The AF device 1510 may include a light emitting unit including a vertical cavity surface emitting laser (VCSEL) semiconductor device and a light receiving unit for converting light energy into electrical energy, such as a photodiode.

FIG. 24 is a perspective view of a vehicle to which the camera module according to the embodiment is applied.

For example, FIG. 24 is an external view of the vehicle including a vehicle driving assistance device to which the camera module 1000 according to the embodiment is applied.

Referring to FIG. 24, a vehicle 700 in the embodiment may include wheels 13FL and 13FR rotated by a power source and a predetermined sensor. The sensor may be a camera sensor 2000, but the present disclosure is not limited thereto.

The camera sensor 2000 may be a camera sensor to which the camera module 1000 according to the embodiment is applied. The vehicle 700 in the embodiment may acquire image information through the camera sensor 2000 for capturing a forward image or a surrounding image, determine a situation in which a lane line is not identified using the image information, and generate a virtual lane line when the lane line is not identified.

For example, the camera sensor 2000 may acquire a front image by capturing a view in front of the vehicle 700, and a processor (not illustrated) may acquire image information by analyzing an object included in the front image.

For example, when a lane line, an adjacent vehicle, a traveling obstacle, and objects corresponding to an indirect road mark, such as a median, a curb, or a tree, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process still images or moving images obtained by the image sensor (e.g., a complementary metal-oxide semiconductor (CMOS) or a charge-coupled device (CCD)).

The image processing module may process the still images or moving images acquired through the image sensor to extract necessary information, and transmit the extracted information to the processor.

At this time, the camera sensor 2000 may include a stereo camera for improving the measurement accuracy of the object and further securing information such as a distance between the vehicle 700 and the object, but the present disclosure is not limited thereto.

Although embodiments have been mainly described above, these are only illustrative and do not limit the present disclosure, and those skilled in the art to which the present disclosure pertains will understand that various modifications and applications not exemplified above are possible without departing from the essential characteristics of the embodiments. For example, each component specifically illustrated in the embodiments may be implemented by modification. **In** addition, differences related to these modifications and applications should be construed as being included in the scope of the present disclosure defined in the appended claims.

## Claims

1. A camera actuator comprising:
a first sub-housing including a fixed lens;
a second sub-housing disposed along an optical axis direction with the first sub-housing;
a lens assembly disposed in the second sub-housing to move in the optical axis direction;
a ball disposed between the lens assembly and the second sub-housing;
a driving unit configured to move the lens assembly in the optical axis direction; and
a coupling member disposed between the first sub-housing and the second sub-housing.

2. The camera actuator of claim 1, wherein the first sub-housing is disposed to be spaced a predetermined distance from the second sub-housing.

3. The camera actuator of claim 1, wherein a first separation distance between the first sub-housing and the second sub-housing in one region of the first sub-housing differs from a second separation distance between the first sub-housing and the second sub-housing in the other region of the first sub-housing.

4. The camera actuator of claim 1, wherein one surface of the first sub-housing is not perpendicular to the optical axis.

5. The camera actuator of claim 1, wherein a central axis of the first sub-housing is not parallel to the optical axis.

6. The camera actuator of claim 1, wherein the first sub-housing includes a holder portion and a wing portion extending outward from the holder portion.

7. The camera actuator of claim 6, wherein the holder portion includes a first holder portion above the wing portion and a second holder portion under the wing portion.

8. The camera actuator of claim 7, wherein a length of the first holder portion in the optical axis direction is smaller than a length of the second holder portion in the optical axis direction.

9. The camera actuator of claim 7, further comprising a prevention member at least partially overlapping the second holder portion and the second sub-housing.

10. The camera actuator of claim 6, wherein the wing portion includes one surface and the other surface disposed at outer sides thereof, and
the one surface and the other surface are sequentially disposed in the optical axis direction.
